(19) European Patent Office — Europäisches Patentamt — Office européen des brevets

(11) **EP 0 957 639 B1**

(12) **EUROPEAN PATENT SPECIFICATION**

(45) Date of publication and mention
of the grant of the patent:
**20.12.2006 Bulletin 2006/51**

(51) Int Cl.:
*H04N 7/24* (2006.01)     *H04B 1/66* (2006.01)

(21) Application number: **99108627.3**

(22) Date of filing: **11.05.1999**

(54) **Digital audio signal decoding apparatus, decoding method and a recording medium storing the decoding steps**

Digitalaudiosignaldekodierungsvorrichtung und -verfahren und Aufzeichnungsträger zum Speichern der Dekodierungsstufen

Dispositif et procédé de décodage d'un signal audio numérique, et support d'enregistrement pour stocker les étapes du procédé

(84) Designated Contracting States:
**DE FR GB**

(30) Priority: **13.05.1998 JP 15062098**

(43) Date of publication of application:
**17.11.1999 Bulletin 1999/46**

(73) Proprietor: **MATSUSHITA ELECTRIC INDUSTRIAL CO., LTD.**
**Kadoma-shi, Osaka-fu 571-8501 (JP)**

(72) Inventors:
 • **Fujita, Takeshi**
   **Takatsuki City, 569-1044 (JP)**
 • **Miyasaka, Shuji**
   **Neyagawa City, 572-0004 (JP)**
 • **Sueyoshi, Masahiro**
   **Hirakata City, 573-0171 (JP)**
 • **Kawamura, Akihisa**
   **Hirakata City, 573-0093 (JP)**
 • **Matsumoto, Masaharu**
   **Katano City, 576-0015 (JP)**
 • **Katayama, Takashi**
   **Katano City, 576-0021 (JP)**
 • **Ishito, Tsukuru**
   **Kyoto City, 616-8186 (JP)**
 • **Nakamura, Tsuyoshi**
   **Kasuya-gun,**
   **Fukuoka Pref., 811-2413 (JP)**
 • **Otomura, Eiji**
   **Ibaraki City, 567-0845 (JP)**

(74) Representative: **Schirdewahn, Jürgen**
**Jung HML**
**Patentanwälte**
**Schraudophstrasse 3**
**80799 München (DE)**

(56) References cited:
**EP-A- 0 663 735**     **US-A- 5 631 848**

 • **HAN Y T ET AL: "DESIGN AND IMPLEMENTATION OF THE MPEG-2 MULTI-CHANNEL AUDIO DECODER" IEICE TRANSACTIONS ON INFORMATION AND SYSTEMS, JP, INSTITUTE OF ELECTRONICS INFORMATION AND COMM. ENG. TOKYO, vol. E79-D, no. 6, 1 June 1996 (1996-06-01), pages 759-763, XP000595182 ISSN: 0916-8532**
 • **PATENT ABSTRACTS OF JAPAN vol. 1999, no. 07, 31 March 1999 (1999-03-31) & JP 09 167970 A (KOREA TELECOMMUN), 24 June 1997 (1997-06-24)**

**Description**

BACKGROUND OF THE INVENTION

The present invention relates to a decoding apparatus and a decoding method for decoding an audio encoded signal, particularly, an audio signal encoded by a subband (band division) encoding method, and also relates to a recording medium storing the decoding steps for the same.

With recent advances in multimedia technology, multichannel compatible recording and reproduction apparatuses have been developed and implemented commercially. Such recording and reproduction apparatuses use audio signals encoded by a subband encoding method which first divides the original audio signal into bands and then encodes each band signal. The MPEG-1 audio encoded signal and the MPEG-2 audio multichannel encoded signal are examples of such subband encoded audio signals. These MPEG audio encoded signals were standardized in parallel with moving picture encoding; the MPEG-1 audio encoded signal and the MPEG-2 audio multichannel encoded signal are defined in the MPEG-1 audio specification (ISO/IEC 11172-3: 1993) and the MPEG-2 audio specification (ISO/IEC 13818-3: 1996), respectively. The MPEG-2 specification supports multichannel 5.1 sound, namely, a front left channel (Lch), a rear left channel (LSch), front center channel (Cch), a front right channel (Rch), a rear right channel (RSch), and a low frequency enhancement channel (LFEch).

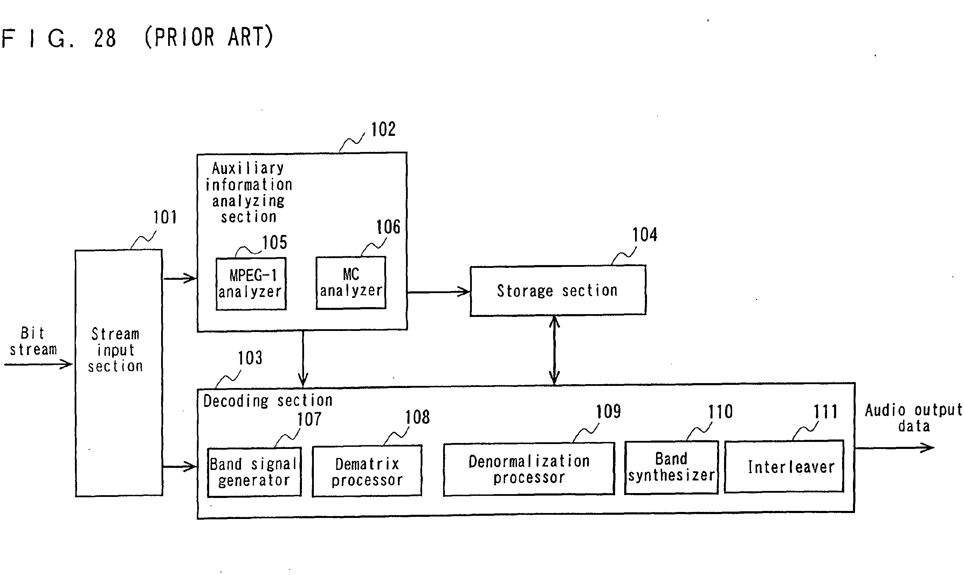

A conventional decoding apparatus, constructed based on the MPEG-1 audio specification and MPEG-2 audio specification, will be described in detail with reference to FIG. 28.

FIG. 28 is a block diagram showing a configuration of a conventional decoding apparatus.

As shown in FIG. 28, the conventional decoding apparatus comprises a stream input section 101, an auxiliary information analyzing section 102, a decoding section 103, and a storage section 104.

The stream input section 101 accepts at its input an externally supplied bit stream of the MPEG-1 audio encoded signal (hereinafter referred to as a "MPEG-1 signal") or the MPEG-2 audio multichannel encoded signal (hereinafter referred to as a "MPEG-2 multichannel signal"). The stream input section 101 separates the input bit stream into auxiliary information containing header information and audio encoded data. The stream input section 101 supplies the auxiliary information and the audio encoded data to the auxiliary information analyzing section 102 and the decoding section 103, respectively.

The auxiliary information analyzing section 102 consists of an MPEG-1 analyzer 105 for analyzing the header information defined by the MPEG-1 audio specification, and an MC analyzer 106 for analyzing multichannel configuration information which is the header information defined by the MPEG-2 audio specification. The results of the analyses by the analyzers 105 and 106 are supplied to the storage section 104. The information of multichannel configuration contains information defined by the MPEG-2 audio specification, such as information of output channel configuration, information of dematrix procedure, and information of TC (transmission channel) allocation.

The decoding section 103 comprises a band signal generator 107, a dematrix processor 108, a denormalization processor 109, a band synthesizer 110, and an interleaver 111. The decoding section 103 decodes the audio encoded data supplied from the stream input section 101, by using the auxiliary information analyzed by the auxiliary information analyzing section 102, and outputs the decoded data as audio output data to an external device (not shown).

The band signal generator 107 extracts quantized data of each channel from the audio encoded data and performs inverse quantization to generate a band signal consisting of 32 subbands per channel.

The dematrix processor 108 applies dematrixing to the band signals of the respective channels after performing a classifying process. The classifying process is based on the auxiliary information such as the output channel configuration information, the dematrix procedure information, and the TC allocation information, which is analyzed by the auxiliary information analyzing section 102. Thereby, the band signals from the band signal generator 107 are converted to the band signals of the respectively corresponding output channels, for example, five channels consisting of the front left and the right channels (Lch/Rch), the center channel (Cch), and the rear left and right channels (LSch/RSch).

The denormalization processor 109 applies an inverse sound level correction for the band signals converted by the dematrix processor 108, which restores the original output level for each output channel after performing the classifying process based on the auxiliary information.

The band synthesizer 110 performs classifying operations based on the auxiliary information. The band synthesizer 110 generates PCM data for each output channel by applying band synthesis filtering to the band signal of each output channel supplied from the denormalization processor 109, and outputs the PCM data to the storage section 104.

The interleaver 111 performs interleaving by reordering the decoded PCM data for each output channel in a prescribed sequence. In this way, the PCM data from the storage section 104 is reordered in the prescribed sequence to reconstruct the audio output data.

The storage section 104 stores the auxiliary information analyzed by the auxiliary information analyzing section 102 and the PCM data for each output channel supplied from the band synthesizer 110.

Operation of this conventional decoding apparatus will be described below.

When the bit stream of the MPEG-2 multichannel signal is input to the stream input section 101, the stream input section 101 separates the input bit stream into auxiliary information and audio encoded data. The stream input section 101 then supplies the separated auxiliary information and audio encoded data to the auxiliary information analyzing section 102 and the decoding section 103, respectively.

In the auxiliary information analyzing section 102, the MPEG-1 analyzer 105 analyzes the MPEG-1 audio header information contained in the auxiliary information from the stream input section 101. Further, the auxiliary information analyzing section 102 analyzes the MPEG-2 audio multichannel information (the header information) by using the MC analyzer 106. Thereby, the MC analyzer 106 obtains the auxiliary information such as the output channel configuration information, the dematrix procedure information, and the TC allocation information.

In the decoder section 103, on the other hand, the band signal generator 107 decodes the audio encoded data into band signals each consisting of 32 subbands per channel. Then, the dematrix processor 108 performs processing to discriminate the MPEG-1 audio signal and the MPEG-2 multichannel signal. The dematrix processor 108 converts the signal into the band signal corresponding to each output channel after performing the classifying process based on the auxiliary information such as the output channel configuration information, the dematrix procedure information, and the TC allocation information.

Next, the denormalization processor 109 performs the classifying process based on the output channel configuration information and the dematrix procedure information supplied from the auxiliary information analyzer 102. The denormalization processor 109 applies the inverse correction to the sound level of each band signal supplied from the dematrix processor 108 to restore the original sound level.

Then, the band synthesizer 110 converts the inverse sound level corrected band signal of each channel to PCM data. The band synthesizer 110 temporarily stores the PCM data in the storage section 104.

After that, the interleaver 111 applies interleaving by reading out the PCM data from the storage section 104 in accordance with the prescribed format, and outputs the interleaved data as the audio output data to an external device not shown. More specifically, the interleaver 111 generates the audio output data by applying interleaving to the PCM data of each channel, for example, in the order of the front left channel (Lch), the rear left channel (LSch), the front center channel (Cch), front right channel (Rch), the rear right channel (RSch), and the low frequency enhancement channel (LFEch). At each processing step from the band synthesizing process to the interleaving process, the classifying process is performed based on the number of channels to be band synthesized and the output channel configuration specified by the auxiliary information.

Among the conventional decoding apparatus, there is also known a decoding apparatus configured provided with a dedicated DSP (Digital Signal Processor), which executes a decoding program, a computer program defining the decoding steps (the decoding program), for carrying out the above-described decoding operations in sequence.

The conventional decoding apparatus described above has required that classifying and pattern matching operations based on the auxiliary information be performed at many stages in the decoding process performed in the decoding section 103. To describe in more detail, the conventional decoding apparatus has required that the decoding section 103 read out the auxiliary information stored in the storage section 104, at least at each of the processing steps of dematrixing, denormalization, band synthesizing, and interleaving. Furthermore, with the conventional decoding apparatus, the MPEG-1 audio signal and the MPEG-2 multichannel signal have had to be discriminated, and necessary information, such as the output channel configuration information, the dematrix procedure information, the TC allocation information, and the number of channels to be band synthesized, has had to be selected at each processing step. As a result, the conventional decoding apparatus has had the problem that the amount of computation is large and the circuit configuration increases in complexity as well as in size. Further, in the case of the conventional decoding apparatus constructed using the dedicated DSP, since the decoding program and a ROM for storing the decoding program have had to be configured so as to handle classifying operations at many processing stages, the program size and the ROM size have been extremely large.

BRIEF SUMMARY OF THE INVENTION

The object of the present invention is to provide a decoding apparatus, decoding method, and a recording medium storing the decoding steps that can solve the aforementioned problems in the conventional decoding apparatus and decoding method.

In order to achieve the above-mentioned object, a decoding apparatus for decoding an audio bit stream for a maximum of N channels (N is an integer larger than 1), comprises:

a stream input section for separating an input bit stream into auxiliary information and encoded data,
an auxiliary information analyzing section for obtaining at least full channel configuration information by analyzing the auxiliary information supplied from the stream input section,
a parameter ROM section prestoring therein a decoding control table which presents decoding type numbers classified according to the full channel configuration information,

a decoding control section for selecting a decoding type number from the decoding control table on the basis of the full channel configuration information supplied from the auxiliary information analyzing section, and for performing decoding control based on the selected type number, and

a decoding section for generating audio output data in accordance with an instruction from the decoding control section.

According to the above-mentioned configuration, classifying processes at many decoding stages can be omitted, and the increase in the amount of computation and the size of circuitry can thus be minimized.

A decoding apparatus according to another aspect of the invention for decoding a bit stream by performing a band synthesis up to a maximum of N channels (N is an integer larger than 1), wherein the decoding section comprises:

a band signal generator for generating a band signal by applying inverse quantization to the encoded data,

a band synthesizer for generating PCM data for each output channel by applying the band synthesis to the band signal, and

an interleaver for performing an interleaving process whereby the band-synthesized and decoded PCM data for each output channel is reordered sample by sample in a prescribed sequence, thereby generating audio output data.

According to the above-mentioned configuration, the classifying processes at many decoding stages can be omitted, and the audio output data can be generated while minimizing the increase in the amount of computation and the size of circuitry.

A decoding apparatus according to another aspect of the invention for decoding a bit stream constructed in accordance with an MPEG-1 audio specification and an MPEG-2 audio specification and decodable by a band synthesis up to a maximum of N channels (N is an integer larger than 1), comprises:

a stream input section for separating an input bit stream into auxiliary information and audio encoded data,

an auxiliary information analyzing section for analyzing the auxiliary information supplied from the stream input section, and for obtaining at least Fs information indicative of a sampling frequency, full channel configuration information, and dematrix procedure information,

a parameter ROM section prestoring therein a decoding control table which presents decoding type numbers classified according to the full channel configuration information and the dematrix procedure information,

a decoding control section for selecting a decoding type number from the decoding control table on the basis of the full channel configuration information and the dematrix procedure information supplied from the auxiliary information analyzing section, and for performing decoding control based on the selected type number,

a decoding section comprising a band signal generator for generating a band signal by applying an inverse quantization to the audio encoded data, a dematrix processor for applying a dematrixing process to the band signal and thereby converting the band signal into a band signal for each output channel, a band synthesizer for generating PCM data for each output channel by applying the band synthesis to the band signal supplied from the dematrix processor, and an interleaver for performing an interleaving process whereby the band-synthesized and decoded PCM data for each output channel is reordered sample by sample in a prescribed sequence, thereby generating audio output data, wherein the decoding section generates the audio data in accordance with an instruction from the decoding control section, and

a storage section for storing at least the PCM data output from the band synthesizer.

According to the above-mentioned configuration, since the classifying processes at the respective decoding stages can be performed collectively in the decoding control section, the decoding speed can be increased while reducing the size of circuitry at the same time.

A decoding apparatus according to another aspect of the invention, wherein said auxiliary information analyzing section comprises:

an MPEG-1 header analyzer for analyzing header information defined in accordance with the MPEG-1 audio specification, thereby extracting at least the Fs information and determining whether front output channel configuration is monaural (one channel) or stereo (two channels),

an MC header analyzer for analyzing header information defined in accordance with the MPEG-2 audio specification, thereby extracting at least the dematrix information and determining the presence or absence of a front center channel and also a rear channel configuration or the presence of absence of second stereo channels, and for generating the full channel configuration information by combining the result of the analysis with the information of the front channel configuration obtained by the MPEG-1 header analyzer, and

a header information compatibility corrector for generating the full channel configuration information and the dematrix procedure information by determining the number of front channels from the MPEG-1 audio specification defined header information, and assuming that the front center channel and the rear channels or second stereo channels do not exist, when decoding the bit stream constructed in accordance with the MPEG-1 audio specification.

According to the above-mentioned configuration, the decoding process can be easily made common to the MPEG-1 audio bit stream and the MPEG-2 audio bit stream, and thereby to reduce the cost of the decoding apparatus.

A decoding apparatus according to another aspect of the invention, wherein the decoding control table comprises:

a decoding type instruction table which presents decoding type numbers classified according to the full channel configuration information and the dematrix procedure information, and
a decoding control information instruction table which presents decoding control information consisting of a combination of multiple pieces of decoding instruction information for each of the decoding type numbers.

According to the above-mentioned configuration, since the same decoding type number can be preassigned to the processing to which the same decoding method is applied, the table size of the decoding control table can be reduced to reduce the cost of the decoding apparatus.

A decoding apparatus according to another aspect of the invention, wherein the dematrix processor includes a dematrix band limiter for limiting the number of bands to be dematrixed in the band signal on the basis of the Fs information supplied from the auxiliary information analyzing section.

According to the above-mentioned configuration, as the sampling frequency increases, the number of bands to be dematrixed can be reduced, reducing the amount of computation required in reproduction conditions imposing the heaviest computational burden, and the decoding speed can thus be increased.

A decoding apparatus according to another aspect of the invention, wherein the decoding control table contains channel number information to indicate the number of output channels to be generated by the band synthesis based on the full channel configuration information, and
the decoding control section includes a channel number transmitting unit for transmitting the channel number information, obtained from the decoding control table, to the decoding section.

According to the above-mentioned configuration, since determination of the number of channels at the respective decoding stages can be made collectively, the decoding speed can be increased while reducing the size of circuitry at the same time.

A decoding apparatus according to another aspect of the invention, wherein the decoding control section includes a dematrix instruction unit which gives an instruction for the dematrixing process, based on the full channel configuration information and the dematrix procedure information supplied from the auxiliary information analyzing section and by using a value retrieved from the decoding control table in the parameter ROM.

According to the above-mentioned configuration, the dematrixing process appropriates to the full channel configuration information and the dematrix procedure information can be accomplished without having to perform again classifying discrimination process at the dematrixing step. This serves to increase the decoding speed and reduce the size of circuitry at the same time.

A decoding apparatus according to another aspect of the invention, wherein the decoding control table contains dematrix pattern information indicating a dematrixing pattern,
the dematrix processor comprises individual dematrixing blocks each provided in corresponding relationship to the dematrix pattern information, and
the parameter ROM prestores therein a dematrix pattern address table which defines correspondence between the dematrix pattern information and the dematrixing blocks contained in the dematrix processor.

According to the above-mentioned configuration, at the dematrixing step, sum of products calculations can be omitted for portions where the dematrix coefficient is 0, and faster decoding can thus be achieved.

A decoding apparatus according to another aspect of the invention, wherein the dematrix processor comprises a general purpose dematrixing block which performs the dematrixing process by varying a dematrix coefficient according to the full channel configuration information and the dematrix procedure information,
the decoding control table contains dematrix pattern information indicating a dematrixing pattern, and
the parameter ROM prestores therein a pattern-by-pattern dematrix coefficient table which defines correspondence between the dematrix coefficient and the dematrix pattern information.

According to the above-mentioned configuration, a single general purpose dematrixing block can be adapted to perform the dematrixing process to match different dematrixing requirements, which serves to reduce the size of circuitry.

A decoding apparatus according to another aspect of the invention, wherein the dematrix processor comprises a general purpose dematrixing block which performs the dematrixing process by varying a dematrix coefficient according to the full channel configuration information and the dematrix procedure information, and at least one dematrixing block corresponding to a predesignated channel,

the decoding control table contains dematrix pattern information indicating a dematrixing pattern, and

the parameter ROM prestores therein a dematrix pattern address table which defines correspondence among the dematrix pattern information, the general purpose dematrixing block and the at least one dematrixing block, and a pattern-by-pattern dematrix coefficient table which defines correspondence between the dematrix coefficient and the dematrix pattern information.

According to the above-mentioned configuration, when performing the dematrixing process for the predesignated channel, sum of products calculations can be omitted for portions where the dematrix coefficient is 0, and faster decoding can thus be achieved. Furthermore, when performing the dematrixing process for other channels than the predesignated channel, the dematrixing calculations can be performed using a single general purpose dematrixing block, and thus the size of circuitry can be reduced.

A decoding apparatus according to another aspect of the invention, wherein the dematrix processor comprises a general purpose dematrixing block which varies the dematrix coefficient in cases where the number of output channels to be generated by the band synthesis is 1 to M (M is an integer smaller than N), and a dematrixing block provided for cases where the number of output channels to be generated by the band synthesis is equal to or larger than (M+1), and the parameter ROM prestores therein a pattern-by-pattern dematrix coefficient table which defines correspondence between the general purpose dematrixing block and the dematrix pattern information corresponding to 1 to M output channels.

According to the above-mentioned configuration, the dematrixing process is performed by selecting either the specific dematrixing block or the general purpose dematrixing block, depending on the number of channels to be decoded by the band synthesis. This serves to reduce the size of circuitry and achieve faster decoding.

A decoding apparatus according to another aspect of the invention, wherein the decoding control table contains an interleave instruction information for indicating an interleaving pattern based on the full channel configuration information, and

the decoding control section includes an interleave instruction unit for indicating the interleave instruction information, obtained from the decoding control table, to the decoding section.

According to the above-mentioned configuration, since the classifying processes at the respective decoding stages can be performed collectively in the decoding control section, the decoding speed can be increased while reducing the size of circuitry at the same time.

A decoding apparatus according to another aspect of the invention, wherein the interleave instruction information is information that indicates the interleaving pattern, preassigned according to the full channel configuration information, by using a number.

the parameter ROM prestores therein an interleave pattern table which defines correspondence between the number of said interleaving pattern and PCM location information which is an encoded representation of the starting address of the PCM data stored in the storage section.

According to the above-mentioned configuration, the same interleaving pattern can be preassigned when the interleaving pattern to be used is the same even if the decoding method differs. Accordingly, the table size of the interleave pattern table can be reduced compared with the configuration where address information of PCM data is presented using a single table, and thus reducing the cost of the decoding apparatus.

A decoding apparatus according to another aspect of the invention, wherein the decoding section includes a mute data creator which writes mute PCM data to the storage section when the channel number information supplied from the decoding control section indicates (N-1) or fewer channels.

According to the above-mentioned configuration, regardless of the presence or absence of an empty channel, the same interleaving can be applied, making it possible to correspondingly omit the classifying processes and to reduce the size of circuitry. Further, since the mute data is not created in the case of the N-channel configuration which requires the largest amount of computation, it has little effect on the computing performance of the decoding apparatus and does not involve an increase in the amount of computation.

A decoding apparatus according to another aspect of the invention, wherein the parameter ROM prestores therein a denormalization instruction table for indicating instruction data for a denormalization process according to the full channel configuration information and the dematrix procedure information supplied from the auxiliary information analyzing section,

the decoding control section includes a denormalization instruction unit which gives an instruction for the denormalization process, based on the full channel configuration information and the dematrix procedure information supplied from the auxiliary information analyzing section and by using a value retrieved from the denormalization instruction table in the parameter ROM, and

the decoding unit includes a denormalization processor which performs the denormalization process in accordance with the instruction from the decoding control section.

According to the above-mentioned configuration, the classifying processes be omitted in the denormalization process, achieving faster decoding while reducing the size of circuitry at the same time.

A decoding apparatus according to another aspect of the invention, wherein the denormalization instruction table comprises: a normalization type instruction table which presents denormalization type numbers classified according to the full channel configuration information and the dematrix procedure information, a denormalization allocation table which shows relations between the denormalization type numbers and denormalize correction value data numbers for each output channel, and a denormalization level correction value table for converting the denormalize correction value data numbers into sound level data used in the denormalization.

According to the above-mentioned configuration, the same denormalization type number can be preassigned when the type of the denormalization is the same even if the decoding method differs. Accordingly, the table size of the denormalization instruction table can be reduced compared with the configuration where instruction data for denormalization is presented using a single table, and thereby reducing the cost of the decoding apparatus.

A decoding apparatus according to another aspect of the invention, further comprises a channel balance setting interface via which sound level information for each output channel is supplied from outside for delivery to the decoding section, and wherein:

> the decoding section includes a sound level converter which converts the sound level information delivered from the channel balance setting interface into sound level data for each output channel, and a classifying sound level multiplier which multiplies the instruction data supplied from the denormalization instruction unit by the sound level data supplied from the sound level converter for each output channel when the channel number information from the decoding control section indicates N, and
> the interleave processor includes a classifying interleave sound level adjuster multiplies the PCM data of each output channel by the sound level data supplied from the sound level converter when the channel number information from the decoding control section indicates (N-1) or fewer channels.

According to the above-mentioned configuration, it is made possible to multiply the sound level data of each output channel by a denormalization level correction value only when the channel number information indicates the N-channel configuration which requires the largest amount of computation. Furthermore, even when the PCM data of one channel is interleaved into a plurality of output channels, channel balance can be set individually.

A decoding method of the present invention for use in a decoding apparatus for decoding a bit stream for a maximum of N channels (N is an integer larger than 1), comprises:

> a separation step for separating an input bit stream into auxiliary information and encoded data,
> an auxiliary information analyzing step for obtaining at least full channel configuration information by analyzing the auxiliary information separated in the separation step,
> a selection step for selecting a decoding type number from a decoding control table in a parameter ROM on the basis of the full channel configuration information obtained in the auxiliary information analyzing step, and
> a generation step for generating output data by performing decoding control based on the type number selected in the selection step.

According to the above-mentioned configuration, the classifying processes at many decoding stages can be omitted, and the increase in the amount of computation and the size of circuitry can thus be minimized.

A decoding method according to another aspect of the invention for use in a decoding apparatus for decoding a bit stream by performing band synthesis up to a maximum of N channels (N is an integer larger than 1), wherein the generation step comprises:

> a band signal generation step for generating a band signal by applying an inverse quantization to the encoded data,
> a band synthesizing step for generating PCM data for each output channel by applying a band synthesis to the band signal generated in the band signal generation step, and
> an interleaving step for performing an interleaving process whereby the PCM data generated for each output channel in the band synthesizing step is reordered sample by sample in a prescribed sequence.

According to the above-mentioned configuration, the classifying processes at many decoding stages can be omitted, and the audio output data can be generated while minimizing the increase in the amount of computation and the size of circuitry.

A decoding method according to another aspect of the invention for use in a decoding apparatus for decoding a bit stream constructed in accordance with an MPEG-1 audio specification and an MPEG-2 audio specification and decodable by a band synthesis up to a maximum of N channels (N is an integer larger than 1), comprises:

> a separation step for separating an input bit stream into auxiliary information and audio encoded data,
> an auxiliary information analyzing step for analyzing the auxiliary information separated in the separation step, and for obtaining at least Fs information indicative of a sampling frequency, full channel configuration information, and dematrix procedure information,
> a selection step for selecting a decoding type number from a decoding control table in a parameter ROM on the basis of the full channel configuration information and the dematrix procedure information obtained in the auxiliary information analyzing step, and
> a generation step for generating audio output data by performing decoding control based on the type number selected in the selection step.

According to the above-mentioned configuration, since the classifying processes at the respective decoding stages can be performed collectively, the decoding speed can be increased while reducing the size of circuitry at the same time.

A decoding method according to another aspect of the invention, wherein the generation step comprises:

> a band signal generation step for generating a band signal by applying an inverse quantization to the audio encoded data,
> a dematrixing step for applying a dematrixing process to the band signal generated in the band signal generation step, and thereby converting the band signal into a band signal for each output channel,
> a band synthesizing step for generating PCM data for each output channel by applying the band synthesis to the band signal generated for each output channel in the dematrixing step, and
> an interleaving step for performing an interleaving process whereby the PCM data generated for each output channel in the band synthesizing step is reordered sample by sample in a prescribed sequence.

According to the above-mentioned configuration, since the classifying processes at the respective decoding stages can be performed collectively, the decoding speed can be increased while reducing the size of circuitry at the same time.

A recording medium storing computer program code adapted to perform the decoding steps of the present invention for decoding a bit stream for a maximum of N channels (N is an integer larger than 1), the decoding steps comprises the steps of:

> when the bit stream is input, separating the bit stream into auxiliary information and encoded data,
> acquiring at least full channel configuration information by analyzing the separated auxiliary information,
> selecting a decoding type number from a decoding control table in a parameter ROM on the basis of the acquired full channel configuration information, and
> generating output data by performing decoding control based on the selected type number.

According to the above-mentioned configuration, the classifying processes at many decoding stages can be omitted, and the increase in the amount of computation and the size of circuitry can thus be minimized.

A recording medium storing the decoding steps according to another aspect of the invention for decoding a bit stream by a band synthesis up to a maximum of N channels (N is an integer larger than 1), wherein the decoding steps provide an additional function by which, when generating the output data, a band signal is generated by applying an inverse quantization to the encoded data, PCM data for each output channel is generated by applying a band synthesis to the band signal, and an interleaving process is performed whereby the PCM data for each output channel is reordered sample by sample in a prescribed sequence.

According to the above-mentioned configuration, the classifying processes at many decoding stages can be omitted, and the audio output data can be generated while minimizing the increase in the amount of computation and the size of circuitry.

A recording medium storing computer program code adapted to perform the decoding steps according to another aspect of the invention for decoding a bit stream constructed in accordance with an MPEG-1 audio specification and an MPEG-2 audio specification and decodable by a band synthesis up to a maximum of N channels (N is an integer larger than 1), the decoding steps comprising the steps of:

> when the bit stream is input, separating the bit stream into auxiliary information and audio encoded data,
> acquiring at least Fs information indicative of a sampling frequency, full channel configuration information, and dematrix procedure information by analyzing the separated auxiliary information,

selecting a decoding type number from a decoding control table in a parameter ROM on the basis of the acquired full channel configuration information and dematrix procedure information, and

generating audio output data by performing decoding control based on the selected type number.

According to the above-mentioned configuration, since the classifying processes at the respective decoding stages can be performed collectively, the decoding speed can be increased while reducing the size of circuitry at the same time.

A recording medium storing the decoding steps according to another aspect of the invention, wherein the decoding steps provide an additional function by which, when generating the audio output data, a band signal is generated by applying an inverse quantization to the audio encoded data, the band signal is dematrixed and thereby converted into a band signal for each output channel, PCM data for each output channel is generated by applying the band synthesis to the band signal of each output channel, and an interleaving process is performed whereby the PCM data for each output channel is reordered sample by sample in a prescribed sequence.

According to the above-mentioned configuration, since classifying operations at the respective decoding stages can be performed collectively, the decoding speed can be increased while reducing the size of circuitry at the same time.

BRIEF DESCRIPTION OF THE SEVERAL VIEWS OF THE DRAWING

FIG. 1 is a block diagram showing an entire configuration of a decoding apparatus according to a first embodiment of the present invention.

FIG. 2 is an explanatory diagram showing a table construction in the parameter ROM shown in FIG. 1.

FIG. 3 is an explanatory diagram showing a detailed data structure of the decoding type instruction table shown in FIG. 2.

FIG. 4 is an explanatory diagram showing a detailed data structure of the decoding control information instruction table shown in FIG. 2.

FIG. 5 is an explanatory diagram showing a detailed data structure of the dematrix pattern address table shown in FIG. 2.

FIG. 6 is a block diagram showing a detailed configuration of the dematrix processor shown in FIG. 1.

FIG. 7 is an explanatory diagram showing a detailed data structure of the denormalization type instruction table in FIG. 2.

FIG. 8 is an explanatory diagram showing a detailed data structure of the denormalization allocation table shown in FIG. 2.

FIG. 9 is an explanatory diagram showing a detailed data structure of the denormalization level correction value table shown in FIG. 2.

FIG. 10 is a diagram showing a detailed structure of the PCM data write area shown in FIG. 1.

FIG. 11 is an explanatory diagram showing a detailed data structure of an interleave pattern table shown in FIG. 2.

FIG. 12 is a flow chart showing a basic operation of the decoding apparatus shown in FIG. 1.

FIG. 13 is a flow chart showing a detailed operation in step S3 shown in FIG. 12.

FIG. 14 is a flow chart showing a detailed operation in step S4 shown in FIG. 12.

FIG. 16 is a flow chart showing a detailed operation in step S14 shown in FIG. 12.

FIG. 17 is an explanatory diagram showing a table construction in a parameter ROM in a decoding apparatus according to a second embodiment of the present invention.

FIG. 18 is an explanatory diagram showing a detailed data structure of the pattern-by-pattern dematrix coefficient table shown in FIG. 17.

FIG. 19 is a block diagram showing a detailed configuration of the dematrix processor in the decoding apparatus according to the second embodiment of the present invention.

FIG. 20 is a flow chart showing an operation of the dematrix processor shown in FIG. 19.

FIG. 21 is an explanatory diagram showing a table construction in a parameter ROM in a decoding apparatus according to a third embodiment of the present invention.

FIG. 22 is an explanatory diagram showing a detailed data structure of the dematrix pattern address table shown in FIG. 21.

FIG. 23 is an explanatory diagram showing a detailed data structure of the pattern-by-pattern dematrix coefficient table shown in FIG. 21.

FIG. 24 is a block diagram showing a detailed configuration of the dematrix processor in the decoding apparatus according to the third embodiment of the present invention.

FIG. 25 is a flow chart showing an operation of the dematrix processor shown in FIG. 24.

FIG. 26 is a flow chart showing a detailed operation in step S58 shown in FIG. 25.
FIG. 27 is a flow chart showing a detailed operation in step S59 or step S60 shown in FIG. 25.
FIG. 28 is a block diagram showing a configuration of a conventional decoding apparatus.

DETAILED DESCRIPTION OF THE INVENTION

Hereinafter, preferred embodiments of a decoding apparatus and a decoding method in accordance with the present invention will be described with reference to the accompanying drawings. The decoding apparatus shown in each of the first to third embodiments described hereinafter is configured to be able to support Layer 2 of the MPEG-1 audio specification (ISO/IEC 11172-3: 1993) and Layer 2 Multichannel of the MPEG-2 audio specification (ISO/IEC 13818-3: 1996). The decoding apparatus of each embodiment is capable of decoding multichannel encoded signals of 5.1 channel sound, namely, subband (band division) encoded signals of five channels and an encoded signal of one low frequency enhancement channel (hereinafter also called the LFECh), into audio output data. The LFEch encoded signal is a channel that does not require band synthesis, as described in the MPEG-2 audio specification. In the decoding apparatus of each embodiment, an interleaver decodes the LFEch encoded signal into audio output data and performs interleaving.

For simplicity of explanation, the operational description of each embodiment deals mainly with the case where the input signal is the MPEG-2 audio Layer 2 multichannel encoded signal, whereof sampling frequency is 48 kHz and dematrix procedure information is "2". Further, the first embodiment deals with the case where the signal is decoded into four-channel audio output data, while the second and third embodiments each deal with the case where the signal is decoded into five-channel audio output data. More specifically, in the first embodiment, the output channels are four channels consisting of a front left channel (hereinafter also called Lch), a front right channel (hereinafter also called Rch), a front center channel (hereinafter also called Cch), and a monophonic surround channel (hereinafter also called Sch). In the second and third embodiments, the five channels consists of Lch, Rch, Cch, a rear left channel (hereinafter also called LSch), and a rear right channel (hereinafter also called RSch).

«Embodiment 1»

[Configuration of a Decoding Apparatus]

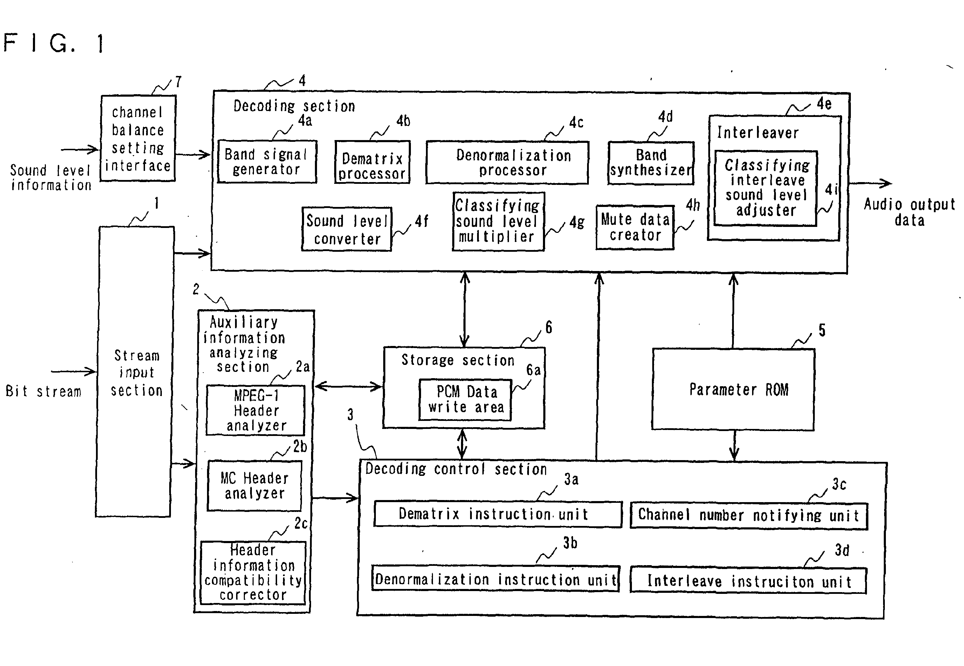

FIG. 1 is a block diagram showing an entire configuration of a decoding apparatus according to a first embodiment of the present invention.

As shown in FIG. 1, the decoding apparatus of the present embodiment comprises a stream input section 1, an auxiliary information analyzing section 2, a decoding control section 3, a decoding section 4, a parameter ROM 5, a storage section 6, and a channel balance setting interface 7.

The stream input section 1 receives an externally supplied bit stream of the MPEG-1 audio encoded signal (hereinafter referred to as a "MPEG-1 signal") or the MPEG-2 audio multichannel encoded signal (hereinafter referred to as a "MPEG-2 multichannel signal"). The stream input section 1 separates the input bit stream into auxiliary information containing header information and audio encoded data. The stream input section 1 supplies the auxiliary information and the audio encoded data to the auxiliary information analyzing section 2 and the decoding section 3, respectively.

The auxiliary information analyzing section 2 comprises an MPEG-1 header analyzer 2a, an MC header analyzer 2b, and a header information compatibility corrector 2c. The auxiliary information analyzing section 2 analyzes the auxiliary information input from the stream input section 1 and supplies the result of the analysis to the decoding control section 3 and the storage section 6.

The MPEG-1 header analyzer 2a analyzes header information defined by the MPEG-1 audio specification in the auxiliary information. More specifically, the MPEG-1 header analyzer 2a extracts Fs information indicating a sampling frequency and examines the front output channel configuration to determine whether it is monaural (one channel) or stereo (two channels).

The MC header analyzer 2b analyzes an MPEG-2 audio extension part of the auxiliary information, namely, the multichannel configuration information constituting header information defined by the MPEG-2 audio specification. More specifically, the MC header analyzer 2b checks the presence or absence of the front center channel and also the rear channel configuration or the presence or absence of second stereo channels. The MC header analyzer 2b generates full channel configuration information by combining the result of the analysis with the front channel configuration information obtained by the MPEG-1 header analyzer 2a. Further, the MC header analyzer 2b extracts dematrix procedure information indicating the type (contents) of the below-mentioned dematrixing and denormalization processes, and TC (transmission channel) allocation information indicating a dematrixing pattern specified for each band (signal) in the dematrixing process.

When decoding a bit stream of the MPEG-1 signal that does not contain the MPEG-2 multichannel signal, the header information compatibility corrector 2c determines the number of front channels only from the header information of the MPEG-1 signal. Further, it generates the full channel configuration information and dematrix procedure information by assuming that the front center channel and the rear channels or the second stereo channels do not exist. With the provision of the header information compatibility corrector 2c, the operation for discriminating the MPEG-1 signal and MPEG-2 multichannel signal can be omitted at each of the subsequent processing stages.

The decoding control section 3 comprises a dematrix instruction unit 3a, a denormalization instruction unit 3b, a channel number notifying unit 3c, and an interleave instruction unit 3d. The decoding control section 3 controls the decoding process performed in the decoding section 4, based on the results of the auxiliary information analysis supplied from the auxiliary information analyzer 2 and on the information prestored in the parameter ROM 5. More specifically, using the full channel configuration information and the dematrix procedure information obtained by the auxiliary information analyzer 2, the decoding control section 3 reads from the parameter ROM 5 the decoding control information and the denormalization level correction value for the band signal of each channel as specified by the above-mentioned full channel configuration information and the dematrix procedure information. The decoding control section 3 supplies the specified decoding control information and the denormalization level correction value as instructions to the decoding section 4. The decoding control information consists of three kinds of decoding instruction information: channel number information, dematrix pattern information, and interleave instruction information. The decoding control information is classified into one of decoding type numbers 0 to 15 based on the full channel configuration information and the dematrix procedure information, and is prestored in the parameter ROM 5. Likewise, the denormalization level correction value is classified into one of denormalization type numbers 0 to 5 based on the full channel configuration information and the dematrix procedure information, and is prestored in the parameter ROM 5. (Details will be described later)

The dematrix instruction unit 3a gives an instruction for dematrixing by sending the dematrix pattern information to the decoding section 4.

The denormalization instruction unit 3b gives an instruction for denormalization by sending the denormalization level correction value for the band signal of each channel to the decoding section 4.

The channel number notifying unit 3c sends the channel number information to the decoding section 4.

The interleave instruction unit 3d gives an instruction for an interleaving process by sending the interleave instruction information to the decoding section 4.

The decoding section 4 comprises a band signal generator 4a, a dematrix processor 4b, a denormalization processor 4c, a band synthesizer 4d, an interleaver 4e, a sound level converter 4f, a classifying sound level multiplier 4g, and a mute data creator 4h. The decoding section 4 decodes the audio encoded data input from the stream input section 1 based on the instructions from the decoding control section 3, and outputs the decoded data as audio output data to an external device (not shown).

The band signal generator 4a extracts quantized data of each channel from the audio encoded data input from the stream input section 1, and performs inverse quantization to generate band signals each consisting of 32 subbands per channel. Each band signal consists of frequency bands arranged in increasing order of frequency, band 0 as the lowest frequency band, followed by band 1, band 2, band 3, ..., band 31 in this order.

The dematrix processor 4b applies dematrixing to the band signal of each channel after performing a classifying process based on the auxiliary information such as the full channel configuration information, the dematrix procedure information, and the TC allocation information supplied from the auxiliary information analyzer 2. Thereby, the band signals from the band signal generator 4a are converted to band signals for the respective output channels, for example, the band signals of five-channel sound field positions consisting of the front left/right channels (Lch/Rch), the center channel (Cch), and the rear left/right channels (LSch/RSch).

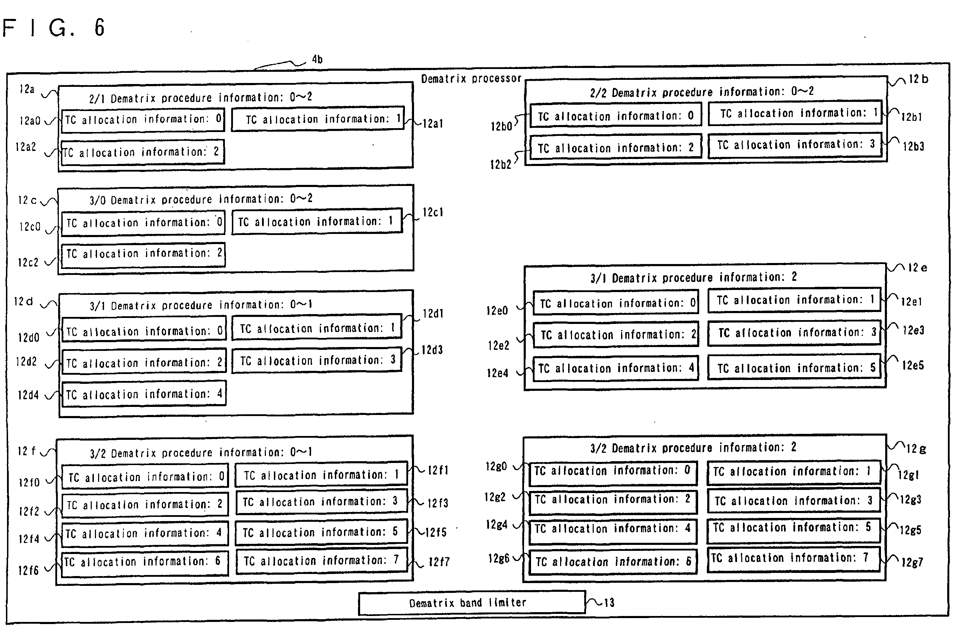

The dematrix processor 4b of the present embodiment, as will be described later, is constructed to handle the above-described classifying process, and comprises seven dematrixing blocks 12a to 12g (FIG. 6) respectively specified by the dematrix pattern information of 1 to 7. Each of the dematrixing blocks 12a to 12g includes a plurality of decoding matrix units, one each specified for each band signal by the TC allocation information.

The denormalization processor 4c applies the inverse correction to each band signal converted by the dematrix processor 4b, and thereby restores the original output level for each output channel.

The band synthesizer 4d generates PCM data for each output channel by applying band synthesis filtering to the band signal of each output channel, and supplies the PCM data to the storage section 6. The band synthesizer 4d of the present embodiment is configured to perform band synthesis only for existing channels, in the order of Lch, Rch, Cch, and Sch, or Lch, Rch, Cch, LSch, and RSch.

The Interleaver 4e generates audio output data by performing the interleaving process, and thereby reordering the decoded PCM data of each output channel in a prescribed sequence, and contains therein a classifying interleave sound level adjuster 4i. The interleaver 4e of the present embodiment is configured to apply the interleaving process in the order of Lch, LSch, Cch, Rch, RSch, and LFEch regardless of the channel configuration of the input bit stream. Furthermore, the interleaver 4e is configured to apply the interleaving process to the PCM data of each output channel on a sample by sample basis. When the output channels include Sch in place of LSch and RSch, the PCM data of Sch, in place of the PCM data of LSch and RSch, will be interleaved on a sample by sample basis.

The sound level converter 4f converts the sound level information supplied from the channel balance setting interface 7 into actual sound level data.

In the case that the channel number information supplied from the channel number notifying unit 3c indicates five channels, the classifying sound level multiplier 4g multiplies the denormalization level correction value supplied for each output channel from the denormalization instruction unit 3b by the sound level data supplied from the sound level converter 4f. The classifying sound level multiplier 4g supplies the result of the multiplication as a denormalization level correction value to the denormalization processor 4c. Thereby, in the case that the channel number information indicates five channels, the denormalization processor 4c performs processing by using the denormalization level correction value supplied from the classifying sound level multiplier 4g.

In the case that the channel number information supplied from the channel number notifying unit 3c indicates four or fewer channels, the mute data creator 4h writes mute PCM data (hereinafter referred to as "mute data) to the storage section 6. The mute data creator 4h of the present embodiment is configured to write the mute data to a different area in the storage section 6 when the channel number information indicates one or three channels than when it indicates two or four channels.

In the case that the channel number information supplied from the channel number notifying unit 3c indicates four or fewer channels, the classifying interleave sound level adjuster 4i multiplies the PCM data by the sound level data supplied for each output channel from the sound level converter 4f at the interleaving process.

The parameter ROM 5 is a storage device in which various parameters to be used in the decoding process are prestored.

The storage section 6 is a memory capable of storing calculation results from the auxiliary information analysis section 2, the decoding control section 3, and the decoding section 4, and includes therein a PCM data write area 6a in which the band synthesized PCM data of each output channel is stored until the completion of the interleaving process.

The channel balance setting interface 7 supplies to the decoding section 4 the sound level information for each output channel externally input from an input device not shown. This enables the sound to be reproduced by decoding the data into audio output data having a sound level that the user desires.

[Table Construction in the Parameter ROM]

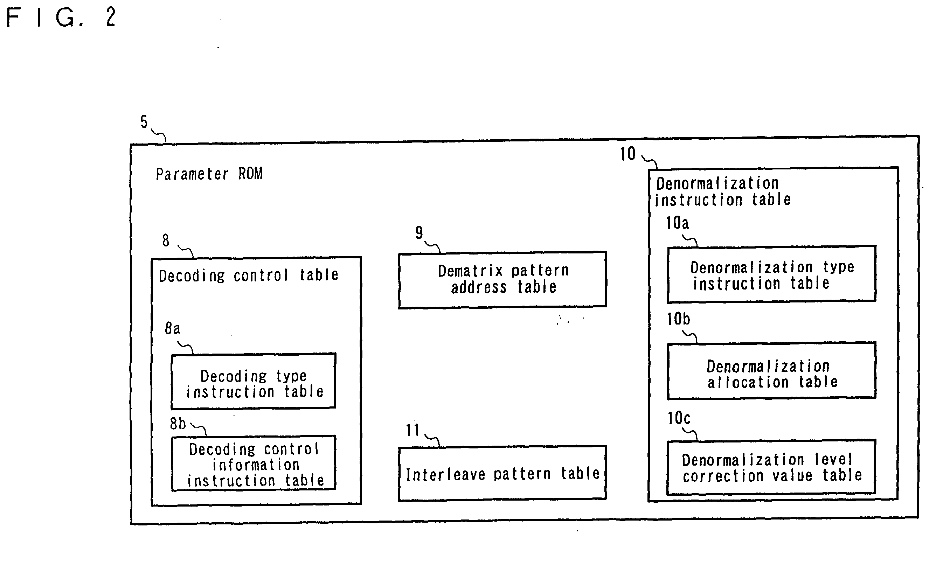

FIG. 2 is an explanatory diagram showing a table construction in the parameter ROM shown in FIG. 1.

As shown in FIG. 2, the parameter ROM 5 comprises a decoding control table 8, a dematrix pattern address table 9, a denormalization instruction table 10, and an interleave pattern table 11.

The decoding control table 8 comprises a decoding type instruction table 8a and a decoding control information instruction table 8b. The decoding control table 8 is a table for obtaining the decoding control information necessary for decoding process in accordance with the full channel configuration information and the dematrix procedure information supplied from the auxiliary information analyzing section 2.

The denormalization instruction table 10 comprises a denormalization type instruction table 10a, a denormalization allocation table 10b, and a denormalization level correction value table 10c. The denormalization instruction table 10 is a table for obtaining the denormalization level correction value used in the denormalization process in accordance with the full channel configuration information and the dematrix procedure information supplied from the auxiliary information analyzing section 2.

[Structure of the Decoding Control Table]

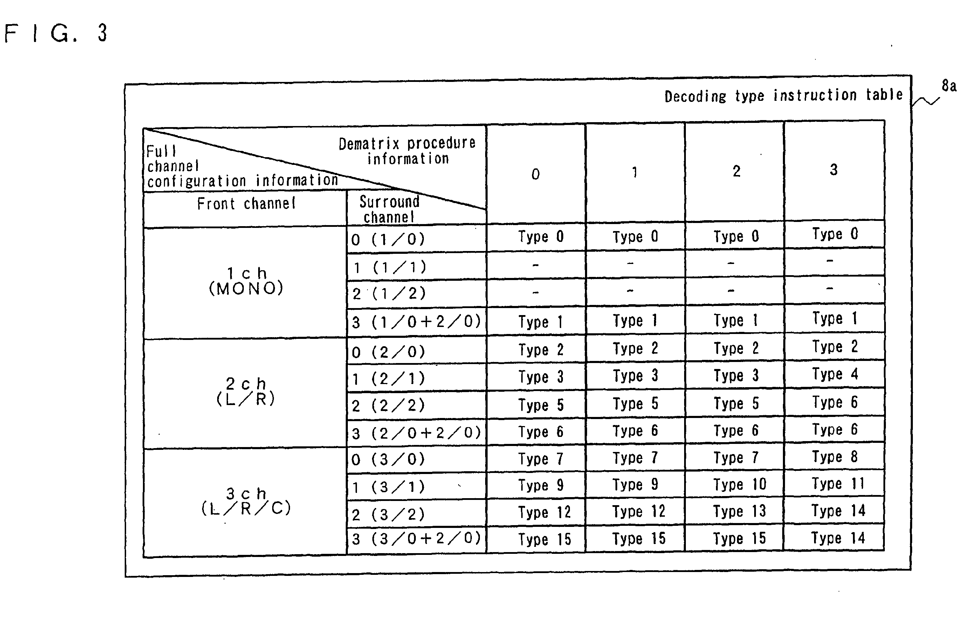

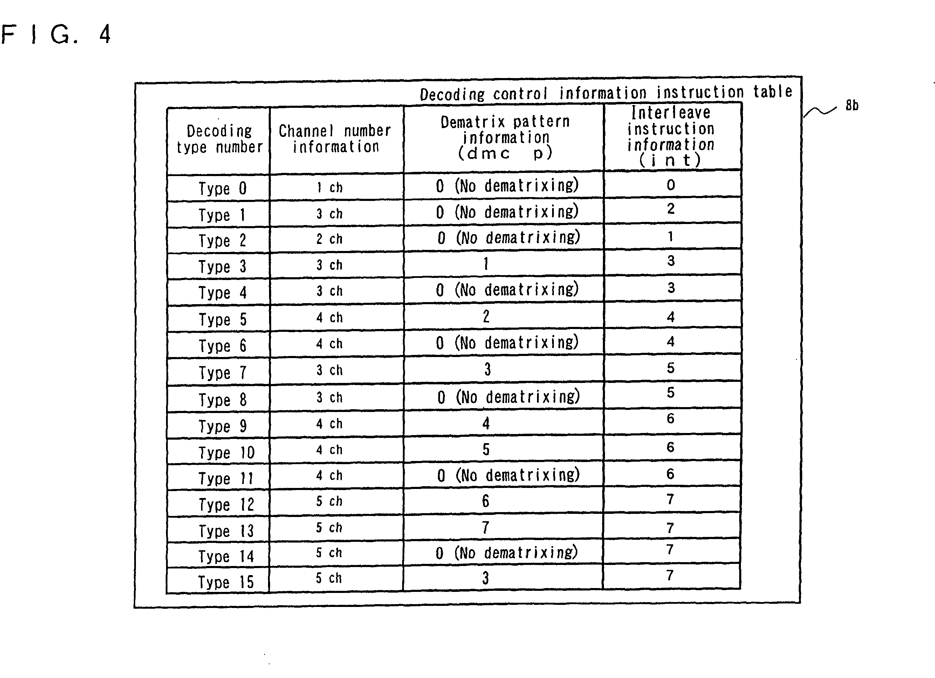

FIG. 3 is an explanatory diagram showing a detailed data structure of the decoding type instruction table shown in FIG. 2, and FIG. 4 is an explanatory diagram showing a detailed data structure of the decoding control information instruction table shown in FIG. 2.

As shown in FIG. 3, the decoding type instruction table 8a presents decoding type numbers classified according to the full channel configuration information and the dematrix procedure information. By the decoding type instruction table 8a, one of the type numbers 0 to 15 is specified based on the full channel configuration information and the dematrix procedure information supplied from the auxiliary information analyzing section 2.

As shown in FIG. 4, the decoding control information instruction table 8b presents the decoding control information consisting of the three kinds of the decoding instruction information, namely, the channel number information, the dematrix pattern information, and the interleave instruction information, for each decoding type number. By the decoding control information instruction table 8b, the channel number information (1 to 5ch), the dematrix pattern information (0 to 7), and the interleave instruction information (0 to 7) are specified according to the type number.

The channel number information is the decoding instruction information indicating the number of channel excluding the LFEch, that is, the number of output channels to be generated by band synthesis operations. The dematrix pattern information is used to obtain the dematrixing blocks 12a to 12g (FIG. 6) in the dematrix processor 4b, specified by the full channel configuration information and the dematrix procedure information. The actual dematrix pattern information is further classified according to the TC allocation information (0 to 7) for each band (signal). In the case that the dematrixing process is not needed, the dematrix pattern information is indicated by 0. The interleave instruction information indicates the number of each interleaving pattern classified and assigned in advance according to the full channel configuration information (the decoding type number).

[Detailed Configuration of the Dematrix Processor]

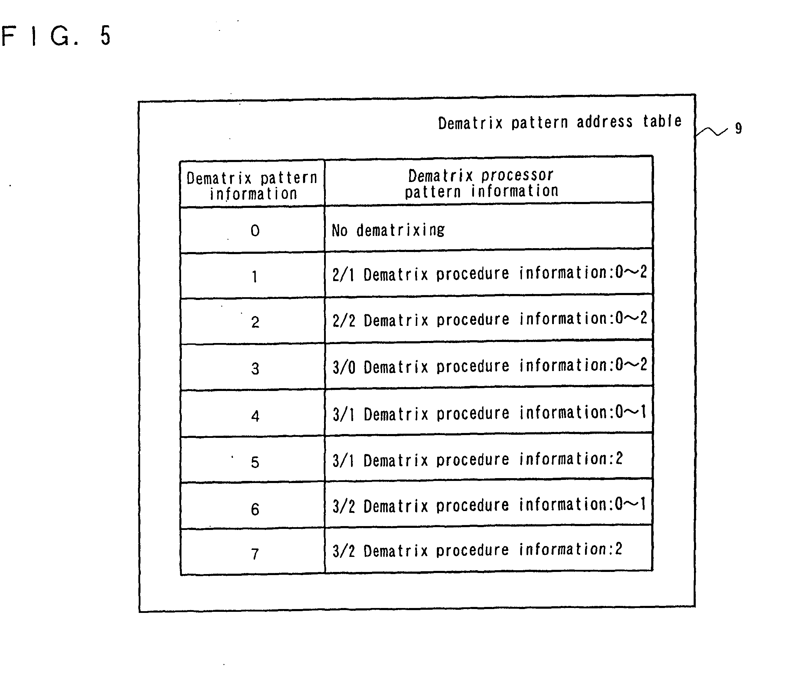

FIG. 5 is an explanatory diagram showing a detailed data structure of the dematrix pattern address table shown in FIG. 2, and FIG. 6 is a block diagram showing a detailed configuration of the dematrix processor shown in FIG. 1.
As shown in FIG. 5, the dematrix pattern address table 9 is a table which defines the correspondence between the dematrix pattern information and the dematrixing blocks. In the dematrix pattern address table 9, the address of each of the dematrixing blocks 12a to 12g (FIG. 6) in the dematrix processor 4b (FIG. 6) is specified according to the dematrix pattern information.
As shown in FIG. 6, the dematrix processor 4b comprises the dematrixing blocks 12a, 12b, 12c, 12d, 12e, 12f and 12g, and a dematrix band limiter 13.
The dematrixing block 12a is the block that performs the dematrixing process in the case that the dematrix pattern information is 1. That is, in the case that the full channel configuration information is 2/1 (the first to third channels correspond to Lch, Rch, and Sch, respectively), and in the case that the dematrix procedure information is any one of 0 to 2, the dematrixing block 12a performs the dematrixing process. The dematrixing block 12a includes decoding matrix units 12a0, 12a1, and 12a2 associated with the TC allocation information 0 to 2, respectively.
The dematrixing block 12b is the block that performs the dematrixing process in the case that the dematrix pattern information is 2. That is, in the case that the full channel configuration information is 2/2 (the first to fourth channels correspond to Lch, Rch, LSch, and RSch, respectively), and in the case that the dematrix procedure information is any one of 0 to 2, the dematrixing block 12b performs the dematrixing process. The dematrixing block 12b includes decoding matrix units 12b0, 12b1, 12b2, and 12b3 associated with the TC allocation information 0 to 3, respectively.
The dematrixing block 12c is the block that performs the dematrixing process in the case that the dematrix pattern information is 3. That is, in the case that the full channel configuration information is 3/0 (the first to third channels correspond to Lch, Rch, and Cch, respectively) or 3/0 + 2/0 (the first to third channels correspond to Lch, Rch, and Cch, respectively, and the fourth and fifth channels correspond to the second stereo channels (L2ch and R2ch)), and in the case that the dematrix procedure information is any one of 0 to 2, the dematrixing block 12c performs the dematrixing process. The dematrixing block 12c includes decoding matrix units 12c0, 12c1, and 12c2 associated with the TC allocation information 0 to 2, respectively.
The dematrixing block 12d is the block that performs the dematrixing process in the case that the dematrix pattern information is 4. That is, in the case that the full channel configuration information is 3/1 (the first to fourth channels correspond to Lch, Rch, Cch, and Sch, respectively), and in the case that the dematrix procedure information is either 0 or 1, the dematrixing block 12d performs the dematrixing process. The dematrixing block 12d includes decoding matrix units 12d0, 12d1, 12d2, 12d3, and 12d4 associated with the TC allocation information 0 to 4, respectively.
The dematrixing block 12e is the block that performs the dematrixing process in the case that the dematrix pattern information is 5. That is, in the case that the full channel configuration information is 3/1 (the first to fourth channels correspond to Lch, Rch, Cch, and Sch, respectively), and in the case that the dematrix procedure information is 2, the dematrixing block 12e performs the dematrixing process. The dematrixing block 12e includes decoding matrix units 12e0, 12e1, 12e2, 12e3, 12e4, and 12e5 associated with the TC allocation information 0 to 5, respectively.
The dematrixing block 12f is the block that performs the dematrixing process in the case that the dematrix pattern information is 6. That is, in the case that the full channel configuration information is 3/2 (the first to fifth channels correspond to Lch, Rch, Cch, LSch, and RSch, respectively), and in the case that the dematrix procedure information is either 0 or 1, the dematrixing block 12f performs the dematrixing process. The dematrixing block 12f includes decoding matrix units 12f0, 12f1, 12f2, 12f3, 12f4, 12f5, 12f6, and 12f7 associated with the TC allocation information 0 to 7, respectively.
The dematrixing block 12g is the block that performs the dematrixing process in the case that the dematrix pattern information is 7. That is, in the case that the full channel configuration information is 3/2 (the first to fifth channels correspond to Lch, Rch, Cch, LSch, and RSch, respectively), and in the case that the dematrix procedure information is 2, the dematrixing block 12g performs the dematrixing process. The dematrixing block 12g includes decoding matrix units 12g0, 12g1, 12g2, 12g3, 12g4, 12g5, 12g6, and 12g7 associated with the TC allocation information 0 to 7, respectively.
The dematrix band limiter 13 limits the number of bands in the band signal to be dematrixed, based on the Fs information indicating the sampling frequency. More specifically, when the Fs information (sampling frequency) of the input bit stream is 48 kHz, the dematrix band limiter 13 of the present embodiment applies the dematrixing process only to 27 subband signals (band 0 to band 26) out of the 32 subband signals (band 0 to band 31) generated by the band signal generator 4a (FIG. 1).

[Structure of the Denormalization Instruction Table]

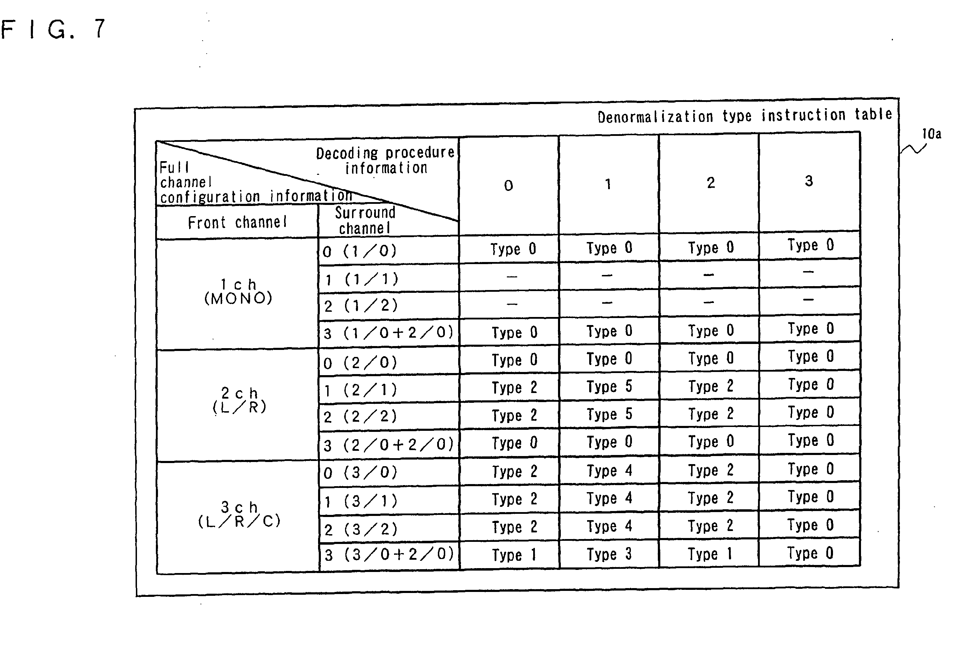

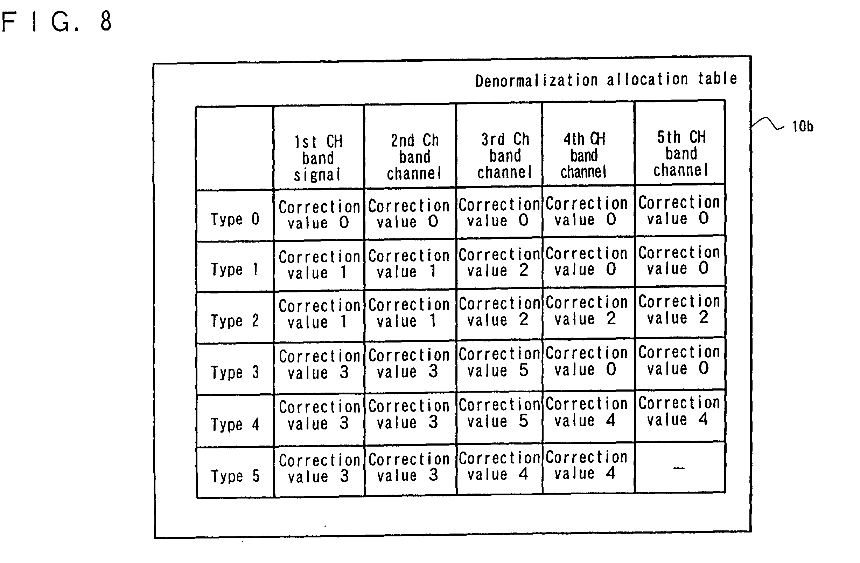

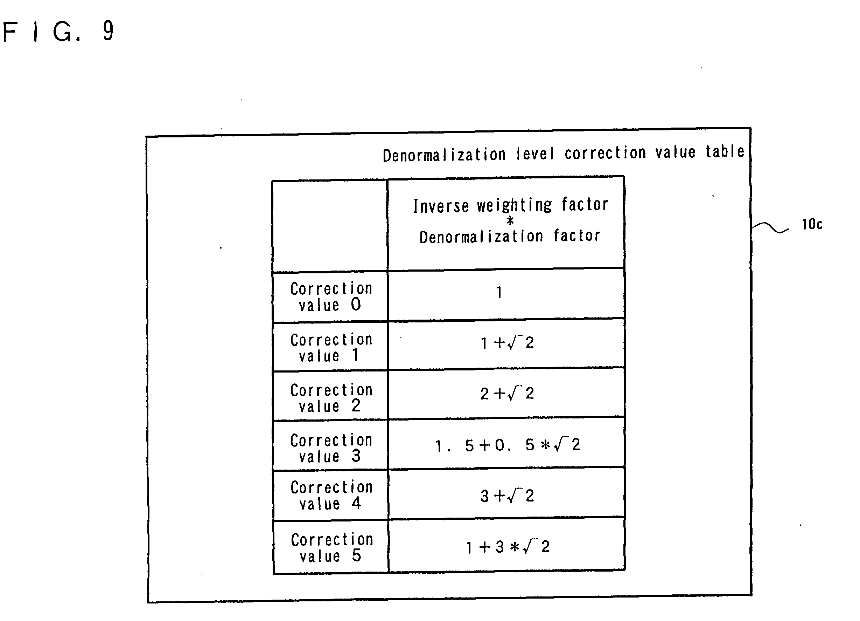

FIG. 7 is an explanatory diagram showing a detailed structure of the denormalization type instruction table shown in FIG. 2. FIG. 8 is an explanatory diagram showing a detailed data structure of the denormalization allocation table shown in FIG. 2, and FIG. 9 is an explanatory diagram showing a detailed data structure of the denormalization level correction value table shown in FIG. 2.

As shown in FIG. 7, the denormalization type instruction table 10a presents denormalization type numbers classified according to the full channel configuration information and the dematrix procedure information. By the denormalization type instruction table 10a, one of the type numbers 0 to 5 is specified based on the full channel configuration information and the dematrix procedure information supplied from the auxiliary information analyzing section 2.

As shown in FIG. 8, the denormalization allocation table 10b shows the relationship between the denormalization type number and the denormalization correction value data number to be assigned to the band signal of each output channel. By the denormalization allocation table 10b, one of the denormalization correction value data numbers 0 to 5 is specified by the denormalization type number.

As shown in FIG. 9, the denormalization level correction value table 10c is a table used to convert the denormalization correction value data numbers to the denormalization level correction values (sound level data) used in the actual denormalization process.

By using the above-mentioned denormalization instruction table 10, in the case that the full channel configuration information is 3/2 (the first to fifth channels correspond to Lch, Rch, Cch, LSch, and RSch, respectively), and in the case that the dematrix procedure information is 2, for example, the decoding control section 3 (FIG. 1) obtains the denormalization type number 2 from the denormalization type instruction table 10a. After that, the decoding control section 3 acquires from the denormalization allocation table 10b the denormalization correction value data numbers 1, 1, 2, 2, and 2 respectively assigned to the band signals of the first to fifth channels. Further, the decoding control section 3 obtains from the denormalization level correction value table 10c the denormalization level correction values of $1+\sqrt{2}$, $1+\sqrt{2}$, $2+\sqrt{2}$, $2+\sqrt{2}$, and $2+\sqrt{2}$ respectively for the band signals of the first to fifth channels.

[Structure of the PCM Data Write Area]

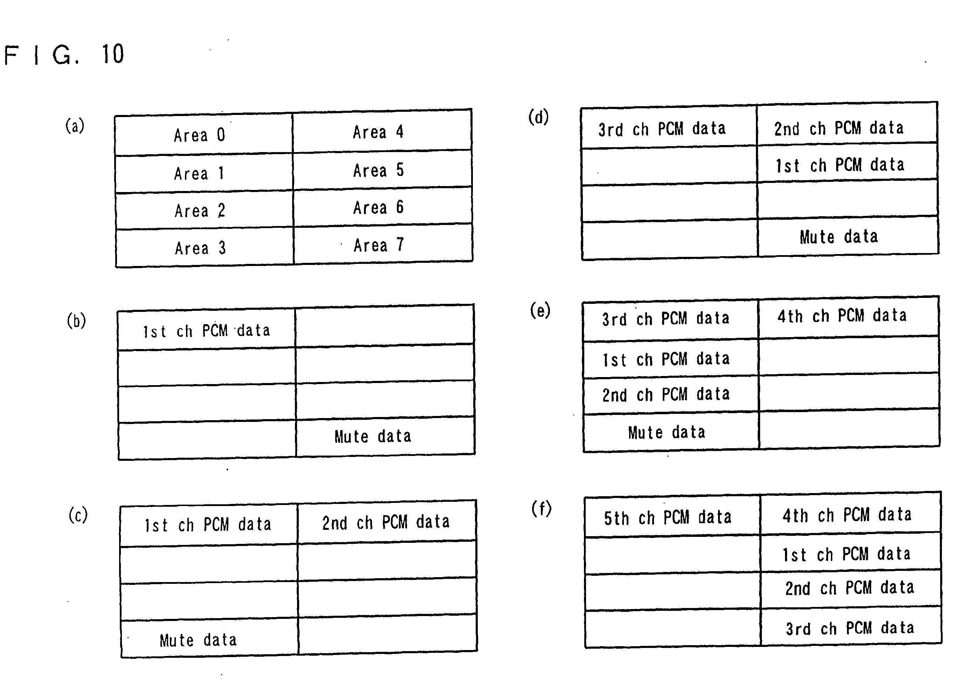

FIG. 10 is a diagram showing a detailed structure of the PCM data write area shown in FIG. 1.

As shown in part (a) of FIG. 10, the PCM data write area 6a comprises eight equal areas 0 to 7, each capable of storing the PCM data representing the result of the band synthesis for one channel. As previously described, the mute data creator 4h (FIG. 1) creates the mute data when the number of output channels after the band synthesis is four or less. The mute data creator 4h writes the mute data to area 7 when the channel number information indicates one or three channels, and to area 3 when it indicates two or four channels.

More specifically, as shown in part (b) of FIG. 10, when the number of output channels is 1, the PCM data of the first channel is written to area 0, and the mute data is written to area 7 after completion of the band synthesis.

As shown in part (c) of FIG. 10, when the number of output channels is 2, the PCM data of the first and second channels are written to area 0 and area 4, respectively, and the mute data is written to area 3 after completion of the band synthesis.

As shown in part (d) of FIG. 10, when the number of output channels is 3, the PCM data of the first, second, and third channels are written to area 5, area 4, and area 0, respectively, and the mute data is written to area 7 after completion of the band synthesis.

As shown in part (e) of FIG. 10, when the number of output channels is 4, the PCM data of the first, second, third, and fourth channels are written to area 1, area 2, area 0, and area 4, respectively, and the mute data is written to area 3 after completion of the band synthesis.

As shown in part (f) of FIG. 10, when the number of output channels is 5, the PCM data of the first, second, third, fourth, and fifth channels are written to area 5, area 6, area 7, area 4, and area 0, respectively. In this case, the mute data creator 4h does not create the mute data, so that no mute data is written to the PCM data write area 6a.

[Structure of the Interleave Pattern Table]

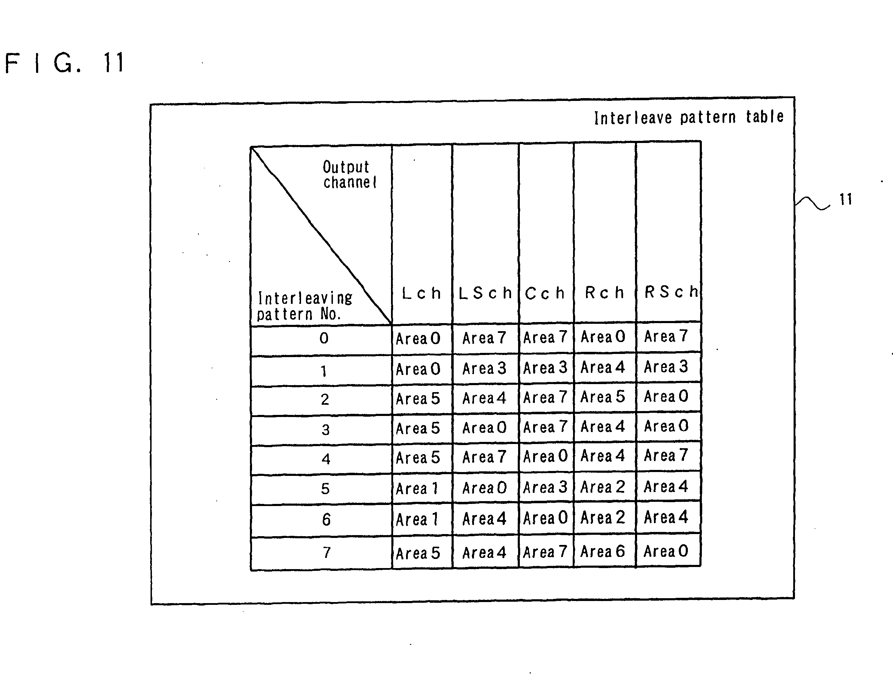

FIG. 11 is an explanatory diagram showing a detailed data structure of the interleave pattern table shown in FIG. 2.

As shown in FIG. 11, the interleave pattern table 11 is a table which defines the correspondence between the interleaving pattern number, preassigned as the interleave instruction information as shown in the decoding control information instruction table 8b (FIG. 4), and the arrangement of the PCM data of the respective channels sequenced in a predetermined order (Lch, LSch, Cch, Rch, and RSch) for the interleaving process. In each of areas 0 to 7 in the interleave pattern table 11 is written PCM location information which is an encoded representation of the starting address of the area, that is, the starting address of the PCM data stored in that area. For example, in the case that the full channel configuration information is 2/1 (the first to third channels correspond to Lch, Rch, and Sch, respectively), a value of 3 is obtained as the interleave instruction information from the decoding control information instruction table 8b shown in FIG. 4 regardless of the value of the dematrix procedure information. Accordingly, the interleaving pattern number 3 is specified, and by reference to the interleave pattern table 11 shown in FIG. 11, the PCM data stored in area 5, area 0, area 7, area 4, and area 0 in the PCM data write area 6a are assigned as the output data for the output channels Lch, LSch, Cch, Rch, and RSch, respectively. In the actual band synthesizing operation in the band synthesizer 4d, the first channel is Lch, the second channel is Rch, and the third channel is Sch, and when matched against the PCM data write area 6a for three channel decoding shown in part (d) of FIG. 10, it can be seen that the actual interleaving process is performed in the order of Lch, Sch, mute data, Rch, and Sch.

[Operation of the Decoding Apparatus]

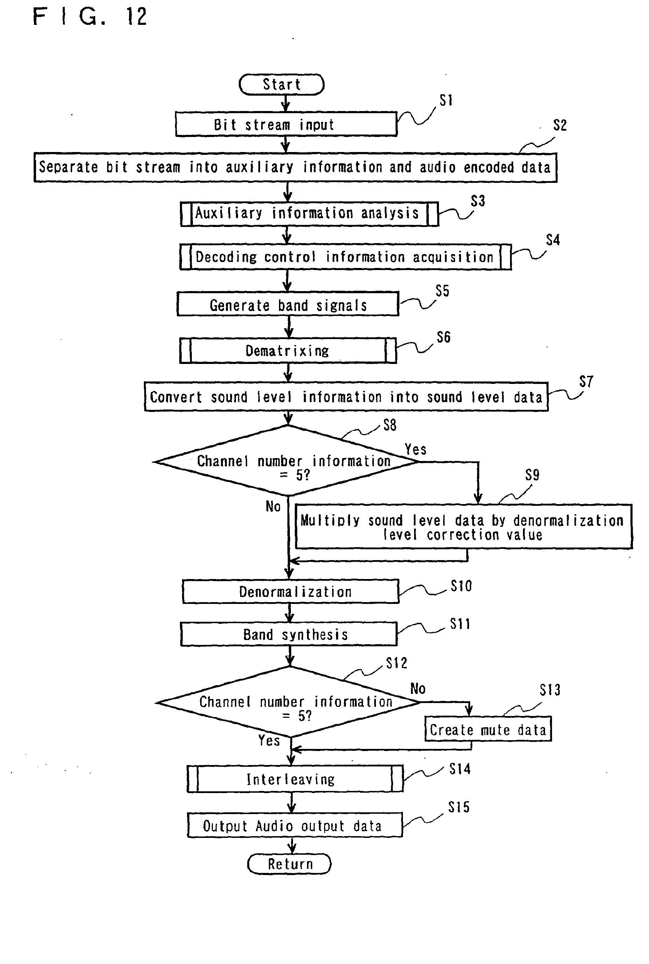

Operation of the decoding apparatus of the present embodiment will be described below with reference to FIGs. 12 to 16.

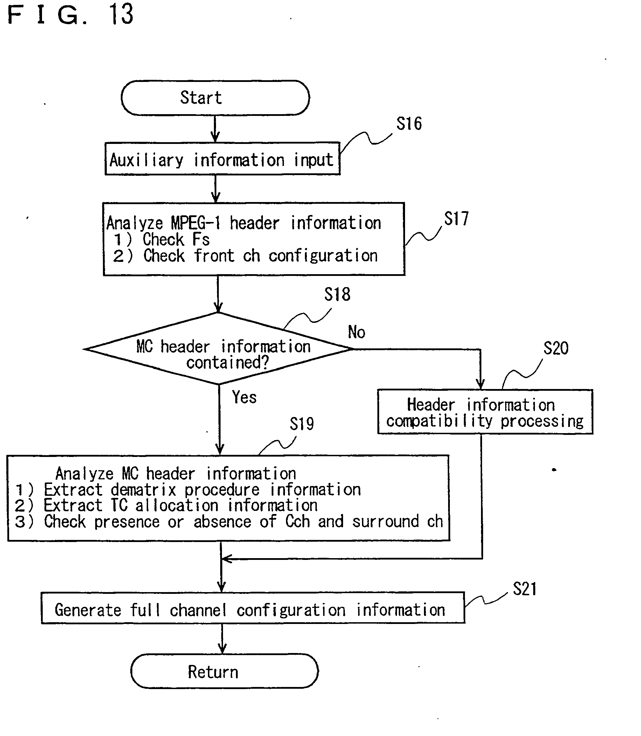

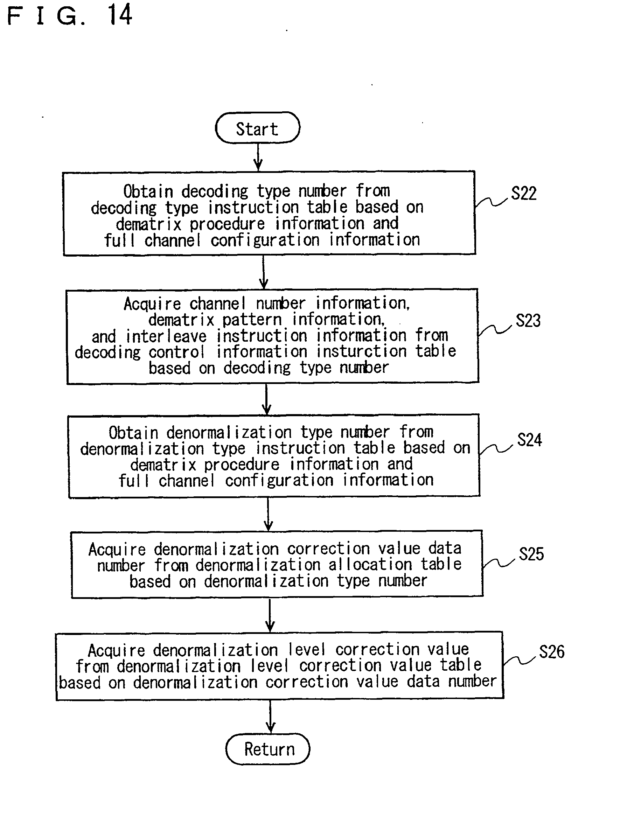

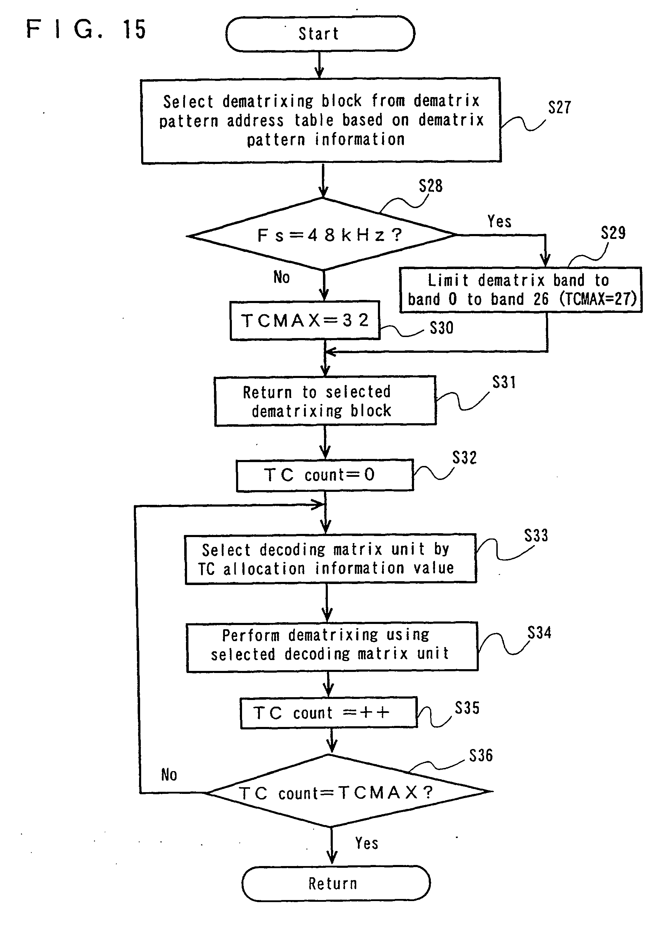

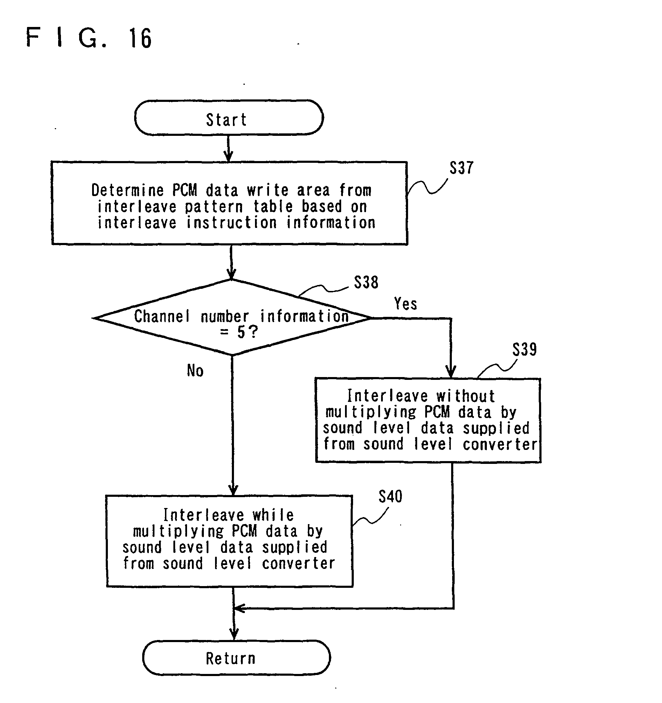

FIG. 12 is a flow chart showing a basic operation of the decoding apparatus shown in FIG. 1. FIG. 13 is a flow chart showing a detailed operation in step S3 shown in FIG. 12, and FIG. 14 is a flow chart showing a detailed operation in step S4 shown in FIG. 12. FIG. 15 is a flow chart showing a detailed operation in step S6 shown in FIG. 12, and FIG. 16 is a flow chart showing a detailed operation in step S14 shown in FIG. 12.

In FIG. 12, when a bit stream of the MPEG-2 multichannel signal is input to the stream input section 1 (FIG. 1) (step S1), the stream input section 1 separates the input bit stream into the auxiliary information and the audio encoded data (step S2). The stream input section 1 then supplies the auxiliary information to the auxiliary information analyzing section 2 (FIG. 1) and the audio encoded data to the decoding section 4 (FIG. 1).

Next, the auxiliary information analyzing section 2 analyzes the auxiliary information input from the stream input section 1 (step S3), and supplies the result of the analysis to the decoding control section 3 (FIG. 1) and the storage section 6 (FIG. 1).

To describe in detail, as shown in FIG. 13, when the auxiliary information analyzing section 2 input the auxiliary information from the stream input section 1 (step S16), first the MPEG-1 header analyzer 2a (FIG. 1) analyzes the MPEG-1 audio header information (step S17). More specifically, the MPEG-1 header analyzer 2a checks whether the Fs information (sampling frequency) is 48 kHz, and whether the output front channel configuration is monaural (one channel) or stereo (two channels).

Then, the MC header analyzer 2b (FIG. 1) checks whether the MC header information is contained or not (step S18); when the MC header information is contained, the MC header analyzer 2b analyzes the information (step S19). More specifically, the MC header analyzer 2b extracts the dematrix procedure information and the TC allocation information. Further, the MC header analyzer 2b checks the presence or absence of the front center channel and also the surround channel configuration, namely, the rear channel configuration or the presence or absence of second stereo channels. The MC header analyzer 2b generates the full channel configuration information by combining the result of the analysis with the front channel configuration information obtained by the MPEG-1 header analyzer 2a (step S21).

On the other hand, when there is no MC header information, the header information compatibility corrector 2c (FIG. 1) performs processing for header information compatibility (step S20). More specifically, the header information compatibility corrector 2c determines the number of front channels from the result of the analysis obtained from the MPEG-1 header analyzer 2a. Further, the header information compatibility corrector 2c generates the full channel configuration information and the dematrix procedure information by assuming that the front center channel and the rear channels or the second stereo channels do not exist.

In the decoding apparatus of the present embodiment, it is determined, through the above-described operation of the auxiliary information analyzing section 2, that the dematrix procedure information is "2", and that the full channel configuration information is "3/1", and TC(1) to TC(31) are obtained as the TC allocation information for each band. Each of TC(0) to TC(31) is assigned one of the TC allocation information values 0 to 5; to make the explanation more concrete, the present embodiment assumes that TC(0) = 3 and TC(1) = 5.

Turning back to FIG. 12, the decoding control section 3 acquires the decoding control information by searching through the parameter ROM 5 (FIG. 1) based on the dematrix procedure information "2" and the full channel configuration information "3/1" supplied as the result of the analysis from the auxiliary information analyzing section 2 (step S4).

To describe in detail, as shown in FIG. 14, the decoding control section 3 obtains the decoding type number "10" from the decoding type instruction table 8a (FIG. 3) based on the dematrix procedure information "2" and the full channel configuration information "3/1" (step S22). After that, the decoding control section 3 acquires the channel number information "4ch", the dematrix pattern information "5", and the interleave instruction information "6" from the decoding control information instruction table 8b (FIG. 4) based on the obtained decoding type number "10" (step S23). The acquired channel number information "4ch", the dematrix pattern information "5", and the interleave instruction information "6" are reported as instructions to the decoding section 4 from the channel number notifying unit 3c (FIG. 1), the dematrix instruction unit 3a, and the interleave instruction unit 3d (FIG. 1), respectively.

Next, the decoding control section 3 obtains the denormalization type number "2" from the denormalization type instruction table 10a (FIG. 7) based on the full channel configuration information "3/1" and the dematrix procedure information "2" (step S24). After that, the decoding control section 3 acquires the denormalization correction value data numbers for the respective output channels from the denormalization allocation table 10b (FIG. 8) based on the obtained denormalization type number "2" (step S25). More specifically, the "correction value 1" is assigned to the band signals of the first and second channels, and the "correction value 2" to the band signals of the third to fifth channels.

Then, the decoding control section 3 acquires the denormalization level correction values from the denormalization level correction value table 10c (FIG. 9) based on the obtained denormalization correction value data numbers (step S26). More specifically, as the denormalization level correction values, "$1+\sqrt{2}$" is given to the band signals of the first and second channels, and "$2+\sqrt{2}$" to the band signals of the third to fifth channels. These denormalization level correction values are reported as instructions to the decoding section 4 from the denormalization instruction unit 3b (FIG. 1).

On the other hand, in the decoding section 4, as shown in FIG. 12, when the audio encoded data is input from the stream input section 1, first the band signal generator 4a (FIG. 1) generates the band signals for four channels, i.e., L0 (first channel), R0 (second channel), T2 (third channel), and T3 (fourth channel), from the input audio encoded data (step S5). Here, the band signals L0, R0, T2, and T3 are each comprised of 32 subbands, i.e., L0(0) to L0(31), R0(0) to R0(31), T2(0) to T2(31), and T3(0) to T3(31), respectively, the subbands in each band signal being arranged in increasing order of frequency. Further, since the input bit stream is the MPEG-2 audio Layer 2 multichannel signal with a sampling frequency of 48 kHz, bits are assigned to band 0 to band 26 in each channel (L0(0) to L0(26), R0(0) to R0 (26), T2(0) to T2(26), and T3(0) to T3(26)), while band 27 to band 31 in each channel (L0(27) to L0(31), R0(27) to R0 (31), T2(27) to T2(31), and T3(27) to T3(31)) are always muted.

Next, the dematrix processor 4b (FIG. 1) applies the dematrixing process to the band signals L0, R0, T2, and T3 on a band by band basis (step S6). By performing the dematrixing process, the four channel band signals L0, R0, T2, and T3 contained in the bit stream are converted into the band signals for the respective output channels, Lw (first channel), Rw (second channel), Cw (third channel), and Sw (fourth channel). These band signals Lw, Rw, Cw, and Sw each contain 32 subbands, i.e., Lw(0) to Lw(31), Rw(0) to Rw(31), Cw(0) to Cw(31), and Sw(0) to Sw(31), respectively.

Operation of the dematrixing process will be described in more detail with reference to FIG. 15.

As shown in FIG. 15, the dematrix processor 4b searches through the parameter ROM 5 based on the dematrix pattern information "5" supplied from the dematrix instruction unit 3a. The dematrix processor 4b selects from the dematrix pattern address table 9 (FIG. 5) the block that performs the dematrixing, namely, the dematrixing block 12e (FIG. 6) associated with the "3/1 dematrix procedure information: 2" (step S27).

Next, the dematrix band limiter 13 (FIG. 6) checks whether the Fs information (sampling frequency) is 48 kHz or not (step S28). In the case that the Fs information is 48 kHz, the dematrix band limiter 13 limits the bands to be dematrixed to band 0 to band 26 (maximum dematrix band count TCMAX = 27) (step S29). In the case that the Fs information is not 48 kHz, the dematrix band limiter 13 does not impose a limit on the number of bands and therefore sets TCMAX to 32 (step S30).

In the present embodiment, since the operation is described by dealing with the case where the MPEG-2 multichannel signal with the sampling frequency of 48 kHz is input, the dematrix band limiter 13 limits the dematrix bands to band 0 to band 26.

Next, in the dematrix processor 4b, the process returns to the selected dematrixing block 12e (step S31), and a TC count value for counting the number of band signals is set to 0 in order to perform the dematrixing process in sequence starting with the band signal of band 0 (step S32). After that, in the dematrixing block 12e, a decoding matrix unit is selected in accordance with the TC allocation information value specified for band 0 (step S33). Then, the dematrixing block 12e dematrixes band 0 using the selected decoding matrix unit (step S34).

Next, the dematrixing block 12e increments the TC count value by 1 (step S35), and checks whether the TC count value has reached TCMAX (step S36). When the TC count value has reached TCMAX, the dematrixing process is terminated; on the other hand, when the TC count value has not yet reached TCMAX, the process returns to step S33.

To described more specifically, since the "TC(0)=3" is assigned to the TC allocation information for band 0, as earlier described, the dematrixing block 12e selects the decoding matrix unit 12e3 in step S33. The decoding matrix unit 12e3 dematrixes the band signals L0(0), R0(0), T2(0), and T3(0) for the respective channels, and thus calculates the band signals Lw(0), Rw(0), Cw(0), and Sw(0) for the respective output channels.

Further, since the "TC(1)=5" is assigned to the TC allocation information for band 1, the dematrixing block 12e selects the decoding matrix unit 12e5 in step S33. The decoding matrix unit 12e5 dematrixes the band signals L0(1), R0(1), T2(1), and T3(1) for the respective channels, and thus calculates the band signals Lw(1), Rw(1), Cw(1), and Sw (1) for the respective output channels. The dematrixing process based on the obtained denormalization correction value data numbers is also applied to band 2 to band 26 in like manner.

On the other hand, since the bands to be dematrixed have been limited by the dematrix band limiter 13 to band 0 to band 26 in step S29, the dematrixing process is not applied to band 27 to band 31; therefore, in the band signal of each output channel, band 27 to band 31 are muted. Actually, in the MPEG-1 signal as well as in the MPEG-2 multichannel signal, no bits are assigned to band 27 to band 31. Therefore, even if the dematrixing process is not applied to band 27 to band 31, the sound quality does not degrade; rather, the amount of computation can be reduced correspondingly to achieve faster the dematrixing process.

Next, in the decoding section 4, after the dematrixing process has been completed, as shown in FIG. 12, the sound level converter 4f (FIG. 1) converts the sound level information for each output channel input via the channel balance setting interface 7 (FIG. 1) into sound level data (step S7).

After that, the classifying sound level multiplier 4g (FIG. 1) checks whether the channel number information reported from the channel number notifying unit 3c indicates five channels (step S8). When the channel number information indicates five channels, the classifying sound level multiplier 4g multiplies the sound level data, supplied from the sound level converter 4f by the denormalization level correction value supplied from the denormalization instruction unit 3b for each output channel (step S9). On the other hand, when the channel number information indicates less than five channels, the classifying sound level multiplier 4g does not multiply the sound level data by the denormalization level correction value.

Next, the denormalization processor 4c (FIG. 1) performs the inverse correction of the sound level by applying the denormalization process to the band signals Lw, Rw, Cw, and Sw for the respective output channels (step S10).

In the operational description of the present embodiment, the channel number information reported to the decoding section 4 from the channel number notifying unit 3c is "4ch", as earlier stated. Therefore, in step S9, the classifying sound level multiplier 4g does not multiply the sound level data supplied from the sound level converter 4f by the denormalization level correction value supplied from the denormalization instruction unit 3b for each output channel. Further, in step S10, the denormalization processor 4c performs the inverse correction of the sound level by using the denormalization level correction value supplied from the denormalization instruction unit 3b for each output channel.

Next, the band synthesizer 4d (FIG. 1) performs the band synthesis operation on the band signal of each output channel (step S11). Thereby, the PCM data for the respective output channels are generated, and the generated PCM data are written to the PCM data write area 6a (FIG. 1) in the storage section 6 (FIG. 1).

Then, the mute data creator 4h (FIG. 1) checks whether the channel number information reported from the channel number notifying unit 3c indicates five channels (step S12). When the channel number information indicates less than five channels, the mute data creator 4h creates the mute data (step S13), and writes it to the designated area in the PCM data write area 6a. On the other hand, when the channel number information indicates five channels, the mute data creator 4h does not create the mute data.

In the operational description of the present embodiment, since the channel number information is "4ch", the PCM data for the third channel, first channel, second channel, and fourth channel are written to area 0, area 1, area 2, and area 4, respectively, as shown in part (e) of FIG. 10. Then, after completion of the band synthesis, operation the mute data creator 4h writes the mute data to area 7. In the band synthesis operation in step S11, the band synthesizer 4d performs the band synthesis operation in the order of Lw, Rw, Cw, and Sw, that is, in the order of the first channel, second channel, third channel, and fourth channel.

Next, the interleaver 4e (FIG. 1) applies the interleaving process to the band synthesized and decoded PCM data of each output channel (step S14). Thereby, the audio output data is generated, and is output to the external device not shown (step S15).

Operation of the interleaving process will be described in further detail with reference to FIG. 16.

As shown in FIG. 16, the interleaver 4e distinguishes the PCM data write area 6a for the respective PCM data by referencing the interleave pattern table 11 (FIG. 11) based on the interleave instruction information from the interleave instruction unit 3d (step S37).

Next, the interleaver 4e checks whether the channel number information reported from the channel number notifying unit 3c indicates five channels (step S38). When the channel number information indicates five channels, the interleaver 4e performs the interleaving process with the classifying interleave sound level adjuster 4i (FIG. 1) not multiplying the PCM data by the sound level data supplied from the sound level converter 4f (step S39). On the other hand, when the channel number information indicates less than five channels, the interleaver 4e performs the interleaving process with the classifying interleave sound level adjuster 4i multiplying the PCM data by the sound level data supplied from the sound level converter 4f (step S40). In step S39 or S40, the interleaver 4e performs the interleaving process in the order of Lch, LSch, Cch, Rch, RSch, and LFEch, regardless of the channel configuration of the input bit stream, as previously stated.

In the operational description of the present embodiment, since the interleaver 4e has already obtained the interleave instruction information "6" from the interleave instruction unit 3d, the interleaver 4e can obtain the interleaving sequence from the interleave pattern table 11 without having to perform the complicated classifying process at this processing stage. That is, as can be seen from the interleave pattern table 11 shown in FIG. 11, the PCM data to be interleaved are the data stored in area 1, area 4, area 0, and area 2, followed by the LFE data in the order in which the interleaving process is carried out.

In the present embodiment, no specific definition is given about the presence or absence of LFEch, but the PCM data for LFEch is 0 (mute) when the LFEch does not exist. When the LFEch exists, its PCM data is written in sequence.

Further, at the stage of the channel number determination in step S38, the interleaver 4e has already obtained the channel number information "4ch" from the channel number notifying unit 3c. As a result, the sound level data for each output channel, which is supplied from the sound level converter 4f, is multiplied with the corresponding PCM data by the classifying interleave sound level adjuster 4i.

Also, the order of the PCM data of each output channel recorded in the PCM data write area 6a is the same as the time sequential order in each output channel. Therefore, once the starting address (PCM location information) of the PCM data in the PCM data write area 6a is determined, the order of the PCM data to be assigned within each area for the interleaving process can be easily determined.

For simplicity of explanation, in the decoding apparatus of the present embodiment, it is assumed that the PCM data or mute data stored in any one of areas 0 to 7 in the PCM data write area 6a consists of N samples. Thereafter, the PCM data are assigned and stored in the same time sequential order in each area. That is, the PCM data 0(1) to PCM data 0(N) are stored in area 0, the PCM data 1(1) to PCM data 1(N) are stored in area 1, and the PCM data 2(1) to PCM data 2(N) are stored in area 2. Similarly, the PCM data 3(1) to PCM data 3(N) are stored in area 3, the PCM data 4(1) to PCM data 4(N) are stored in area 4, and the PCM data 5(1) to PCM data 5(N) are stored in area 5. The PCM data 6(1) to PCM data 6(N) are stored in area 6, and the PCM data 7(1) to PCM data 7(N) are stored in area 7.

In the interleaving process in step S40, the PCM data 1(1) in area 1 is assigned as the first interleaving process. The PCM data 1(1) is multiplied by the sound level data for Lch (first channel) supplied from the sound level converter 4f, and then is arranged at the top of the sequence. After that, the PCM data 4(1) in area 4, the PCM data 0(1) in area 0, the PCM data 2(1) in area 2, and the PCM data 4(1) in area 4 are assigned in this order, and multiplied by the respective sound level data supplied from the sound level converter 4f. The multiplied PCM data then are arranged in the order stated, followed by the PCM data of LFEch.

The remaining PCM data for the respective channels and LFEch are processed up to the N-th PCM data in the same manner. The interleaved data thus generated by the interleaver 4e is output as the audio output data.

As described above, in the decoding apparatus of the present embodiment, the auxiliary information analyzing section 2 analyzes the auxiliary information contained in the input bit stream, and extracts the full channel configuration information and the dematrix procedure information. Then, the decoding control section 3 acquires the decoding control information stored in the parameter ROM 5 in accordance with the full channel configuration information and the dematrix procedure information supplied from the auxiliary information analyzing section 3. This enables the classifying processes at the respective decoding stages to be performed collectively by the decoding control section 3. As a result, in the decoding apparatus of the present embodiment, the decoding process in the decoding section 4 can be performed at faster speed and, at the same time, the circuit configuration can be reduced in size.

Furthermore, in the decoding apparatus of the present embodiment, by providing the header information compatibility corrector 2c in the auxiliary information analyzing section 2, it becomes possible to omit the operation for discriminating between the MPEG-1 signal and MPEG-2 multichannel signal at each subsequent decoding stage. Moreover, there is no need to provide separate decoding circuits for the MPEG-1 signal and MPEG-2 multichannel signal, respectively. Therefore, reduction in the cost of the decoding apparatus and increase in its processing speed can be easily accomplished.

The decoding control table 8 of the present embodiment consists of two tables, the decoding type instruction table 8a and the decoding control information instruction table 8b. Thus, by using two tables, it is possible to reduce the table size compared with the configuration where decoding instruction information is presented using a single table. That is, in the decoding control table 8 of the present embodiment, the same decoding type number can be assigned in the case that the decoding (decoding matrix) method to be used is the same even if the full channel configuration information or the dematrix procedure information differs. More specifically, in the configuration using only one table, the decoding instruction information would have to be classified into 48 types according to the type of decoding (12 types of the full channel configuration information × 4 types of the dematrix procedure information). On the other hand, in the present embodiment, in the case that the decoding method is the same, the same type number is assigned as shown in the decoding type instruction table 8a. Accordingly, the decoding instruction information can be classified into 16 types of 0 to 15 as shown in the decoding control information instruction table 8b. Since the table size of the decoding control table 8 is reduced as just described, the present embodiment achieves a reduction in the cost of the decoding apparatus.

Further, in the decoding apparatus of the present embodiment, the dematrix processor 4b is provided with the dematrix band limiter 13. Therefore, the bands to be dematrixed can be limited in number when the sampling frequency of the audio output data is the highest, i.e., 48 kHz. As a result, the amount of computation required in reproduction conditions imposing the heaviest computational burden can be reduced to achieve faster decoding.

In the decoding apparatus of the present embodiment, the dematrix processor 4b is provided with the dematrixing blocks 12a to 12g corresponding to the respective types of the dematrix pattern information. Furthermore, each of the dematrixing blocks 12a to 12g includes the decoding matrix units corresponding to the respective types of the TC allocation information. This allows sum of products operations to be omitted in the dematrixing process when the dematrix coefficient is 0, and the dematrixing can be performed at faster speed by reducing the amount of computation correspondingly.

Further, the interleave instruction information (FIG. 4) used in the present embodiment is the pattern number information that indicates each interleaving pattern by a number, not the address information that directly indicates the address of the PCM data of each output channel to be interleaved. The address of the PCM data to be interleaved can be obtained by acquiring the starting address (PCM location information) of the PCM data from the interleave pattern table 11, and by calculating (assigning) the addresses of all PCM data to be interleaved together. By the above-mentioned table construction, the same interleaving pattern number can be assigned in the case that the interleaving pattern is the same even if the decoding method differs. Thereby, in the interleave pattern table 11 of the present embodiment, it is possible to reduce the size of the parameter ROM compared with the configuration where the address information of the PCM data is presented using only one table.

In the decoding apparatus of the present embodiment, the mute data creator 4h is provided in the decoding section 4. With this configuration, in cases where the output channels after the band synthesis operation include empty channels which will not be decoded (for example, Cch, LSch, and RSch when the full channel configuration information is "2/0"), the mute data creator 4h creates the mute data for such empty channels and write the mute data to the PCM data write area 6a. As a result, in the decoding apparatus of the present embodiment, the same interleaving process can be applied regardless of the presence or absence of empty channels, and the classifying process for that part can be omitted, thus making it possible to reduce the size of circuitry. Further, the mute data creator 4h of the present embodiment creates the mute data only when the number of channels excluding LFEch is four, and does not create the mute data in the case of five channels. Accordingly, in the decoding apparatus of the present embodiment, since no mute data is created in the case of the five channel configuration which requires the largest amount of computation, it has little effect on the computing performance of the decoding apparatus, and does not involve an increase in the amount of computation.

Further, the denormalization instruction table 10 of the present embodiment comprises the denormalization type instruction table 10a, the denormalization allocation table 10b, and the denormalization level correction value table 10c. With this configuration, the same denormalization type number can be assigned even in the cse that the denormalization level correction values for the respective output channels are the same even if the decoding method differs. Thereby, in this embodiment, it is possible to reduce the size of the parameter ROM compared with the configuration where the denormalization level correction value is directly specified. Furthermore, in the denormalization instruction table 10 of the present embodiment, the denormalization level correction values are presented through the use of common values. That is, the denormalization allocation table 10b presents the denormalization level correction values by common values of the "correction values 0 to 5". If the denormalization level correction values were to be directly specified using the full channel configuration information and the dematrix procedure information, the denormalization instruction table would require a parameter ROM of the size about 30 to 40 times larger than that of the present embodiment. If the denormalization level correction values were to be directly presented in the denormalization allocation table without using common values, it would still require a parameter ROM of the size about five times larger than that of the present embodiment. The denormalization level correction value is the data that is directly multiplied with the band signal, and must be assigned correctly in accordance with the full channel configuration information and the dematrix procedure information in order to prevent sound quality degradation.

Further, the decoding apparatus of the present embodiment includes the channel balance setting interface 7 and the sound level converter 4f to convert the externally set sound level information into data representing the actual sound level for each output channel. In the decoding apparatus of the present embodiment, when the channel number information indicates "4ch" or fewer channels, the classifying interleave sound level adjuster 4i multiplies the PCM data of each output channel by the sound level data at the interleaving process. On the other hand, when the channel number information indicates "5ch", the classifying sound level multiplier 4g multiplies the sound level data with the denormalization level correction value indicated by the denormalization instruction unit 3b. When the channel number information indicates "5ch", the PCM data of each output channel and the PCM data subjected to the interleaving process are in a one-to-one relationship. Therefore, multiplication with the denormalization level correction value presents no problem. However, in the case of "4ch" or fewer channels, when the surround channel is a monophonic surround (Sch only), for example, Sch is assigned to LSch and RSch at the interleaving process. This leaves no choice but to multiply with the sound level data at the interleaving process. However, when multiplying with the sound level data in the interleaving process, since the multiplicand is the PCM data, the amount of computation becomes larger than when multiplying with the denormalization level correction value.

However, since the decoding apparatus of the present embodiment employs the configuration in which the multiplication with the denormalization level correction value is performed only in the case of "5ch" which requires the largest amount of computation, it will have little effect on the computing performance of the decoding apparatus.

«Embodiment 2»

[Configuration of the Parameter ROM]

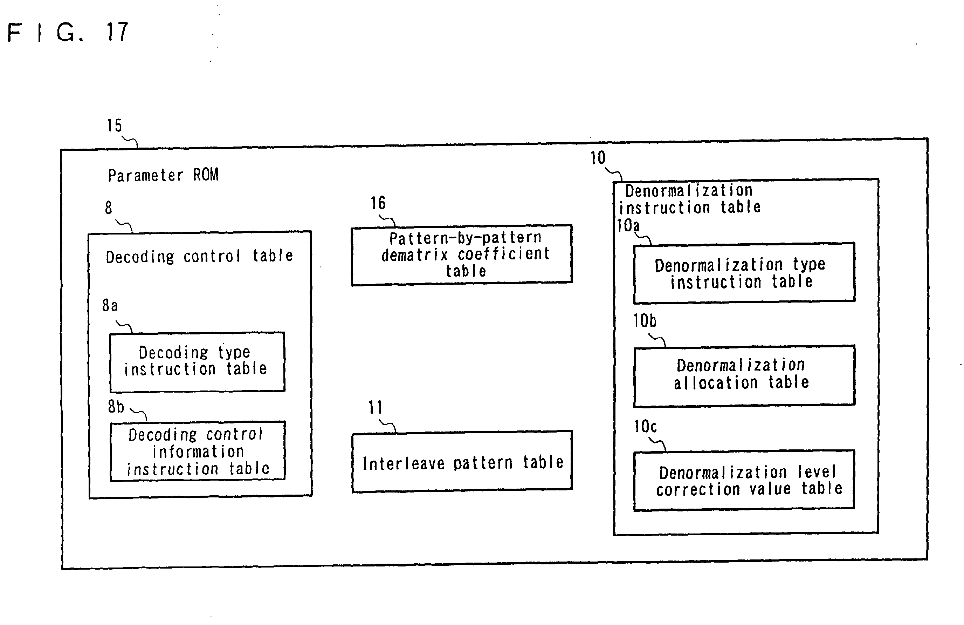

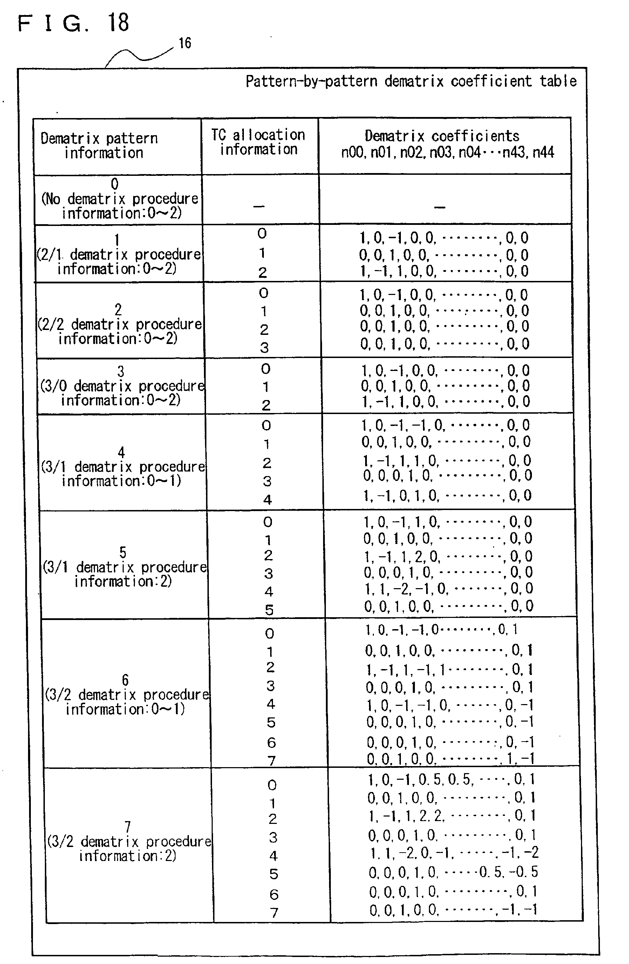

FIG. 17 is an explanatory diagram showing a table construction in the parameter ROM in a decoding apparatus according to a second embodiment of the present invention, and FIG. 18 is an explanatory diagram showing a detailed data structure of the pattern-by-pattern dematrix coefficient table in FIG. 17. In the present embodiment, the parameter ROM in the decoding apparatus contains therein the pattern-by-pattern dematrix coefficient table in which the dematrix coefficients to be used in the dematrixing process are stored as related to the dematrix pattern information and the TC allocation information. Further, a (5 × 5) general purpose dematrixing block for performing the dematrixing process using the dematrix coefficients is provided in the dematrix processor. In other respects, the configuration is the same as that of the first embodiment, and the explanation of the same parts as those described before will not be repeated herein.

As shown in FIG. 17, the parameter ROM 15 comprises the decoding control table 8, a pattern-by-pattern dematrix coefficient table 16, the denormalization instruction table 10, and the interleave pattern table 11. The decoding control table 8, the denormalization instruction table 10, and the interleave pattern table 11 each have the same data structure as that of the corresponding table shown in the first embodiment.

As shown in FIG. 18, the pattern-by-pattern dematrix coefficient table 16 presents dematrix coefficients classified according to the dematrix pattern information and the TC allocation information which is specified for each band. In the pattern-by-pattern dematrix coefficient table 16, twenty-five dematrix coefficients (n00 to n04, n10 to n14, n20 to n24, n30 to n34, and n40 to n44) are presented for each combination of the dematrix pattern information and the TC allocation information. Further, in the pattern-by-pattern dematrix coefficient table 16, as shown in FIG. 18, the dematrix coefficient data are arranged in the order of the dematrix pattern information. Furthermore, in the pattern-by-pattern dematrix coefficient table 16, the dematrix coefficient data for each dematrix pattern information are arranged in the order of the TC allocation information.

In order to facilitate explanation in the following description, in the pattern-by-pattern dematrix coefficient table 16, each group of the twenty-five coefficients classified according to the TC allocation information is taken as one set of data and its data size is denoted by "S". For each of the dematrix pattern information values 1 to 7, the address of the dematrix coefficient placed at the top (hereinafter called the starting address) is designated by PADR1, PADR2, PADR3, PADR4, PADR5, PADR6, or PADR7, respectively. For each dematrix pattern information value, the dematrix coefficients are arranged in the order of the TC allocation information. For example, PADR5 indicates the address of the dematrix coefficient n00 when the dematrix pattern information is "5", and when the TC allocation information is "0". Therefore, when actually extracting a dematrix coefficient from the pattern-by-pattern dematrix coefficient table 16, the dematrix coefficient can be assigned by adding a difference value (TCADR) to the starting address (PADR) of the specified dematrix pattern information. The difference value (TCADR) is obtained by multiplying the specified TC allocation information by "S". For example, when the dematrix pattern information is "5", the TC allocation information is "2", and the address of the dematrix coefficient to be found is "ADR", then "ADR" can be calculated from the below-mentioned equation (1).

$$\text{ADR} = \text{PADR5} + \text{TCADR} \; (= 2*S) \; \dots \; (1)$$

[Configuration of the Dematrix Processor]

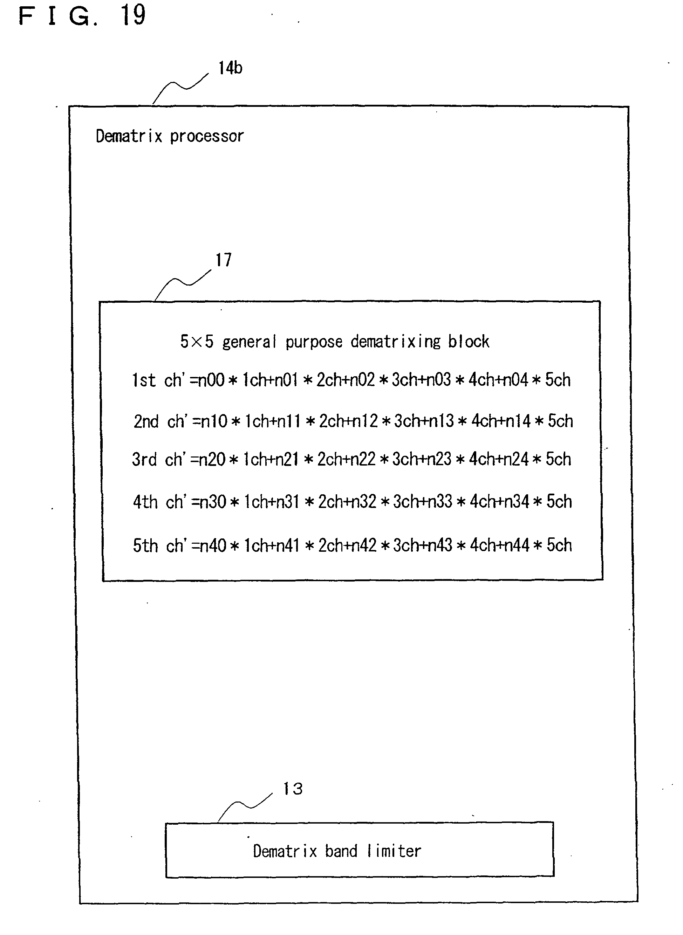

FIG. 19 is a block diagram showing a detailed configuration of the dematrix processor in the decoding apparatus according to the second embodiment of the present invention.

As shown in FIG. 19, the dematrix processor 14b of the present embodiment comprises the (5 × 5) general purpose dematrixing block 17 and the dematrix band limiter 13.

The (5 × 5) general purpose dematrixing block 17 is constructed by combining the seven dematrixing blocks 12a to 12g each having a plurality of the decoding matrix units in the first embodiment into one common block. The (5

$\times$ 5) general purpose dematrixing block 17 performs the dematrixing process using the dematrix coefficients retrieved from the pattern-by-pattern dematrix coefficient table 16. More specifically, as shown in FIG. 19, the (5 $\times$ 5) general purpose dematrixing block 17 multiplies the band signal data each of the first to fifth channels by the dematrix coefficients (n00 to n04, n10 to n14, n20 to n24, n30 to n34, and n40 to n44) retrieved from the pattern-by-pattern dematrix coefficient table 16. The (5 $\times$ 5) general purpose dematrixing block 17 calculates the dematrixed band signals each of the first to fifth channels. When the (5 $\times$ 5) general purpose dematrixing block 17 is used, sum of products operations become necessary even when the dematrix coefficient is 0, and the amount of computation increases compared with the configuration of the first embodiment. In the (5 $\times$ 5) general purpose dematrixing block 17, however, the dematrix coefficients are varied according to the specified dematrix pattern information and the TC allocation information. This allows the shared use of the (5 $\times$ 5) general purpose dematrixing block 17, achieving a drastic reduction in the amount of circuitry compared with the configuration of the first embodiment in which the dematrixing blocks are provided individually.

The dematrix band limiter 13 is identical to that used in the first embodiment. That is, when the Fs information of the input bit stream, namely, the sampling frequency, is 48 kHz, the dematrix band limiter 13 limits the dematrix bands to band 0 to band 26 in the band signal of each channel.

[Operation of the Decoding Apparatus]

Operation of the decoding apparatus of the present embodiment will be described in detail below.

In the decoding apparatus of the present embodiment, when the bit stream of the MPEG-2 multichannel signal is input to the stream input section 1 (FIG. 1), the stream input section 1 separates the input bit stream into the auxiliary information and audio encoded data as previously shown in steps S1 and S2 in FIG. 12. Then, the stream input section 1 supplies the auxiliary information to the auxiliary information analyzing section 2 (FIG. 1) and the audio encoded data to the decoding section 4 (FIG. 1). Thereafter, as previously shown in step S3 in FIG. 12, the auxiliary information analyzing section 2 analyzes the auxiliary information input from the stream input section 1, and supplies the result of the analysis to the decoding control section 3 (FIG. 1) and the storage section 6 (FIG. 1). To make the explanation more concrete, in the decoding apparatus of the present embodiment it is assumed that the Fs information "48 kHz", the channel number information "5ch", the full channel configuration information "3/2 (the first to fifth channels correspond to Lch, Rch, Cch, LSch, and RSch, respectively)", and the dematrix procedure information "2" have been obtained as the result of the analysis by the auxiliary information analyzing section 2. It is further assumed that TC(0)=3 and TC(1) = 5, for example, have been assigned as the TC allocation information values for band 0 and band 1, respectively, as in the first embodiment.

Next, as previously shown in step S4 in FIG. 12, the decoding control section 3 (FIG. 1) acquires the decoding control information by searching through the parameter ROM 15 based on the full channel configuration information and the dematrix procedure information supplied from the auxiliary information analyzing section 2. More specifically, the decoding control section 3 selects the decoding type number "13" from the decoding type instruction table 8a shown in FIG. 3 in accordance with the full channel configuration information "3/2" and the dematrix procedure information "2". Further, the decoding control section 3 obtains the channel number information "5ch", the dematrix pattern information "7", and the interleave instruction information "7" from the decoding control information instruction table 8b shown in FIG. 4. The obtained channel number information "5ch", the dematrix pattern information "7", and the interleave instruction information "7" are sent as instructions to the decoding section 4 from the channel number notifying unit 3c (FIG. 1), the dematrix instruction unit 3a, and the interleave instruction unit 3d (FIG. 1), respectively.

Next, the decoding control section 3 obtains the denormalization type number "2" from the denormalization instruction table 10a shown in FIG. 7, in accordance with the full channel configuration information "3/2" and the dematrix procedure information "2". After that, the decoding control section 3 acquires the denormalization correction value data numbers for the respective output channels from the denormalization allocation table 10b shown in FIG. 8 based on the thus obtained denormalization type number "2". More specifically, the "correction value 1" is assigned to the band signals of the first and second channels, and the "correction value 2" is assigned to the band signals of the third to fifth channels.

Then, the decoding control section 3 acquires the denormalization level correction values from the denormalization level correction value table 10c (FIG. 9) based on the obtained denormalization correction value data numbers (step S26). More specifically, as the denormalization level correction values, "$1+\sqrt{2}$" is given to the band signals of the first and second channels and "$2+\sqrt{2}$" to the band signals of the third to fifth channels. These denormalization level correction values are reported as instructions to the decoding section 4 from the denormalization instruction unit 3b (FIG. 1).

On the other hand, in the decoding section 4, as previously shown in step S5 in FIG. 12, when the audio encoded data is input from the stream input section 1, first the band signal generator 4a (FIG. 1) generates band signals for five channels, namely, L0 (first channel), R0 (second channel), T2 (third channel), T3 (fourth channel), and T4 (fifth channel), from the input audio encoded data. Here, the band signals L0, R0, T2, T3, and T4 are each comprised of 32 subbands, i.e., L0(0) to L0(31), R0(0) to R0(31), T2(0) to T2(31), T3(0) to T3(31), and T4(0) to T4(31), respectively, the subbands in each band signal being arranged in increasing order of frequency. Further, the input bit stream is the MPEG-2 audio Layer 2 multichannel signal with the sampling frequency of 48 kHz. Therefore, bits are assigned to band 0 to band 26 in each channel (L0(0) to L0(26), R0(0) to R0(26), T2(0) to T2(26), T3(0) to T3(26), and T4(0) to T4(26)), while band 27 to band 31 in each channel (L0(27) to L0(31), R0(27) to R0(31), T2(27) to T2(31), T3(27) to T3(31), and T4(27) to T4(31)) are always muted.

Next, the dematrix processor 14b (FIG. 19) applies the dematrixing process to the band signals L0, R0, T2, T3, and T4 on a band by band basis as previously shown in step S6 in FIG. 12. By performing the dematrixing process, the five channel band signals L0, R0, T2, T3, and T4 contained in the bit stream are converted into the band signals for the respective output channels, Lw (first channel), Rw (second channel), Cw (third channel), LSw (fourth channel), and Rsw (fifth channel). These band signals Lw, Rw, Cw, LSw, and Rsw each contain 32 subbands, i.e., Lw(0) to Lw(31), Rw(0) to Rw(31), Cw(0) to Cw(31), LSw(0) to LSw(31), and RSw(0) to RSw(31), respectively.

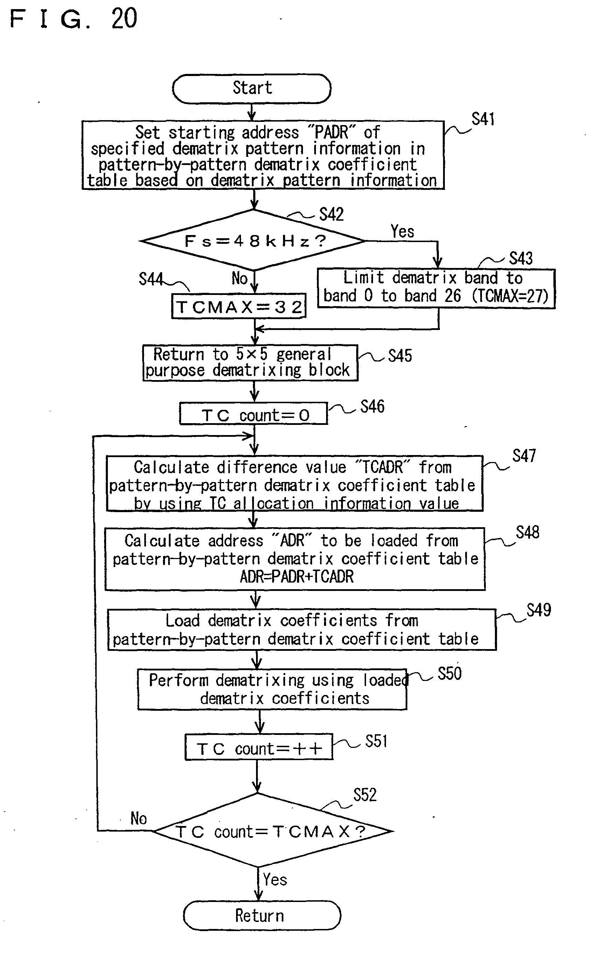

Operation of the dematrixing process will be described in more detail with reference to FIG. 20.

FIG. 20 is a flow chart showing an operation of the dematrix processor shown in FIG. 19.

As shown in FIG. 20, the dematrix processor 14b searches through the parameter ROM 15 based on the dematrix pattern information supplied from the dematrix instruction unit 3a. The dematrix processor 14b obtains the starting address "ADR7" of the specified dematrix pattern information in the pattern-by-pattern dematrix coefficient table 16 (FIG. 18). The dematrix processor 14b sets obtained starting address "ADR7" in the (5 × 5) general purpose dematrixing block 17 (FIG. 19) (step S41).

Next, the dematrix band limiter 13 (FIG. 19) checks whether the Fs information (sampling frequency) is 48 kHz or not (step S42). When the Fs information is 48 kHz, the dematrix band limiter 13 limits the dematrix bands to band 0 to band 26 (maximum dematrix band count TCMAX = 27) (step S43). When the Fs information is not 48 kHz, the dematrix band limiter 13 does not impose a limit on the number of bands and therefore sets the TCMAX to 32 (step S44).

In the present embodiment, since the operation is described by dealing with the case where the MPEG-2 multichannel signal is input, the dematrix band limiter 13 limits the dematrix bands to band 0 to band 26.

Next, in the dematrix processor 14b, the process returns to the (5 × 5) general purpose dematrixing block 17 (step S45), and the TC count value for counting the number of band signals is set to 0 in order to perform the dematrixing process in sequence starting with the band signal of band 0 (step S46). After that, the (5 × 5) general purpose dematrixing block 17 calculates the difference value "TCADR" from the pattern-by-pattern dematrix coefficient table 16 by using the value of the TC allocation information specified for band 0 (step S47).

Next, the (5 × 5) general purpose dematrixing block 17 calculates the address "ADR" of the dematrix coefficient to be loaded from the pattern-by-pattern dematrix coefficient table 16 (step S48). After that, the (5 × 5) general purpose dematrixing block 17 loads the dematrix coefficient from the pattern-by-pattern dematrix coefficient table 16 by using the calculated address "ADR" (step S49).

The (5 × 5) general purpose dematrixing block 17 applies dematrixing to band 0 by using the loaded dematrix coefficient (step S50).

The (5 × 5) general purpose dematrixing block 17 increments the TC count value by 1 (step S51), and checks whether the TC count value has reached TCMAX (step S52). When the TC count value has reached TCMAX, the dematrixing process is terminated; when the TC count value has not yet reached TCMAX, the process returns to step S47.

To describe more specifically, "TC(0)=3" is assigned to the TC allocation information for band 0, as earlier described. Accordingly, the address "ADR" of each dematrix coefficient that the (5 × 5) general purpose dematrixing block 17 loads from the pattern-by-pattern dematrix coefficient table 16 in step S48 is given as "PADR7 + 3*S". The (5 × 5) general purpose dematrixing block 17 performs dematrixing in step S50 by using the loaded dematrix coefficients and the band signals L0(0), R0(0), T2(0), T3(0), and T4(0) for the respective channels, and thereby calculates Lw(0), Rw(0), Cw(0), LSw(0), and RSw(0).

Likewise, "TC(1)=5" is assigned to the TC allocation information for band 1. Accordingly, the address "ADR" of each dematrix coefficient that the (5 × 5) general purpose dematrixing block 17 loads from the pattern-by-pattern dematrix coefficient table 16 in step S48 is given as "PADR7 + 5*S". The (5 × 5) general purpose dematrixing block 17 performs the dematrixing process in step S50 by using the loaded dematrix coefficients and the band signals L0(1), R0(1), T2(1), T3(1), and T4(1) for the respective channels. Thereby, the band signals Lw(1), Rw(1), Cw(1), LSw(1), and RSw(1) for the respective output channels are calculated. Similarly, the dematrixing process is also applied to band 2 to band 26.

Since the dematrix band limiter 13 has limited the dematrix bands to band 0 to band 26 in step S43, the dematrixing process is not applied to band 27 to band 31, and band 27 to band 31 are muted in the band signals of the respective output channels. Actually, in the MPEG-1 signal and MPEG-2 multichannel signal, bits are not assigned to band 27 to band 31. As a result, even if the dematrixing process is not applied to band 27 to band 31, the sound quality does not degrade; rather, the amount of computation can be reduced correspondingly to achieve faster dematrixing process.

Next, in the decoding section 4, after the dematrixing process has been completed, as previously shown in step S7 in FIG. 12, the sound level converter 4f (FIG. 1) converts the sound level information for each output channel, input from the channel balance setting interface 7 (FIG. 1), into sound level data.

After that, as previously shown in step S8 in FIG. 12, the classifying sound level multiplier 4g (FIG. 1) checks whether the channel number information reported from the channel number notifying unit 3c indicates five channels. In the case that the channel number information indicates five channels, as previously shown in step S9 in FIG. 12, the classifying sound level multiplier 4g multiplies the sound level data supplied from the sound level converter 4f by the denormalization level correction value supplied from the denormalization instruction unit 3b for each output channel. On the other hand, in the cse that the channel number information indicates less than five channels, as previously shown in step S10 in FIG. 12, the classifying sound level multiplier 4g does not multiply the sound level data by the denormalization level correction value.

Next, the denormalization processor 4c (FIG. 1) performs the inverse correction of the sound level by applying the denormalization to the band signals Lw, Rw, Cw, LSw, and RSw for the respective output channels as previously shown in step S10 in FIG. 12.

In the operational description of the present embodiment, the channel number information reported to the decoding section 4 from the channel number notifying unit 3c is "5ch", as earlier stated. Therefore, in step S9, the classifying sound level multiplier 4g multiplies the sound level data, supplied from the sound level converter 4f, by the denormalization level correction value supplied from the denormalization instruction unit 3b for each output channel. The classifying sound level multiplier 4g supplies the result as the denormalization level correction value to the denormalization processor 4c. Then, the denormalization processor 4c performs the denormalization for the inverse correction of the sound level by using the denormalization level correction value supplied from the classifying sound level multiplier 4g for each output channel.

Next, the band synthesizer 4d (FIG. 1) performs the band synthesis operation on the band signal of each output channel as previously shown in step S11 in FIG. 12. Thereby, the PCM data for the respective output channels are generated, and the generated PCM data are written to the PCM data write area 6a (FIG. 1) in the storage section 6 (FIG. 1).

Then, as previously shown in step S12 in FIG. 12, the mute data creator 4h (FIG. 1) determines whether the channel number information reported from the channel number notifying unit 3c indicates five channels. In the case that the channel number information indicates less than five channels, the mute data creator 4h creates the mute data (step S13 in FIG. 12), and writes the mute data to the designated area in the PCM data write area 6a. On the other hand, in the case that the channel number information indicates five channels, the mute data creator 4h does not create the mute data.

In the operational description of the present embodiment, since the channel number information is "5ch", the PCM data for the fifth channel, fourth channel, first channel, second channel, and third channel are written to area 0, area 4, area 5, area 6, and area 7, respectively, as shown in part (f) of FIG. 10. In the band synthesis operation in step S11, the band synthesizer 4d performs the band synthesis operation in the order of Lw, Rw, Cw, LSw, and RSw, that is, in the order of the first channel, second channel, third channel, fourth channel, and fifth channel.

Next, the interleaver 4e (FIG. 1) applies the interleaving process to the band synthesized and decoded PCM data of each output channel as previously shown in step S14 in FIG. 12. Thereby, the audio output data is generated, and is output to the external device not shown (step S15 shown in FIG. 12).

Then, as previously shown in step S37 in FIG. 16, the interleaver 4e distinguishes the PCM data write area 6a for the respective PCM data by referencing the interleave pattern table 11 (FIG. 11) based on the interleave instruction information from the interleave instruction unit 3d.

Next, the interleaver 4e checks whether the channel number information reported from the channel number notifying unit 3c indicates five channels (step S38 in FIG. 16). In the case that the channel number information indicates five channels, the interleaver 4e performs the interleaving process with the classifying interleave sound level adjuster 4i (FIG. 1) not multiplying the PCM data by the sound level data supplied from the sound level converter 4f (step S39 in FIG. 16). On the other hand, in the case that the channel number information indicates less than five channels, the interleaver 4e performs the interleaving process with the classifying interleave sound level adjuster 4i multiplying the PCM data by the sound level data supplied from the sound level converter 4f (step S40 in FIG. 16).

In the operational description of the present embodiment, the interleaver 4e has already obtained the interleave instruction information "7" from the interleave instruction unit 3d. Therefore, the interleaver 4e can obtain the interleaving sequence from the interleave pattern table 11 without having to perform the complicated classifying process at this processing stage. That is, as can be seen from the interleave pattern table 11 shown in FIG. 11, the PCM data to be interleaved are the data stored in area 5, area 4, area 7, area 6, and area 0, followed by the LFE data in the order in which the interleaving process is carried out.

In the present embodiment, as in the first embodiment, no specific definition is given about the presence or absence of LFEch, but the PCM data for LFEch is 0 (mute) when the LFEch does not exist. When the LFEch exists, its PCM data is written in sequence.

Further, at the stage of the channel number determination in step S38, the interleaver 4e has already obtained the channel number information "5ch" from the channel number notifying unit 3c. Accordingly, the sound level data for each output channel supplied from the sound level converter 4f is not multiplied with the PCM data by the classifying interleave sound level adjuster 4i.

Also, the order of the PCM data of each output channel recorded in the PCM data write area 6a is the same as the time sequential order in each output channel. Therefore, once the starting address of the PCM data supplied from the band synthesizer 4d is determined, the order of the PCM data to be assigned within each area for interleaving can be easily determined.

In the decoding apparatus of the present embodiment, as in the first embodiment, it is assumed that PCM data or mute data stored in any one of areas 0 to 7 in the PCM data write area 6a consists of N samples. Thereafter, the PCM data are assigned and stored in the same time sequential order in each area. That is, the PCM data 0(1) to PCM data 0(N) are stored in area 0, the PCM data 1(1) to PCM data 1(N) are stored in area 1, and the PCM data 2(1) to PCM data 2(N) are stored in area 2. Similarly, the PCM data 3(1) to PCM data 3(N) are stored in area 3, the PCM data 4(1) to PCM data 4(N) are stored in area 4, and the PCM data 5(1) to PCM data 5(N) are stored in area 5. The PCM data 6(1) to PCM data 6(N) are stored in area 6, and the PCM data 7(1) to PCM data 7(N) are stored in area 7.

In the interleaving process in step S40, the PCM data 5(1) in area 5 is assigned as the first interleaving operation. The PCM data 5(1) is multiplied by the sound level data for Lch (first channel) supplied from the sound level converter 4f, and then is arranged at the top of the sequence. After that, the PCM data 4(1) in area 4, the PCM data 7(1) in area 7, the PCM data 6(1) in area 6, and the PCM data 0(1) in area 0 are assigned in this order. The assigned PCM data are multiplied by the respective sound level data supplied from the sound level converter 4f, and then are arranged in the order stated, followed by the PCM data of LFEch. The remaining PCM data for the respective channels and LFEch are processed in the same manner up to the N-th PCM data. The interleaved data thus generated by the interleaver 4e is output as the audio output data.

As described above, in the decoding apparatus of the present embodiment, the parameter ROM 15 contains therein the pattern-by-pattern dematrix coefficient table 16 in which the dematrix coefficients to be used in the dematrixing process are stored as related to the dematrix pattern information and the TC allocation information. Further, the dematrix processor 14b includes the $(5 \times 5)$ general purpose dematrixing block for performing the dematrixing process using the dematrix coefficients. With this configuration, the decoding apparatus of the present embodiment can simplify the configuration of the dematrix processor and drastically reduce the size of its circuitry, compared with the configuration of the first embodiment.

<<Embodiment 3>>

[Configuration of the Parameter ROM]

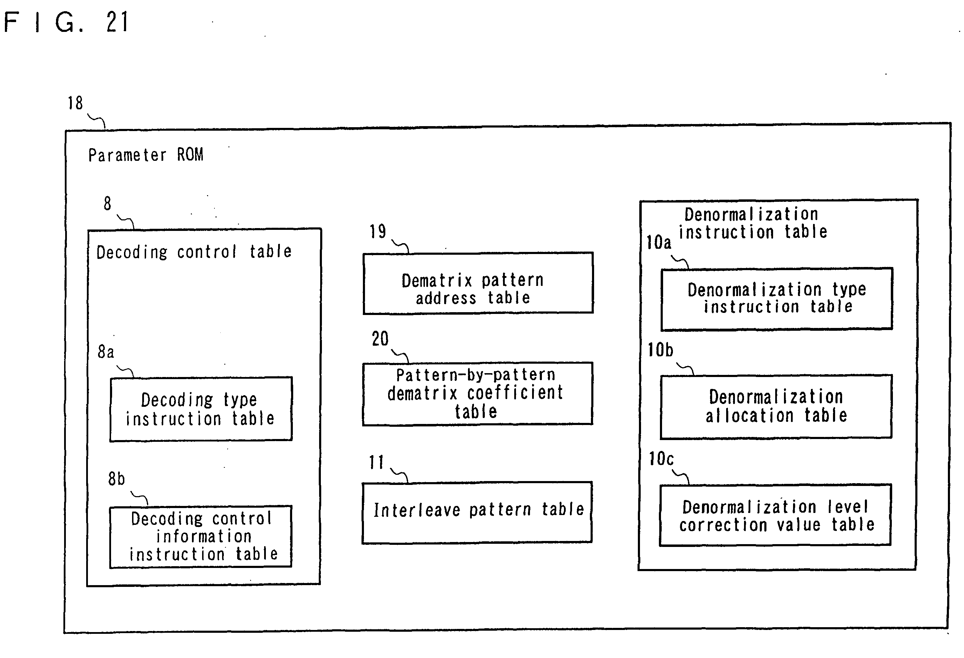

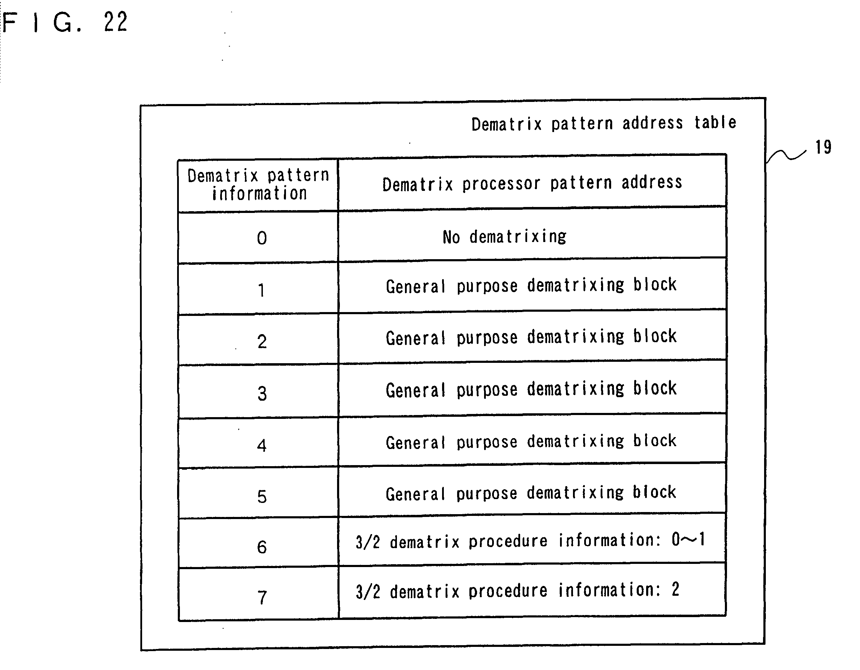

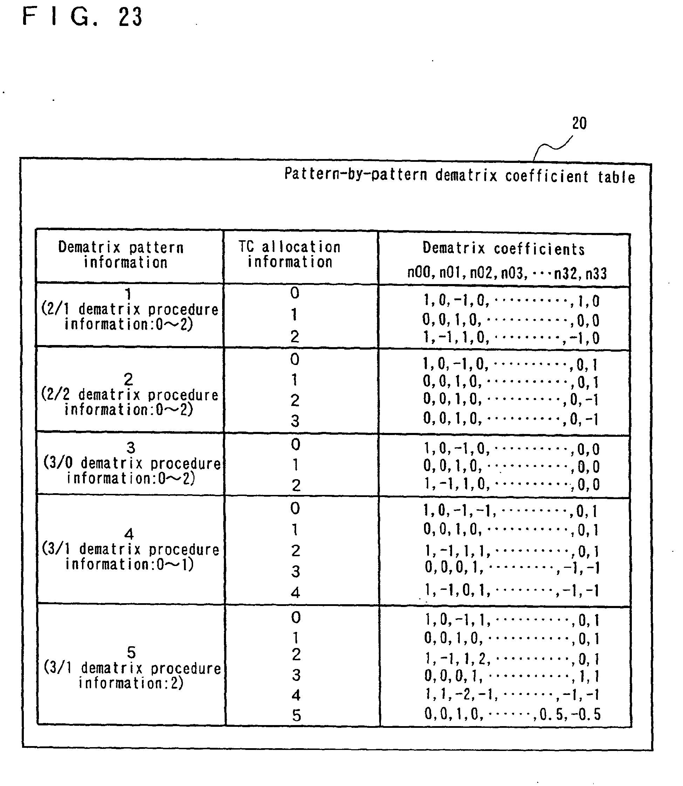

FIG. 21 is an explanatory diagram showing a table configuration in a parameter ROM in a decoding apparatus according to a third embodiment of the present invention. FIG. 22 is an explanatory diagram showing a detailed data structure of the dematrix pattern address table shown in FIG. 21, and FIG. 23 is an explanatory diagram showing a detailed data structure of the pattern-by-pattern dematrix coefficient table shown in FIG. 21. In the present embodiment, the parameter ROM in the decoding apparatus contains, in addition to the dematrix pattern address table, the pattern-by-pattern dematrix coefficient table in which the dematrix coefficients to be used in the dematrixing process for designated channels are stored as related to the dematrix pattern information and the TC allocation information. Further, in addition to individually provided dematrixing blocks, a general purpose dematrixing block for performing the dematrixing process using the dematrix coefficients is provided in the dematrix processor. In other respects, the configuration is the same as that of the first embodiment, and the explanation of the same parts as those described before will not be repeated herein.

As shown in FIG. 21, the parameter ROM 18 comprises the decoding control table 8, a dematrix pattern address table 19, a pattern-by-pattern dematrix coefficient table 20, the denormalization instruction table 10, and the interleave pattern table 11. The decoding control table 8, the denormalization instruction table 10, and the interleave pattern table 11 each have the same data structure as that of the corresponding table shown in the first embodiment.

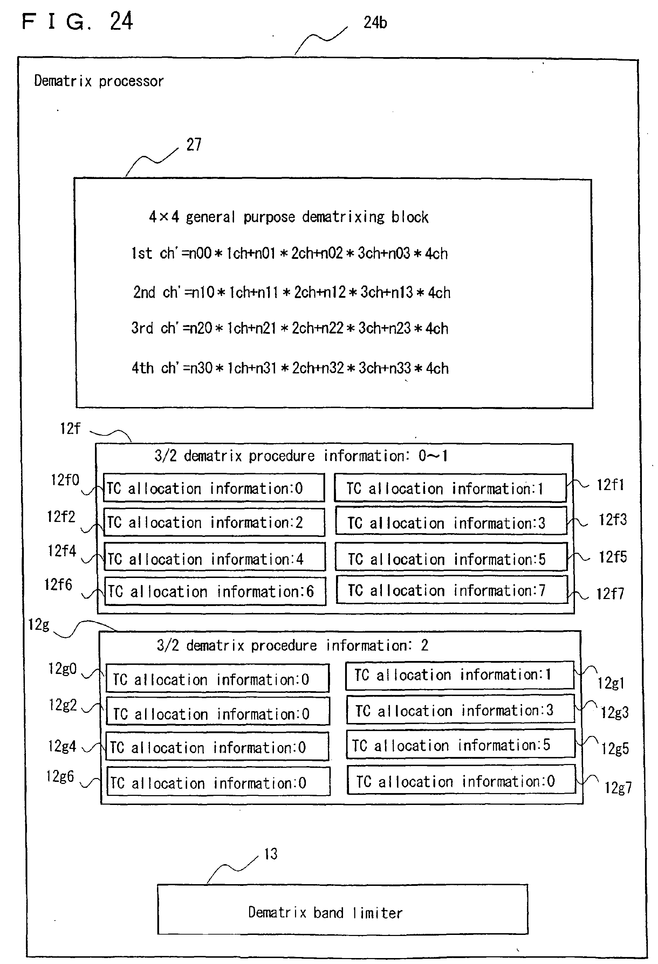

As shown in FIG. 22, the dematrix pattern address table 19 differs from the corresponding table in the first embodiment, in that a $(4 \times 4)$ dematrixing block 27 (FIG. 24) hereinafter described is specified when the dematrix pattern information is any one of 1 to 5. When the dematrix pattern information is 6 or 7, the dematrix pattern address table 19 specifies the individual dematrixing block 12f or 12g (FIG. 24), respectively, which is associated with the full channel configuration information of "3/2". In this way, the individual dematrixing block 12f or 12g is chosen to perform the dematrixing process only when the channel configuration is (3/2) which requires the largest amount of computation. Since the dematrixing blocks 12f and 12g perform the dematrixing process by omitting sum of products calculations for portions where the dematrix coefficient is 0, the amount of computation can be reduced correspondingly. In this manner, the amount of computation required for the dematrixing process can be reduced for the channel configuration that demands the largest amount of computation.

As shown in FIG. 23, when the dematrix pattern information is 1 to 5, the pattern-by-pattern dematrix coefficient table 20 shows the dematrix coefficients for each TC allocation information value specified for each band. In the pattern-by-pattern dematrix coefficient table 20, sixteen dematrix coefficients (n00 to n03, n10 to n13, n20 to n23, and n30 to n33,) are presented for each combination of the dematrix pattern information and the TC allocation information. Further, as shown in FIG. 23, in the pattern-by-pattern dematrix coefficient table 20, the dematrix coefficient data are arranged in the order of the dematrix pattern information, and the dematrix coefficient data for each dematrix pattern information are arranged in the order of the TC allocation information.

In order to facilitate explanation in the following description, in the pattern-by-pattern dematrix coefficient table 20, each group of the sixteen coefficients classified according to the TC allocation information is taken as one set of data and its data size is denoted by "S'". For each of the dematrix pattern information values 1 to 5, the address of the dematrix coefficient placed at the top (hereinafter called the starting address) is designated by PADR1', PADR2', PADR3', PADR4', or PADR5', respectively. For each dematrix pattern information, the dematrix coefficients are arranged in the order of the TC allocation information. For example, PADR5' indicates the address of the dematrix coefficient n00 when the dematrix pattern information is "5", and when the TC allocation information is "0". Therefore, when extracting a dematrix coefficient from the pattern-by-pattern dematrix coefficient table 20, the dematrix coefficient can be assigned by adding a difference value (TCADR') to the starting address (PADR') of the specified dematrix pattern information. The difference value (TCADR') is obtained by multiplying the TC allocation information by "S'". For example, when the dematrix pattern information is "5", the TC allocation information is "2", and the address of the dematrix coefficient to be found is "ADR", then "ADR'" can be calculated from the below-mentioned equation (2).

$$ADR' = PADR5' + TCADR' (= 2*S') \ldots (2)$$

[Configuration of the Dematrix Processor]

FIG. 24 is a block diagram showing a detailed configuration of the dematrix processor in the decoding apparatus according to the third embodiment of the present invention.

As shown in FIG. 24, the dematrix processor 24b of the present embodiment comprises the $(4 \times 4)$ general purpose dematrixing block 27, the dematrixing blocks 12f and the 12g, and the dematrix band limiter 13.

The $(4 \times 4)$ general purpose dematrixing block 27 is constructed by combining the five dematrixing blocks 12a to 12e each having a plurality of decoding matrix units in the first embodiment into one common block. The $(4 \times 4)$ general purpose dematrixing block 27 performs the dematrixing process using the dematrix coefficients retrieved from the pattern-by-pattern dematrix coefficient table 20. More specifically, as shown in FIG. 24, the $(4 \times 4)$ general purpose dematrixing block 27 multiplies the band signal data of the first to fourth ch by the dematrix coefficients (n00 to n03, n10 to n13, n20 to n23, and n30 to n33) retrieved from the pattern-by-pattern dematrix coefficient table 20. The $(4 \times 4)$ general purpose dematrixing block 27 calculates the dematrixed band signals of the first to fourth ch'.

The dematrixing blocks 12f and 12g are identical to the corresponding blocks shown in the first embodiment, and are associated with the dematrix pattern information 6 and 7, respectively.

More specifically, the dematrixing process block 12f performs the dematrixing process in the case that the dematrix pattern information is 6. That is, in the case that the full channel configuration information is 3/2 (the first to fifth channels correspond to Lch, Rch, Cch, LSch, and RSch), and in the case that the dematrix procedure information is either 0 or 1, the dematrixing process block 12f performs the dematrixing process. The dematrixing block 12f includes decoding matrix units 12f0, 12f1, 12f2, 12f3, 12f4, 12f5, 12f6, and 12f7 associated with the TC allocation information 0 to 7, respectively.

The dematrixing block 12g performs the dematrixing process in the case that the dematrix pattern information is 7. That is, in the case that the full channel configuration information is 3/2 (the first to fifth channels correspond to Lch, Rch, Cch, LSch, and RSch), and in the case that the dematrix procedure information is 2, the dematrixing block 12g performs the dematrixing process. The dematrixing block 12g includes decoding matrix units 12g0, 12g1, 12g2, 12g3, 12g4, 12g5, 12g6, and 12g7 associated with the TC allocation information 0 to 7, respectively.

The dematrix band limiter 13 is identical to that used in the first embodiment, and limits the dematrix bands to band 0 to band 26 in the band signal of each channel when the Fs information of the input bit stream, i.e., the sampling frequency, is 48 kHz.

As described in the above, in the dematrixing processor 24b of the present embodiment, when the number of output channels is four or less, the $(4 \times 4)$ general purpose dematrixing block 27 performs the dematrixing process by using the dematrix coefficients retrieved from the pattern-by-pattern dematrix coefficient table 20. Further, in the dematrixing processor 24b of the present embodiment, when the number of output channels is five, the individual dematrixing block 12f or 12g is chosen to perform the dematrixing process in accordance with the dematrix procedure information.

With this configuration, the dematrix processor 24b of the present embodiment can reduce the size of circuitry compared with the first embodiment and can reduce the amount of computation compared with the second embodiment.

[Operation of the Decoding Apparatus]

Operation of the decoding apparatus of the present embodiment will be described in detail below.

In the decoding apparatus of the present embodiment, as previously shown in steps S1 and S2 in FIG. 12, when the bit stream of the MPEG-2 multichannel signal is input to the stream input section 1 (FIG. 1), the stream input section 1 separates the input bit stream into the auxiliary information and audio encoded data. Then, the stream input section 1 supplies the auxiliary information to the auxiliary information analyzing section 2 (FIG. 1) and the audio encoded data to the decoding section 4 (FIG. 1). Thereafter, as previously shown in step S3 in FIG. 12, the auxiliary information analyzing section 2 analyzes the auxiliary information input from the stream input section 1, and supplies the result of the analysis to the decoding control section 3 (FIG. 1) and the storage section 6 (FIG. 1). To make the explanation more concrete, in the decoding apparatus of the present embodiment, it is assumed that the Fs information "48 kHz" and the channel number information "5ch" have been obtained as the result of the analysis by the auxiliary information analyzing section 2. Further, it is assumed that the full channel configuration information "3/2 (the first to fifth channels correspond to Lch, Rch, Cch, LSch, and RSch, respectively)" and the dematrix procedure information "2" have been obtained as the result of the analysis by the auxiliary information analyzing section 2. Moreover, it is assumed that TC(0)=3 and TC(1)= 5, for example, have been assigned as the TC allocation information values for band 0 and band 1, respectively, as in the first embodiment.

Next, as previously shown in step S4 in FIG. 12, the decoding control section 3 (FIG. 1) acquires the decoding control information by searching through the parameter ROM 18 based on the full channel configuration information and the dematrix procedure information supplied from the auxiliary information analyzing section 2. More specifically, the decoding control section 3 selects the decoding type number "13" from the decoding type instruction table 8a shown in FIG. 3 in accordance with the full channel configuration information "3/2" and the dematrix procedure information "2". Further, the decoding control section 3 obtains the channel number information "5ch", the dematrix pattern information "7", and the interleave instruction information "7" from the decoding control information instruction table 8b shown in FIG. 4. The thus obtained channel number information "5ch", the dematrix pattern information "7", and the interleave instruction information "7" are sent as instructions to the decoding section 4 from the channel number notifying unit 3c (FIG. 1), the dematrix instruction unit 3a, and the interleave instruction unit 3d (FIG. 1), respectively.

Next, the decoding control section 3 searches through the parameter ROM 18 and retrieves the denormalization level correction values for the respective output channels from the denormalization instruction table 10 (FIG. 21) based on the full channel configuration information and the dematrix procedure information. The method of retrieving the denormalization correction values and the method of giving instructions to the decoding section 4 are exactly the same as those described in the second embodiment, and therefore, the description thereof will not be repeated here.

On the other hand, in the decoding section 4, as previously shown in step S5 in FIG. 12, when the audio encoded data is input from the stream input section 1, first the band signal generator 4a (FIG. 1) generates band signals for five channels, i.e., L0 (first channel), R0 (second channel), T2 (third channel), T3 (fourth channel), and T4 (fifth channel), from the input audio encoded data. Here, the band signals L0, R0, T2, T3, and T4 are each comprised of 32 subbands. The subbands in the respective band signals, i.e., L0(0) to L0(31), R0(0) to R0(31), T2(0) to T2(31), T3(0) to T3(31), and T4(0) to T4(31), are arranged in increasing order of frequency. Further, the input bit stream is the MPEG-2 audio Layer 2 multichannel signal with the sampling frequency of 48 kHz. Therefore, bits are assigned to band 0 to band 26 in each channel (L0(0) to L0(26), R0(0) to R0(26), T2(0) to T2(26), T3(0) to T3(26), and T4(0) to T4(26)), while band 27 to band 31 in each channel (L0(27) to L0(31), R0(27) to R0(31), T2(27) to T2(31), T3(27) to T3(31), and T4(27) to T4(31)) are always muted.

Next, as previously shown in step S6 in FIG. 12, the dematrix processor 24b (FIG. 24) applies the dematrixing process to the band signals L0, R0, T2, T3, and T4 on a band by band basis. By performing the dematrixing process, the five channel band signals L0, R0, T2, T3, and T4 contained in the bit stream are converted into the band signals for the respective output channels, Lw (first channel), Rw (second channel), Cw (third channel), LSw (fourth channel), and RSw (fifth channel). These band signals Lw, Rw, Cw, LSw, and RSw each contain 32 subbands, i.e., Lw(0) to Lw(31), Rw(0) to Rw(31), Cw(0) to Cw(31), LSw(0) to LSw(31), and RSw(0) to RSw(31), respectively.

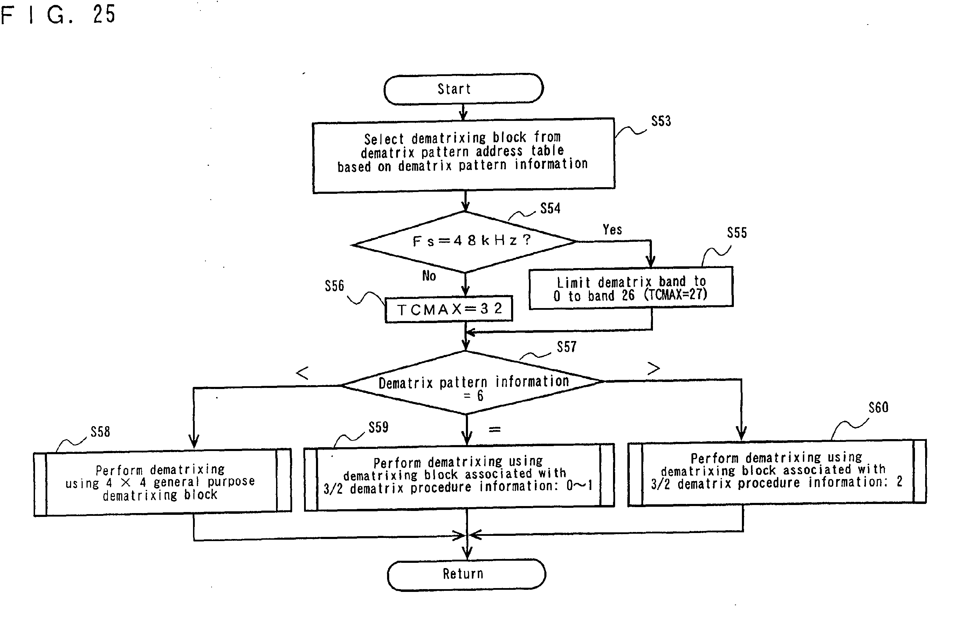

Operation of the dematrixing process will be described in more detail with reference to FIGs. 25 to 27.

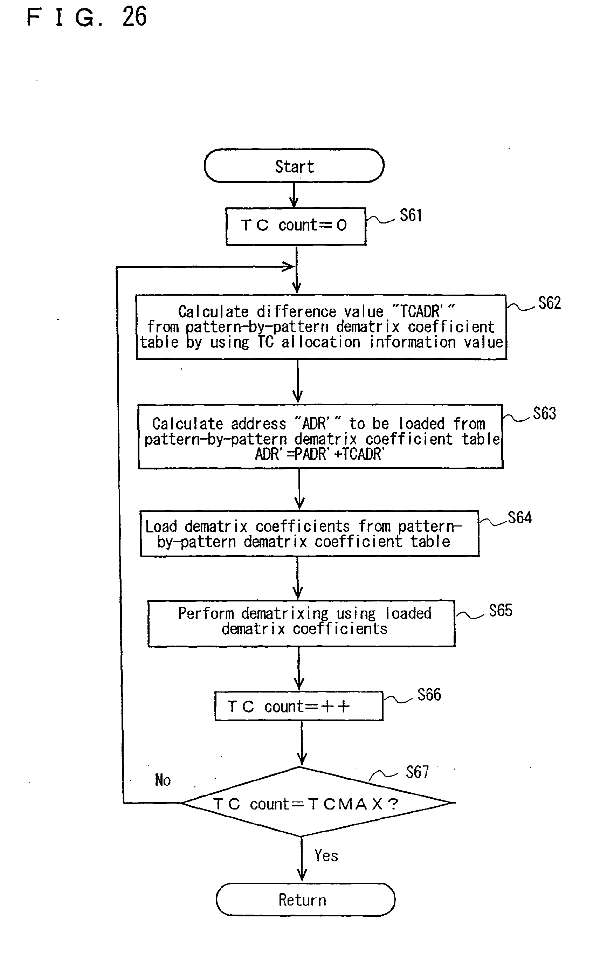

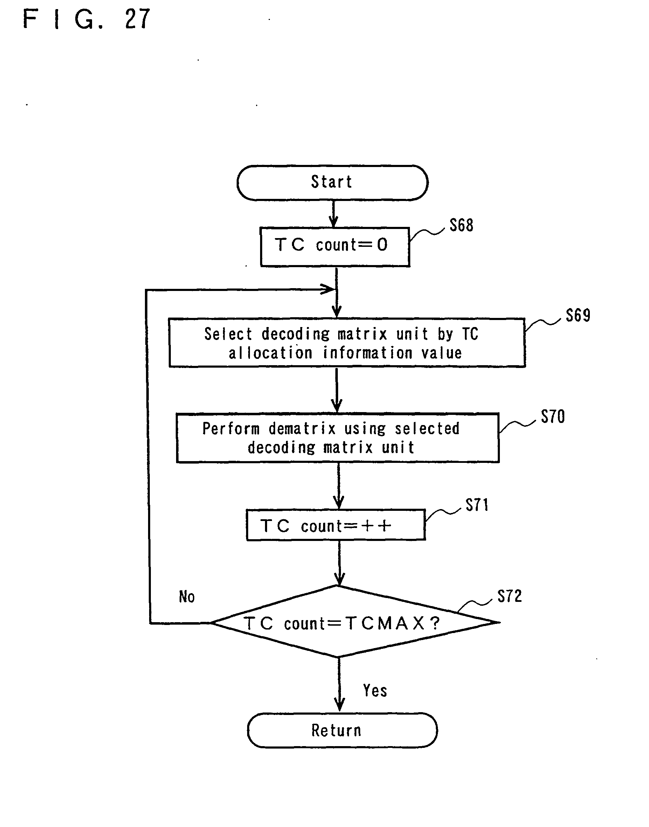

FIG. 25 is a flow chart showing an operation of the dematrix processor shown in FIG. 24. FIG. 26 is a flow chart showing a detailed operation in step S58 shown in FIG. 25, and FIG. 27 is a flow chart showing a detailed operation in step S59 or S60 shown in FIG. 25.

As shown in FIG. 25, the dematrix processor 24b searches through the parameter ROM 18 based on the dematrix pattern information "7" supplied from the dematrix instruction unit 3a. The dematrix processor 24b selects the block to be performed the dematrixing process from the dematrix pattern address table 19 (FIG. 22). Concretely, the dematrix processor 24b selects the dematrixing block 12g (FIG. 24) associated with the "3/2 dematrix procedure information: 2" (step S53).

Next, the dematrix band limiter 13 (FIG. 24) checks whether the Fs information (sampling frequency) is 48 kHz or not (step S54). In the case that the Fs information is 48 kHz, the dematrix band limiter 13 limits the dematrix bands to band 0 to band 26 (maximum dematrix band count TCMAX = 27) (step S55). In the case that the Fs information is not 48 kHz, the dematrix band limiter 13 does not impose a limit on the number of bands and therefore sets TCMAX to 32 (step S56).

In the present embodiment, since the operation is described by dealing with the case where the MPEG-2 multichannel signal is input, the dematrix band limiter 13 limits the dematrix bands to band 0 to band 26.

Next, the dematrix processor 24b checks whether the dematrix pattern information supplied from the dematrix instruction unit 3a is "6" or not (step S57). In the case that the dematrix pattern information is less than 6, the dematrix processor 24b performs the dematrixing process using the $(4 \times 4)$ general purpose dematrixing block 27 (FIG. 24) (step S58). In the case that the dematrix pattern information is 6, the dematrix processor 24b performs the dematrixing process using the dematrixing block 12f (FIG. 24) associated with the "3/2 dematrix procedure information: 0 to 1" (step S59). On the other hand, in the case that the dematrix pattern information is larger than 6 (that is, 7), the dematrix processor 24b performs the dematrixing process using the dematrixing block 12g (FIG. 24) associated with the "3/2 dematrix procedure information: 2" (step S60).

Referring now to FIG. 26, operation of the dematrixing process performed in the $(4 \times 4)$ general purpose dematrixing block 27 will be described in detail.

When the dematrix processor 24b has judged in the above step S57 that the dematrix pattern information supplied from the dematrix instruction unit 3a is less than 6, as shown in FIG. 26, the $(4 \times 4)$ general purpose dematrixing block 27 sets the TC count value for counting the number of the band signals to 0 in order to perform the dematrixing process in sequence starting with the band signal of band 0, (step S61). After that, the $(4 \times 4)$ general purpose dematrixing block 27 calculates the difference value "TCADR'" from the pattern-by-pattern dematrix coefficient table 20 by using the value of the TC allocation information specified for band 0 (step S62).

Next, the $(4 \times 4)$ general purpose dematrixing block 27 calculates the address "ADR'" of the dematrix coefficient to be loaded from the pattern-by-pattern dematrix coefficient table 20 (step S63). After that, the $(4 \times 4)$ general purpose dematrixing block 27 loads the dematrix coefficient from the pattern-by-pattern dematrix coefficient table 27 by using the calculated address "ADR'" (step S64).

The $(4 \times 4)$ general purpose dematrixing block 27 applies the dematrixing process to band 0 by using the loaded dematrix coefficient (step S65).

Next, the $(4 \times 4)$ general purpose dematrixing block 27 increments the TC count by 1 (step S66), and checks whether the TC count value has reached TCMAX (step S67). When the TC count value has reached TCMAX, the dematrixing process is terminated; when the TC count value has not yet reached TCMAX, the process returns to step S62. Similarly, the dematrixing process is also applied to band 1 to band 26.

Referring now to FIG. 27, operation of the dematrixing process performed in the individual dematrixing blocks 12f and 12g will be described in detail. The dematrixing process operation is exactly the same between the dematrixing blocks 12f and 12g; the following description shows the operation when the dematrix pattern information is "7".

When the dematrix processor 24b has judged in the above step S57 that the dematrix pattern information supplied from the dematrix instruction unit 3a is 7, as shown in FIG. 27, the TC count value for counting the number of band signals is set to 0 in order to perform the dematrixing process in sequence starting with the band signal of band 0 (step S68). After that, in the dematrixing block 12g, the appropriate decoding matrix unit is selected according to the value of the TC allocation information specified for band 0 (step S69). The dematrixing block 12g dematrixes band 0 using the selected decoding dematrix unit (step S70).

Next, the dematrixing block 12g increments the TC count value by 1 (step S71), and checks whether the TC count value has reached TCMAX (step S72). When the TC count value has reached TCMAX, the dematrixing process is terminated; when the TC count value has not yet reached TCMAX, the process returns to step S69.

To described more specifically, since "TC(0)=3" is assigned to the TC allocation information for band 0, as earlier described, the dematrixing block 12g selects the decoding matrix unit 12g3 (FIG. 24) in step S69. The decoding matrix unit 12g3 dematrixes the band signals L0(0), R0(0), T2(0), T3(0), and T4(0) for the respective channels, and thus calculates the band signals Lw(0), Rw(0), Cw(0), LSw(0), and RSw(0) for the respective output channels.

Further, since "TC(1)=5" is assigned to the TC allocation information for band 1, the dematrixing block 12g selects the decoding matrix unit 12g5 in step S69. The decoding matrix unit 12g5 dematrixes the band signals L0(1), R0(1), T2(1), T3(1), and T4(1) for the respective channels, and thus calculates the band signals Lw(1), Rw(1), Cw(1), LSw(1), and RSw(1) for the respective output channels. The dematrixing process is also applied to band 2 to band 26 in like manner.

The subsequent denormalization process, the band synthesis process, and the interleaving process are carried out in exactly the same manner as described in the second embodiment, and the description thereof will not be repeated here.

As described in the above, in the decoding apparatus of the present embodiment, the dematrix processor 24b performs the dematrixing process using the individual dematrixing block 12f or 12g only when the full channel configuration information is "3/2", and when the dematrix procedure information is any one of 0 to 2. When the number of channels is four or less, the dematrix processor 24b performs the dematrixing process using the $(4 \times 4)$ general purpose dematrixing block 27. Since the dematrixing block is shared for use, the decoding apparatus of the present embodiment can reduce the size of circuitry correspondingly, compared with the first embodiment. Furthermore, in only for the case of the five-channel configuration which requires the largest amount of computation, sum of products calculations are omitted for portions where the dematrix coefficient is 0. Thereby, in this embodiment, the amount of computation can be reduced compared with the second embodiment.

The operation of each embodiment has been described dealing with the case where the input signal is the MPEG-2 audio Layer 2 multichannel encoded signal in which the sampling frequency is 48 kHz and the dematrix procedure information is "2". Further, the input signal is decoded into a four-channel audio output signal in the first embodiment, and the input signal is decoded into the five-channel audio output signal in the second and third embodiments. However, the input signal is not restricted to this particular type of signal, but any other signal may be used as long as the input signal is a signal encoded by a subband encoding method in which the original audio signal is divided into bands and each band signal is encoded (that is, a method corresponding to the MPEG-1 audio encoding method or MPEG-2 audio multichannel encoding method specified in ISO/IEC 11172-3: 1993 or 13818-3: 1996 specifications).

Since the decoding operations in the decoding apparatus in any of the first to third embodiments can be implemented in a computer program, it is also possible to provide the decoding method of the present invention on a recording medium executable by a computer or a DSP (Digital Signal Processor). The recording medium mentioned here refers to a CD-ROM, DVD (Digital Versatile Disk), magneto-optical disk, removable hard disk, or the like. When the decoding method in each embodiment is implemented as a computer program, the program size and the (parameter) ROM size can be reduced compared with the prior art.

**Claims**

1. A decoding apparatus for decoding an audio bit stream for a maximum of N channels (N is an integer larger than 1), comprising:

   a stream input section (1) for separating an input bit stream into auxiliary information and encoded data,
   an auxiliary information analyzing section (2) for obtaining at least full channel configuration information by analyzing said auxiliary information supplied from said stream input section,
   a parameter ROM section (5,15,18) prestoring therein a decoding control table (8) which presents decoding type numbers classified according to said full channel configuration information,
   a decoding control section (3) for selecting a decoding type number from said decoding control table on the basis of said full channel configuration information supplied from said auxiliary information analyzing section, and for performing decoding control based on said selected type number, and
   a decoding section (4) for generating audio output data in accordance with an instruction from said decoding control section.

2. A decoding apparatus according to claim 1 for decoding a bit stream by performing a band synthesis up to a maximum of N channels (N is an integer larger than 1), wherein said decoding section comprises:

   a band signal generator (4a) for generating a band signal by applying inverse quantization to said encoded data,
   a band synthesizer (4d) for generating PCM data for each output channel by applying said band synthesis to said band signal, and
   an interleaver (4e) for performing an interleaving process whereby said band-synthesized and decoded PCM data for each output channel is reordered sample by sample in a prescribed sequence, thereby generating audio output data.

3. A decoding apparatus for decoding a bit stream constructed in accordance with an MPEG-1 audio specification and an MPEG-2 audio specification and decodable by a band synthesis up to a maximum of N channels (N is an integer larger than 1), comprising:

   a stream input section (1) for separating an input bit stream into auxiliary information and audio encoded data,
   an auxiliary information analyzing section (2) for analyzing said auxiliary information supplied from said stream input section, and for obtaining at least Fs information indicative of a sampling frequency, full channel configuration information, and dematrix procedure information,

a parameter ROM section prestoring (5,15,48) therein a decoding control table (8) which presents decoding type numbers classified according to said full channel configuration information and said dematrix procedure information,

a decoding control section (3) for selecting a decoding type number from said decoding control table on the basis of said full channel configuration information and said dematrix procedure information supplied from said auxiliary information analyzing section, and for performing decoding control based on said selected type number,

a decoding section (4) comprising a band signal generator (4a) for generating a band signal by applying an inverse quantization to said audio encoded data, a dematrix processor (4b,14b,24b) for applying a dematrixing process to said band signal and thereby converting said band signal into a band signal for each output channel, a band synthesizer (4d) for generating PCM data for each output channel by applying said band synthesis to said band signal supplied from said dematrix processor, and an interleaver (4e) for performing an interleaving process whereby said band-synthesized and decoded PCM data for each output channel is reordered sample by sample in a prescribed sequence, thereby generating audio output data, wherein said decoding section generates said audio data in accordance with an instruction from said decoding control section, and

a storage section (6) for storing at least said PCM data output from said band synthesizer.

4. A decoding apparatus according to claim 3, wherein said auxiliary information analyzing section comprises:

an MPEG-1 header analyzer (2a) for analyzing header information defined in accordance with said MPEG-1 audio specification, thereby extracting at least said Fs information and determining whether front output channel configuration is monaural (one channel) or stereo (two channels),

an MC header analyzer (2b) for analyzing header information defined in accordance with said MPEG-2 audio specification, thereby extracting at least said dematrix information and determining the presence or absence of a front center channel and also a rear channel configuration or the presence of absence of second stereo channels, and for generating said full channel configuration information by combining the result of said analysis with the information of said front channel configuration obtained by said MPEG-1 header analyzer, and

a header information compatibility corrector (2c) for generating said full channel configuration information and said dematrix procedure information by determining the number of front channels from said MPEG-1 audio specification defined header information, and assuming that the front center channel and the rear channels or second stereo channels do not exist, when decoding the bit stream constructed in accordance with said MPEG-1 audio specification.

5. A decoding apparatus according to claim 3 or 4, wherein said decoding control table comprises:

a decoding type instruction table (8a) which presents decoding type numbers classified according to said full channel configuration information and said dematrix procedure information, and

a decoding control information instruction table (8b) which presents decoding control information consisting of a combination of multiple pieces of decoding instruction information for each of said decoding type numbers.

6. A decoding apparatus according to any one of claims 3 to 5, wherein said dematrix processor includes a dematrix band limiter (13) for limiting the number of bands to be dematrixed in said band signal on the basis of said Fs information supplied from said auxiliary information analyzing section.

7. A decoding apparatus according to any one of claims 3 to 6, wherein said decoding control table contains channel number information to indicate the number of output channels to be generated by said band synthesis based on said full channel configuration information, and

said decoding control section includes a channel number transmitting unit (3c) for transmitting said channel number information, obtained from said decoding control table, to said decoding section.

8. A decoding apparatus according to any one of claims 3 to 7, wherein said decoding control section includes a dematrix instruction unit (3a) which gives an instruction for said dematrixing process, based on said full channel configuration information and said dematrix procedure information supplied from said auxiliary information analyzing section and by using a value retrieved from said decoding control table in said parameter ROM.

9. A decoding apparatus according to claim 8, wherein said decoding control table contains dematrix pattern information indicating a dematrixing pattern,

said dematrix processor comprises individual dematrixing blocks (12a,--,12g) each provided in corresponding relationship to said dematrix pattern information, and

said parameter ROM prestores therein a dematrix pattern address table (9) which defines correspondence between said dematrix pattern information and said dematrixing blocks contained in said dematrix processor.

10. A decoding apparatus according to claim 8, wherein said dematrix processor (14b) comprises a general purpose dematrixing block (17) which performs said dematrixing process by varying a dematrix coefficient according to said full channel configuration information and said dematrix procedure information,

said decoding control table contains dematrix pattern information indicating a dematrixing pattern, and

said parameter ROM prestores therein a pattern-by-pattern dematrix coefficient table (16) which defines correspondence between said dematrix coefficient and said dematrix pattern information.

11. A decoding apparatus according to claim 8, wherein said dematrix processor (24b) comprises a general purpose dematrixing block (27) which performs said dematrixing process by varying a dematrix coefficient according to said full channel configuration information and said dematrix procedure information, and at least one dematrixing block (12f,12g) corresponding to a predesignated channel,

said decoding control table contains dematrix pattern information indicating a dematrixing pattern, and

said parameter ROM (18) prestores therein a dematrix pattern address table (19) which defines correspondence among said dematrix pattern information, said general purpose dematrixing block and said at least one dematrixing block, and a pattern-by-pattern dematrix coefficient table (20) which defines correspondence between said dematrix coefficient and said dematrix pattern information.

12. A decoding apparatus according to claim 11, wherein said dematrix processor comprises a general purpose dematrixing block which varies said dematrix coefficient in cases where the number of output channels to be generated by said band synthesis is 1 to M (M is an integer smaller than N), and a dematrixing block provided for cases where the number of output channels to be generated by said band synthesis is equal to or larger than (M+1), and

said parameter ROM prestores therein a pattern-by-pattern dematrix coefficient table which defines correspondence between said general purpose dematrixing block and said dematrix pattern information corresponding to 1 to M output channels.

13. A decoding apparatus according to any one of claims 3 to 12, wherein said decoding control table contains an interleave instruction information for indicating an interleaving pattern based on said full channel configuration information, and

said decoding control section includes an interleave instruction unit (3d) for indicating said interleave instruction information, obtained from said decoding control table, to said decoding section.

14. A decoding apparatus according to claim 13, wherein said interleave instruction information is information that indicates said interleaving pattern, preassigned according to said full channel configuration information, by using a number,

said parameter ROM prestores therein an interleave pattern table (11) which defines correspondence between said number of said interleaving pattern and PCM location information which is an encoded representation of the starting address of said PCM data stored in said storage section.

15. A decoding apparatus according to any one of claims 3 to 14, wherein said decoding section includes a mute data creator (4h) which writes mute PCM data to said storage section when said channel number information supplied from said decoding control section indicates (N-1) or fewer channels.

16. A decoding apparatus according to any one of claims 3 to 15, wherein said parameter ROM prestores therein a denormalization instruction table (10) for indicating instruction data for a denormalization process according to said full channel configuration information and said dematrix procedure information supplied from said auxiliary information analyzing section,

said decoding control section includes a denormalization instruction unit (3b) which gives an instruction for said denormalization process, based on said full channel configuration information and said dematrix procedure information supplied from said auxiliary information analyzing section and by using a value retrieved from said denormalization instruction table in said parameter ROM, and

said decoding unit includes a denormalization processor (4c) which performs said denormalization process in accordance with said instruction from said decoding control section.

17. A decoding apparatus according to claim 16, wherein said denormalization instruction table comprises: a normalization type instruction table (10a) which presents denormalization type numbers classified according to said full channel configuration information and said dematrix procedure information, a denormalization allocation table (10b) which shows relations between said denormalization type numbers and denormalize correction value data numbers for each output channel, and a denormalization level correction value table (10c) for converting said denormalize correction value data numbers into sound level data used in said denormalization.

18. A decoding apparatus according to claim 16 or 17, further comprising a channel balance setting interface (7) via which sound level information for each output channel is supplied from outside for delivery to said decoding section, and wherein:

said decoding section includes a sound level converter (4f) which converts said sound level information delivered from said channel balance setting interface into sound level data for each output channel, and a classifying sound level multiplier (4g) which multiplies said instruction data supplied from said denormalization instruction unit by said sound level data supplied from said sound level converter for each output channel when said channel number information from said decoding control section indicates N, and
said interleave processor includes a classifying interleave sound level adjuster multiplies said PCM data of each output channel by said sound level data supplied from said sound level converter when said channel number information from said decoding control section indicates (N-1) or fewer channels.

19. A decoding method for use in a decoding apparatus for decoding an audio bit stream for a maximum of N channels (N is an integer larger than 1), comprising:

a separation step for separating an input bit stream into auxiliary information and encoded data,
an auxiliary information analyzing step for obtaining at least full channel configuration information by analyzing said auxiliary information separated in said separation step,
a selection step for selecting a decoding type number from a decoding control table in a parameter ROM on the basis of said full channel configuration information obtained in said auxiliary information analyzing step, and
a generation step for generating output data by performing decoding control based on said type number selected in said selection step.

20. A decoding method according to claim 19 for use in a decoding apparatus for decoding a bit stream by performing band synthesis up to a maximum of N channels (N is an integer larger than 1), wherein said generation step comprises:

a band signal generation step for generating a band signal by applying an inverse quantization to said encoded data,
a band synthesizing step for generating PCM data for each output channel by applying a band synthesis to said band signal generated in said band signal generation step, and
an interleaving step for performing an interleaving process whereby said PCM data generated for each output channel in said band synthesizing step is reordered sample by sample in a prescribed sequence.

21. A decoding method for use in a decoding apparatus for decoding a bit stream constructed in accordance with an MPEG-1 audio specification and an MPEG-2 audio specification and decodable by a band synthesis up to a maximum of N channels (N is an integer larger than 1), comprising:

a separation step for separating an input bit stream into auxiliary information and audio encoded data,
an auxiliary information analyzing step for analyzing said auxiliary information separated in said separation step, and for obtaining at least Fs information indicative of a sampling frequency, full channel configuration information, and dematrix procedure information,
a selection step for selecting a decoding type number from a decoding control table in a parameter ROM on the basis of said full channel configuration information and said dematrix procedure information obtained in said auxiliary information analyzing step, and
a generation step for generating audio output data by performing decoding control based on said type number selected in said selection step.

22. A decoding method for used in a decoding apparatus according to claim 21, wherein said generation step comprises:

a band signal generation step for generating a band signal by applying an inverse quantization to said audio encoded data,

a dematrixing step for applying a dematrixing process to said band signal generated in said band signal generation step, and thereby converting said band signal into a band signal for each output channel,

a band synthesizing step for generating PCM data for each output channel by applying said band synthesis to said band signal generated for each output channel in said dematrixing step, and

an interleaving step for performing an interleaving process whereby said PCM data generated for each output channel in said band synthesizing step is reordered sample by sample in a prescribed sequence.

23. A recording medium having computer program code adapted to perform decoding steps recorded thereon for decoding an audio bit stream for a maximum of N channels (N is an integer larger than 1), said decoding steps comprising the steps of:

when said bit stream is input, separating said bit stream into auxiliary information and encoded data,

acquiring at least full channel configuration information by analyzing said separated auxiliary information,

selecting a decoding type number from a decoding control table in a parameter ROM on the basis of said acquired full channel configuration information, and

generating output data by performing decoding control based on said selected type number.

24. A recording medium having decoding steps recorded thereon according to claim 23 for decoding a bit stream by a band synthesis up to a maximum of N channels (N is an integer larger than 1), wherein said decoding steps provide an additional function by which, when generating said output data, a band signal is generated by applying an inverse quantization to said encoded data, PCM data for each output channel is generated by applying a band synthesis to said band signal, and an interleaving process is performed whereby said PCM data for each output channel is reordered sample by sample in a prescribed sequence.

25. A recording medium having computer program code adapted to perform decoding steps recorded thereon for decoding a bit stream constructed in accordance with an MPEG-1 audio specification and an MPEG-2 audio specification and decodable by a band synthesis up to a maximum of N channels (N is an integer larger than 1), said decoding steps comprising the steps of:

when said bit stream is input, separating said bit stream into auxiliary information and audio encoded data,

acquiring at least Fs information indicative of a sampling frequency, full channel configuration information, and dematrix procedure information by analyzing said separated auxiliary information,

selecting a decoding type number from a decoding control table in a parameter ROM on the basis of said acquired full channel configuration information and dematrix procedure information, and

generating audio output data by performing decoding control based on said selected type number.

26. A recording medium having decoding steps recorded thereon according to claim 25, wherein said decoding steps provide an additional function by which, when generating said audio output data, a band signal is generated by applying an inverse quantization to said audio encoded data, said band signal is dematrixed and thereby converted into a band signal for each output channel, PCM data for each output channel is generated by applying said band synthesis to said band signal of each output channel, and an interleaving process is performed whereby said PCM data for each output channel is reordered sample by sample in a prescribed sequence.

**Patentansprüche**

1. Decodiervorrichtung zum Decodieren eines Audobitstroms für ein Maximum von N Kanälen (N ist eine ganze Zahl größer 1), umfassend:

einen Stromeingangsabschnitt (1) zum Trennen eines Eingangsbitstroms in Hilfsinformation und codierte Daten,

einen Hilfsinformationsanalyseabschnitt (2), um durch Analyse der von dem Stromeingabeabschnitt gelieferten Hilfsinformation zumindest eine Konfigurationsinformation für alle Kanäle zu gewinnen,

einen Parameter-ROM-Abschnitt (5,15,18), der darin eine Decodiersteuertabelle (8) vorspeichert, die Decodiertypnummern wiedergibt, die gemäß der Konfigurationsinformation für alle Kanäle klassifiziert sind,

einen Decodiersteuerabschnitt (3), um eine Decodiertypnummer aus der Decodiersteuertabelle auf Grundlage der von dem Hilfsinformationsanalyseabschnitt bereitgestellten Konfigurationsinformation für alle Kanäle auszuwählen und auf Grundlage der ausgewählten Typnummer eine Decodiersteuerung auszuführen, und

einen Decodierabschnitt (4), um gemäß einem Befehl des Decodiersteuerabschnitts Audioausgangsdaten zu erzeugen.

2. Decodiervorrichtung nach Anspruch 1 zum Decodieren eines Bitstroms durch Ausführen einer Bandsynthese bei bis zu einem Maximum von N Kanälen (N ist eine ganze Zahl größer 1), wobei der Decodierabschnitt umfasst:

einen Bandsignalgenerator (4a) zum Erzeugen eines Bandsignals durch Anwenden einer inversen Quantisierung auf die codierten Daten,
einen Bandsyntheseeinrichtung (4d) zum Erzeugen von PCM-Daten für jeden Ausgangskanal durch Anwenden der Bandsynthese auf das Bandsignal, und
einen Verschachtelungseinrichtung (4e) zum Durchführen eines Verschachtelungsprozesses, wodurch die einer Bandsynthese unterzogenen und decodierten PCM-Daten für jeden Ausgangskanal Abtastung für Abtastung in einer vorab geschriebenen Sequenz umgeordnet werden, wodurch die Audioausgangsdaten erzeugt werden.

3. Decodiervorrichtung zum Decodieren eines Bitstroms, der
gemäß einer MPEG-1-Audiospezifizierung und einer MPEG-2-Audiospezifizierung aufgebaut ist und mittels einer Bandsynthese bei bis zu einem Maximum von N-Kanälen (N ist eine ganze Zahl größer als 1) decodierbar ist, umfassend:

einen Stromeingangsabschnitt (1), um einen Eingangsdatenstrom in Hilfsinformation und codierte Audiodaten zu trennen,
einen Hilfsinformationsanalyseabschnitt (2), um die von dem Stromeingangsabschnitt bereitgestellte Hilfsinformation zu analysieren und mindestens $F_s$-Informationen, die indikativ für eine Abtastfrequenz ist, eine Konfigurationsinformation für alle Kanäle und eine Information für eine Matrixzerlegungsprozedur zu gewinnen,
einen Parameter-ROM-Abschnitt, der hierin eine Decodiersteuertabelle (8) vorspeichert (5,15,48), die Decodiertypnummern wiedergibt, die gemäß der Konfigurationsinformation für alle Kanäle und der Matrixzerlegungsprozedurinformation klassifiziert sind,
einen Decodiersteuerabschnitt (3), um eine Decodiertypnummer aus der Decodiersteuertabelle auf Grundlage der Konfigurationsinformation für alle Kanäle und der Matrixzerlegungsprozedurinformation auszuwählen, welche von dem Hilfsinformationsanalyseabschnitt bereitgestellt werden, und um eine Decodiersteuerung auf Grundlage der ausgewählten Typnummer durchzuführen,
einen Decodierabschnitt (4), der einen Bandsignalgenerator (4a) umfasst, um ein Bandsignal durch Anwenden einer inversen Quantisierung auf die codierten Audiodaten zu erzeugen, einen Matrixzerlegungs-Prozessor (4b,14b,24b), um einen Matrixzerlegungs-Prozess auf das Bandsignal anzuwenden und **dadurch** das Bandsignal in ein Bandsignal für jeden Ausgangskanal umzuwandeln, eine Bandsyntheseeinrichtung (4d), um PCM-Daten für jeden Ausgangskanal durch Anwenden der Bandsynthese auf das von dem Matrixzerlegungs-Prozessor gelieferte Bandsignal zu erzeugen, und eine Verschachtelungseinrichtung (4e) zum Durchführen eines Verschachtelungsprozesses, wodurch die eine Bandsynthese unterzogenen und decodierten PCM-Daten für jeden Ausgangskanal Abtastung für Abtastung in einer vorbeschriebenen Abfolge umgeordnet werden, wodurch Audioausgangsdaten erzeugt werden, wobei der Decodierabschnitt die Ausgangsdaten gemäß eines Befehls des Decodiersteuerabschnittes erzeugt, und
einen Speicherabschnitt (6) zum Speichern zumindest der PCM-Daten, die von der Bandsyntheseeinrichtung ausgegeben werden.

4. Decodiervorrichtung nach Anspruch 3, wobei der Hilfsinformationsanalyseabschnitt umfasst:

eine MPEG-1-Kopfzeilenanalyseeinrichtung (2a) zur Analyse von Kopfzeileninformation, die gemäß der MPEG-1-Audiospezifizierung definiert ist, wodurch zumindest die $F_s$ Information extrahiert wird und bestimmt wird, ob eine Frontausgangskanalkonfigurierung monaural (ein Kanal) oder stereo (zwei Kanäle) ist,
eine MC-Kopfzeilenanalyseeinrichtung (2b) zur Analyse von Kopfzeileninformation, die gemäß der MPEG-2-Audiospezifizierung definiert ist, wodurch zumindest die Matrixzerlegungs-Information extrahiert wird und das Vorliegen oder das Fehlen eines Front-Mittenkanals und auch eine Hintergrundkanalkonfigurierung oder das Vorliegen oder das Fehlen von zweiten Stereokanälen bestimmt wird, und um die Konfigurierungsinformation für alle Kanäle durch Kombination des Ergebnisses der Analyse mit der Information der Frontkanalkonfigurierung, die durch die MPEG-1-Kopfzeilenanalyseeinrichtung gewonnen wurde, zu erzeugen, und
eine Kopfzeileninformations-Kompatibilitätskorrektur-Einrichtung (2c), um die Konfigurationsinformation für alle Kanäle und die Matrixzerlegungs-Prozedur-Information durch Bestimmung der Anzahl an Frontkanälen aus der MPEG-1-Audiospezifizierung, die in der Kopfzeileninformation definiert ist, zu erzeugen, und anzunehmen, dass der Frontmittenkanal und die Hintergrundkanäle oder zweiten Stereokanäle nicht existieren, wenn der Bitstrom, der gemäß der MPEG-1-Audiospezifizierung aufgebaut ist, decodiert wird.

5. Decodiervorrichtung nach Anspruch 3 oder 4, wobei die Decordiersteuertabelle umfasst:

eine Decodiertypbefehlstabelle (8a), die die Decodiertypnummern wiedergibt, die gemäß der Konfigurationsinformation für alle Kanäle und der Matrixzerlegungsprozedurinformation klassifiziert sind, und
eine Decodiersteuerinformationsbefehlstabelle (8b), die eine Decodiersteuerinformation wiedergibt, die aus einer Kombination mehrerer Teile einer Decodierbefehlsinformation für jede der Decodiertypnummern besteht.

6. Decodiervorrichtung nach einem der Ansprüche 3 bis 5, wobei der Matrixzerlegungsprozessor einen Matrixzerlegungsbandbegrenzer (13) umfasst, um die Anzahl an Bändern, bei denen eine Matrixzerlegung erfolgen muss, in dem Bandsignal auf Basis der $F_s$-Information, die von dem Hilfsinformationsanalyseabschnitt geliefert wird, zu begrenzen.

7. Decodiervorrichtung nach einem der Ansprüche 3 bis 6, wobei die Decodiersteuertabelle eine Kanalanzahlinformation enthält, um die Anzahl an Ausgangskanälen anzugeben, die durch die Bandsynthese auf Grundlage der Konfigurationsinformation für alle Kanäle zu erzeugen sind, und
der Decodiersteuerabschnitt eine Kanalanzahlübertragungseinheit (3c) zum Übertragen der Kanalanzahlinformation, die aus der Decodiersteuertabelle gewonnen wird, auf den Decodierabschnitt umfasst.

8. Decodiervorrichtung nach einem der Ansprüche 3 bis 7, wobei der Decodiersteuerabschnitt eine Matrixzerlegungsbefehlseinheit (3a) umfasst, die einen Befehl für den Matrixzerlegungsprozess auf Grundlage der Konfigurationsinformation für alle Kanäle und der Matrixzerlegungsprozedurinformation gibt, die von dem Hilfsinformationsanalyseabschnitt geliefert werden, und durch Verwendung eines Werts, der aus der Decodiersteuertabelle in dem Parameter-ROM aberufen wird.

9. Decodiervorrichtung nach Anspruch 8, wobei die Decodiersteuertabelle eine Matrixzerlegungsmusterinformation enthält, die ein Matrixzerlegungsmuster angibt,
der Matrixzerlegungsprozessor einzelne Matrixzerlegungsblocks (12a,--,12g) umfasst, die jeweils in entsprechender Beziehung zu der Matrixzerlegungsmusterinformation bereitgestellt werden, und
das Parameter-ROM eine Matrixzerlegungsmusteradresstabelle (9) vorspeichert, die eine Entsprechung zwischen der Matrixzerlegungsmusterinformation und den Matrixzerlegungsblocks definiert, die in dem Matrixzerlegungsprozessor enthalten sind.

10. Decodiervorrichtung nach Anspruch 8, wobei der Matrixzerlegungsprozessor (14b) einen Mehrzweckmatrixzerlegungsblock (17) umfasst, der den Matrixzerlegungsprozess durch Änderung eines Matrixzerlegungskoeffizienten gemäß der Konfigurationsinformation für alle Kanäle und der Matrixzerlegungsprozedurinformation durchführt,
die Decodiersteuertabelle eine Matrixzerlegungsmusterinformation enthält, die ein Matrixzerlegungsmuster angibt, und
das Parameter-ROM eine musterweise Matrixzerlegungskoeffizerlegungskoeffizicntentabelle (16) vorspeichert, die eine Korrespondenz zwischen dem Matrixzerlegungskoeffizienten und der Matrixzerlegungsmusterinformation definiert.

11. Decodiervorrichtung nach Anspruch 8, wobei der Matrixzerlegungsprozessor (24b) einen Mehrzweckmatrixzerlegungsblock (27), der den Matrixzerlegungsprozess durch Änderung eines Matrixzerlegungskoeffizienten gemäß der Konfigurationsinformation für alle Kanäle und der Matrixzerlegungsprozedurinformation durchführt, und mindestens einen Matrixzerlegungsblock (12f,12g) umfasst, der mit einem vorab bestimmten Kanal korrespondiert,
die Decodiersteuertabelle eine Matrixzerlegungsmusterinformation enthält, die ein Matrixzerlegungsmuster angibt, und
das Parameter-ROM (18) eine Matrixzerlegungsmusteradresstabelle (19), die eine Korrespondenz zwischen der Matrixzerlegungsmusterinformation, dem Mehrzweckmatrixzerlegungsblock und dem mindestens einen Matrixzerlegungsblock definiert, und eine musterweise Matrixzerlegungskoeffizicntentabelle (20) vorspeichert, die eine Korrespondenz zwischen dem Matrixzerlegungskoeffizienten und der Matrixzerlegungsmusterinformation definiert.

12. Decodiervorrichtung nach Anspruch 11, wobei der Matrixzerlegungsprozessor einen Mehrzweckmatrixzerlegungsblock umfasst, der den Matrixzerlegungskoeffizienten in Fällen ändert, in denen die Anzahl an Ausgangskanälen, die durch die Bandsynthese zu erzeugen sind, zwischen 1 und M (M ist eine ganze Zahl kleiner als N) liegt, und einen Matrixzerlegungsblock enthält, der in Fällen bereitgestellt wird, in denen die Anzahl an Ausgangskanälen, die durch die Bandsynthese zu erzeugen sind, gleich oder größer als (M+1) ist, und

das Parameter-ROM eine musterweise Matrixzerlegungskoeffiziententabelle vorspeichert, die eine Korrespondenz zwischen dem Mehrzweckmatrixzerlegungsblock und der Matrixzerlegungsmusterinformation, die mit den 1 bis M Ausgangskanälen korrespondiert, definiert.

13. Decodiervorrichtung nach einem der Ansprüche 3 bis 12, wobei die Decodiersteuertabelle eine Verschachtelungsbefehlsinformation zur Angabe eines Verschachtelungsmusters auf Basis der Konfigurationsinformation für alle Kanäle enthält, und

der Decodiersteuerabschnitt eine Verschachtelungsbefehlseinheit (3d) zur Angabe der Verschachtelungsbefehlsinformation, die aus der Decodiersteuertabelle gewonnen wird, für den Decodierabschnitt umfasst.

14. Decodiervorrichtung nach Anspruch 13, wobei die Verschachtelungsbefehlsinformation eine Information ist, die durch Verwendung einer Zahl das Verschachtelungsmuster angibt, das gemäß der Konfigurationsinformation für alle Kanäle vorab zugewiesen wird,

das Parameter-ROM eine Verschachtelungsmustertabelle (11) vorspeichert, die eine Korrespondenz zwischen der Zahl des Verschachtelungsmusters und der PCM-Ortsinformation definiert, die eine codierte Wiedergabe der Startadresse der PCM-Daten ist, die in dem Speicherabschnitt gespeichert sind.

15. Decodiervorrichtung nach einem der Ansprüche 3 bis 14, wobei der Decodierabschnitt einen Dämpfungsdatenerzeuger (4h) umfasst, der Dämpfungs-PCM-Daten in den Speicherabschnitt schreibt, wenn die Kanalnummerninformation, die von dem Decodiersteuerabschnitt geliefert wird, (N-1) oder weniger Kanäle anzeigt.

16. Decodiervorrichtung nach einem der Ansprüche 3 bis 15, wobei das Parameter-ROM eine Denormalisierungsbefehlstabelle (10) vorspeichert, um Befehlsdaten für einen Denormalisierungsprozess gemäß der Konfigurationsinformation für alle Kanäle und der Matrixzerlegungsprozedurinformation anzugeben, die von dem Hilfsinformationsanalyseabschnitt geliefert werden,

der Decodiersteuerabschnitt eine Denormalisierungsbefehlseinheit (3b) umfasst, die einen Befehl für den Denormalisierungsprozess auf Grundlage der Konfigurationsinformation für alle Kanäle und der Matrixzerlegungsprozedurinformation, welche von dem Hilfsinformationsanalyseabschnitt geliefert werden, und durch Verwendung eines Wertes angibt, der aus der Denormalisierungsbefehlstabelle in dem Parameter-ROM bezogen wird, und

die Decodiereinheit einen Denormalisierungsprozessor (4c) umfasst, der den Denormalisierungsprozess gemäß dem Befehl von dem Decodiersteuerabschnitt ausführt.

17. Decodiervorrichtung nach Anspruch 16, wobei die Denormalisierungsbefehlstabelle umfasst:

eine Denormalisierungstypbefehlstabelle (10a), die Denormalisierungstypnummern wiedergibt, die gemäß der Konfigurationsinformation für alle Kanäle und der Matrixzerlegungsprozedurinformation klassifiziert sind, eine Denormalisierungszuordnungstabelle (10b), die Beziehungen zwischen den Denormalisierungstypnummern und Denormalisierungskorrekturwertdatennummern für jeden Ausgangskanal zeigt, und eine Denormalisierungsnieveaukorrekturwerttabelle (10c) zum Umwandeln der Denormalisierungskorrekturwertdatennummern in Klangniveaudaten, die bei der Denormalisierung verwendet werden.

18. Decodiervorrichtung nach Anspruch 16 oder 17, des Weiteren umfassend:

ein Kanalbalancesetzinterface (7), über das eine Klangniveauinformation für jeden Ausgangskanal von außen zur Bereitstellung für den Decodierabschnitt geliefert wird, und wobei:

der Decodierabschnitt einen Klangniveaumwandler (4f) umfasst, der die von dem Kanalbalanceeinstellinterface gelieferte Klangniveauinformation in Klangniveaudaten für jeden Ausgangskanal umsetzt, und einen klassifizierenden Klangniveauvervielfacher (4g) umfasst, der die von der Denormalisierungsbefehlseinheit gelieferten Befehlsdaten durch die Klangniveaudaten, die von dem Klangniveauumsetzer für jeden Ausgangskanal geliefert werden, vervielfacht, wenn die Kanalnummerninformation von dem Decodiersteuerabschnitt N angibt, und

der Verschachtelungsprozessor eine klassifizierende, verschachtelnde Klangniveaueinstelleinrichtung umfasst, die die PCM-Daten eines jeden Ausgangskanals durch die von dem Klangniveauumsetzer gelieferten Klangniveaudaten vervielfacht, wenn die Kanalanzahlinformationen des Decodiersteuerabschnitts (N-1) oder weniger Kanäle angibt.

**19.** Decodierverfahren zur Verwendung bei einer Decodiervorrichtung zum Decodieren eines Audiobitstroms für ein Maximum von N Kanälen (N ist eine ganze Zahl größer als 1), umfassend:

einen Trennschritt zum Trennen eines Eingangsbitstroms in Hilfsinformation und codierte Daten,

einen Hilfsinformationsanalyseschritt, um zumindest eine Konfigurationsinformation für alle Kanäle durch Analyse der in dem Tremnschritt getrennten Hilfsinformation zu gewinnen,

einen Auswahlschritt, um eine Decodiertypnummer aus einer Decodiersteuertabelle in einem Parameter-ROM auf Basis der Konfigurationsinformation für alle Kanäle auszuwählen, die in dem Hilfsinformationsanalyseschritt gewonnen wurde, und

einen Erzeugungsschritt, um Ausgangsdaten durch Ausführen einer Decodiersteuerung auf Grundlage der Typnummer zu erzeugen, die in dem Auswahlschritt ausgewählt wurde.

**20.** Decodierverfahren nach Anspruch 19 zur Verwendung in einer Decodiervorrichtung zum Decodieren eines Datenstroms durch Ausführen einer Bandsynthese bei bis zu einem Maximum von N Kanälen (N ist eine ganze Zahl größer als 1), wobei der Erzeugungsschritt umfasst:

einen Bandsignalerzeugungsschritt, um ein Bandsignal durch Anwenden einer inversen Quantifizierung auf die codierten Daten zu erzeugen,

einen Bandsyntheseschritt zur Erzeugung von PCM-Daten für jeden Ausgangskanal durch Anwenden einer Bandsynthese auf das Bandsignal, das in dem Bandsignalerzeugungsschritt erzeugt wurde, und

einen Verschachtelungsschritt zum Durchführen eines Verschachtelungsprozesses, wodurch die PCM-Daten, die für jeden Ausgangskanal in dem Bandsyntheseschritt gewonnen wurden, abtastungsweise in einer vorgeschriebenen Abfolge umgeordnet werden.

**21.** Decodierverfahren zur Verwendung in einer Decodiervorrichtung zum Decodieren eines Bitstroms, der gemäß einer MPEG-1-Audiospezifizierung und einer MPEG-2-Audiospezifizierung aufgebaut ist und durch eine Bandsynthese für ein Maximum von N-Kanälen (N ist eine ganze Zahl größer als 1) decodierbar ist, umfassend:

einen Trennschritt zum Trennen eines Eingangsbitstroms in Hilfsinformation und codierte Audiodaten,

einen Hilfsinformationsanalyseschritt zur Analyse der Hilfsinformation, die in dem Trennschritt abgetrennt wurde, und zum Gewinnen von zumindest $F_s$-Information, die indikativ ist für eine Abtastfrequenz, von Konfigurationsinformation für alle Kanäle und von Matrixzerlegungsprozedurinformation,

einen Auswahlschritt zum Auswählen einer Decodiertypnummer aus einer Decodiersteuertabelle in einem Parameter-ROM auf Basis der Konfigurationsinformation für alle Kanäle und der Matrixzerlegungsprozedurinformation, welche in dem Hilfsinformationsanalyseschritt gewonnen wurden, und

einen Erzeugungsschritt zur Erzeugung von Audioausgangsdaten durch Ausführen einer Decodiersteuerung auf Grundlage der Typnummer, die in dem Auswahlschritt ausgewählt wurde.

**22.** Decodierverfahren zur Verwendung in einer Decodiervorrichtung nach Anspruch 21, wobei der Erzeugungsschritt umfasst:

einen Bandsignalerzeugungsschritt zur Erzeugung eines Bandsignals durch Anwendung einer inversen Quantifizierung auf die codierten Audiodaten,

einen Matrixzerlegungsschritt zur Anwendung eines Matrixzerlegungsprozesses auf das Bandsignal, das in dem Bandsignalerzeugungsschritt erzeugt wurde, wodurch das Bandsignal in ein Bandsignal für jeden Ausgangskanal umgewandelt wird,

einen Bandsyntheseschritt zur Erzeugung von PCM-Daten für jeden Ausgangskanal durch Anwendung der Bandsynthese auf das Bandsignal, das für jeden Ausgangskanal in dem Matrixzerlegungsschritt erzeugt wurde, und

einen Verschachtelungsschritt zur Durchführung eines Verschachtelungsprozesses, wodurch die PCM-Daten, die für jeden Ausgangskanal in dem Bandsyntheseschritt erzeugt wurden, Abtastung für Abtastung in einer vorab festgelegten Abfolge umgeordnet werden.

**23.** Aufzeichnungsmedium mit einem darauf aufgezeichneten Computerprogrammcode, der zur Durchführung von Decodierschritten ausgelegt ist, um einen Audiobitstrom für ein Maximum an N Kanälen (N ist eine ganze Zahl größer als 1) zu decodieren, wobei die Decodierschritte folgende Schritte umfassen:

Trennen des Bitstroms in Hilfsinformation und codierte Daten, wenn der Bitstrom eingegeben wird,

Anfordern zumindest von Konfigurationsinformation für alle Kanäle durch Analyse der abgetrennten Hilfsinformation,

Auswählen einer Decodiertypnummer aus einer Decodiersteuertabelle in einem Parameter-ROM auf Basis der angeforderten Konfigurationsinformation für alle Kanäle, und

Erzeugen von Ausgangsdaten durch Ausführen einer Decodiersteuerung auf Grundlage der ausgewählten Typnummer.

**24.** Aufzeichnungsmedium mit darauf aufgezeichneten Decodierschritten gemäß Anspruch 23 zum Decodieren eines Bitstroms durch eine Bandsynthese für bis zu einem Maximum von N Kanälen (N ist eine ganze Zahl größer 1), wobei die Decodierschritte eine zusätzliche Funktion bereitstellen, durch die, wenn die Ausgangsdaten erzeugt werden, ein Bandsignal durch Anwenden einer inversen Quantifizierung auf die codierten Daten erzeugt wird, PCM-Daten für jeden Ausgangskanal durch Anwenden einer Bandsynthese auf das Bandsignal erzeugt werden, und ein Verschachtelungsprozess durchgeführt wird, wodurch die PCM-Daten für jeden Ausgangskanal Abtastung für Abtastung in einer vorab festgelegten Abfolge umgeordnet werden.

**25.** Aufzeichnungsmedium mit einem darauf aufgezeichneten Computerprogrammcode, der ausgelegt ist, Decodierschritte durchzuführen, um einen Bitstrom zu decodieren, der gemäß einer MPEG-1-Audiospezifizierung und einer MPEG-2-Audiospezifizierung aufgebaut ist und durch eine Bandsynthese für ein Maximum von N-Kanälen (N ist eine ganze Zahl größer als 1) decodierbar ist, wobei die Decodierschritte folgende Schritte umfassen:

Trennen des Bitstroms in Hilfsinformation und codierte Audiodaten, wenn der Bitstrom eingegeben wird,

Anfordern zumindest von $F_s$-Information, die indikativ für eine Abtastfrequenz ist, von Konfigurationsinformation für alle Kanäle und von Matrixzerlegungsprozedurinformation durch Analyse der abgetrennten Hilfsinformation,

Auswählen einer Decodiertypnummer aus einer Decodiersteuertabelle in einem Parameter-ROM auf Grundlage der angeforderten Konfigurationsinformation für alle Kanäle und der Matrixzerlegungsprozedurinformation, und

Erzeugen von Audioausgangsdaten durch Ausführen einer Decodiersteuerung auf Grundlage der ausgewählten Typnummer.

**26.** Aufzeichnungsmedium mit darauf aufgezeichneten Decodierschritten nach Anspruch 25, wobei die Decodierschritte eine zusätzliche Funktion aufweisen, durch die, wenn die Audioausgangsdaten erzeugt werden, ein Bandsignal durch Anwendung einer inversen Quantifizierung auf codierte Audiodaten erzeugt wird, das Bandsignal einer Matrixzerlegung unterzogen wird und hierdurch in ein Bandsignal für jeden Ausgangskanal umgesetzt wird, PCM-Daten für jeden Ausgangskanal durch Anwenden der Bandsynthese auf das Bandsignal für jeden Ausgangskanal erzeugt werden und ein Verschachtelungsprozess durchgeführt wird, wodurch die PCM-Daten für jeden Ausgangskanal Abtastung für Abtastung in einer vorab festgelegten Abfolge umgeordnet werden.

## Revendications

**1.** Dispositif de décodage destiné à décoder un flux binaire audio pour un maximum de N canaux (N est un nombre entier plus grand que 1), comprenant :

une section d'entrée de flux (1) destinée à séparer un flux de bits d'entrée en informations secondaires et en données codées,

une section d'analyse d'informations secondaires (2) destinée à obtenir au moins des informations de configuration de canaux complètes en analysant lesdites informations auxiliaires fournies depuis ladite section d'entrée de flux,

une section de mémoire morte de paramètres (5, 15, 18) prémémorisant dans celle-ci une table de commande de décodage (8), qui présente des numéros de types de décodage classés conformément auxdites informations de configuration de canaux complètes,

une section de commande de décodage (3) destinée à sélectionner un numéro de type de décodage à partir de ladite table de commande de décodage sur la base desdites informations de configuration de canaux complètes fournies de ladite section d'analyse d'informations secondaires, et destinée à exécuter une commande de décodage sur la base dudit numéro de type sélectionné, et

une section de décodage (4) destinée à générer des données de sortie audio conformément à une instruction provenant de ladite section de commande de décodage.

**2.** Dispositif de décodage selon la revendication 1, destiné à décoder un flux binaire en exécutant une synthèse de bande jusqu'à un maximum de N canaux (N est un nombre entier plus grand que 1), où ladite section de décodage comprend :

un générateur de signal de bande (4a) destiné à générer un signal de bande en appliquant une quantification inverse auxdites données codées,
un synthétiseur de bande (4d) destiné à générer des données de modulation PCM pour chaque canal de sortie en appliquant ladite synthèse de bande audit signal de bande, et
un module d'entrelacement (4e) destiné à exécuter un traitement d'entrelacement, grâce à quoi lesdites données à modulation PCM synthétisées et décodées par bande pour chaque canal de sortie sont réordonnées échantillon par échantillon selon une séquence prescrite, en générant ainsi des données de sortie audio.

3. Dispositif de décodage destiné à décoder un flux binaire construit conformément à une spécification audio MPEG-1 et une spécification audio MPEG-2 et décodable par une synthèse de bande jusqu'à un maximum de N canaux (N est un nombre entier supérieur à 1), comprenant :

une section d'entrée de flux (1) destinée à séparer un flux binaire d'entrée en informations secondaires et en données codées audio,
une section d'analyse d'informations secondaires (2) destinée à analyser lesdites informations secondaires fournies depuis ladite section d'entrée de flux, et destinées à obtenir au moins des informations Fs indicatives d'une fréquence d'échantillonnage, des informations de configuration de canaux complètes, et des informations de procédure de dématriçage,
une section de mémoire morte de paramètres (5, 15, 48) prémémorisant dans celle-ci une table de commande de décodage (8) qui présente des numéros de types de décodage classés conformément auxdites informations de configuration de canaux complètes et auxdites informations de procédure de dématriçage,
une section de commande de décodage (3) destinée à sélectionner un numéro de type de décodage à partir de ladite table de commande de décodage sur la base desdites informations de configuration de canaux complètes et desdites informations de procédure de dématriçage fournies depuis ladite section d'analyse d'informations auxiliaires, et destinée à exécuter une commande de décodage sur la base dudit numéro de type sélectionné,
une section de décodage (4) comprenant un générateur de signal de bande (4a) destiné à générer un signal de bande en appliquant une quantification inverse auxdites données audio codées, un processeur de dématriçage (4b, 14b, 24b) destiné à appliquer un procédé de dématriçage audit signal de bande et à convertir ainsi ledit signal de bande en un signal de bande pour chaque canal de sortie, un synthétiseur de bande (4d) destiné à générer des données à modulation PCM pour chaque canal de sortie en appliquant ladite synthèse de bande audit signal de bande fourni depuis ledit processeur de dématriçage, et un module d'entrelacement (4e) destiné à exécuter un traitement d'entrelacement, grâce à quoi lesdites données à modulation PCM synthétisées en bande et décodées pour chaque canal de sortie sont réordonnées échantillon par échantillon selon une séquence prescrite, en générant ainsi des données de sortie audio, où ladite section de décodage génère lesdites données audio conformément à une instruction provenant de ladite section de commande de décodage, et
une section de mémorisation (6) destinée à mémoriser au moins lesdites données de modulation PCM fournies en sortie dudit synthétiseur de bande.

4. Dispositif de décodage selon la revendication 3, dans lequel ladite section d'analyse d'informations secondaires comprend :

un analyseur d'en-tête MPEG-1 (2a) destiné à analyser des informations d'en-tête définies conformément à ladite spécification audio MPEG-1, en extrayant ainsi au moins lesdites informations Fs et en déterminant si la configuration de canal de sortie avant est monaurale (un canal) ou stéréo (deux canaux),
un analyseur d'en-tête MC (2b) destiné à analyser des informations d'en-tête définies conformément à ladite spécification audio MPEG-2, en extrayant ainsi au moins lesdites informations de dématriçage et en déterminant la présence ou l'absence d'un canal central avant et également d'une configuration de canal arrière ou la présence ou l'absence de seconds canaux stéréo, et destiné à générer lesdites informations de configuration de canaux complètes en combinant le résultat de ladite analyse avec les informations de ladite configuration de canal avant obtenues par ledit analyseur d'en-tête MPEG-1, et
un correcteur de compatibilité d'informations d'en-tête (2c) destiné à générer lesdites informations de configuration de canaux complètes et lesdites informations de procédure de dématriçage en déterminant le nombre de canaux avant à partir desdites informations d'en-tête définies par la spécification audio MPEG-1, et en supposant que le canal avant central et les canaux arrière ou les seconds canaux stéréo n'existent pas, lors du décodage du flux binaire construit conformément à ladite spécification audio MPEG-1.

**5.** Dispositif de décodage selon la revendication 3 ou 4, dans lequel ladite table de commande de décodage comprend :

une table d'instructions de types de décodage (8a) qui présente des numéros de types de décodage classés conformément auxdites informations de configuration de canaux complètes et auxdites informations de procédure de dématriçage, et

une table d'instructions d'informations de commande de décodage (8b) qui présente des informations de commande de décodage constituées d'une combinaison de multiples éléments d'informations d'instructions de décodage pour chacun desdits numéros de types de décodage.

**6.** Dispositif de décodage selon l'une quelconque des revendications 3 à 5, dans lequel ledit processeur de dématriçage comprend un limiteur de bande de dématriçage (13) destiné à limiter le nombre de bandes devant faire l'objet d'un dématriçage dans ledit signal de bande sur la base desdites informations Fs fournies depuis ladite section d'analyse d'informations secondaires.

**7.** Dispositif de décodage selon l'une quelconque des revendications 3 à 6, dans lequel ladite table de commande de décodage contient des informations de numéros de canaux pour indiquer les numéros des canaux de sortie devant être générés par ladite synthèse de bande sur la base desdites informations de configuration de canaux complètes, et ladite section de commande de décodage comprend une unité de transmission de numéros de canaux (3c) destinée à transmettre lesdites informations de numéros de canaux, obtenues à partir de ladite table de décodage, à ladite section de décodage.

**8.** Dispositif de décodage selon l'une quelconque des revendications 3 à 7, dans lequel ladite section de commande de décodage comprend une unité d'instruction de dématriçage (3a) qui donne une instruction pour ledit traitement de dématriçage, sur la base desdites informations de configuration de canaux complètes et desdites informations de procédure de dématriçage fournies depuis ladite section d'analyse d'informations auxiliaires et en utilisant une valeur récupérée auprès de ladite table de commande de décodage dans ladite mémoire morte de paramètres.

**9.** Dispositif de décodage selon la revendication 8, dans lequel ladite table de commande de décodage contient des informations de séquence de dématriçage indiquant une séquence de dématriçage, ledit processeur de dématriçage comprend des blocs de dématriçage individuels (12a, ..., 12g), prévus chacun en relation de correspondance avec lesdites informations de séquence de dématriçage, et ladite mémoire morte de paramètres mémorise dans celle-ci une table d'adresses de séquences de dématriçage (9) qui définit une correspondance entre lesdites informations de séquence de dématriçage et lesdits blocs de dématriçage contenus dans ledit processeur de dématriçage.

**10.** Dispositif de décodage selon la revendication 8, dans lequel ledit processeur de dématriçage (14b) comprend un bloc de dématriçage d'usage général (17) qui exécute ledit traitement de dématriçage en faisant varier un coefficient de dématriçage conformément auxdites informations de configuration de canaux complètes et auxdites informations de procédure de dématriçage, ladite table de commande de décodage contient des informations de séquence de dématriçage indiquant une séquence de dématriçage, et ladite mémoire morte de paramètres prémémorise dans celle-ci une table de coefficients de dématriçage séquence par séquence (16) qui définit une correspondance entre ledit coefficient de dématriçage et lesdites informations de séquence de dématriçage.

**11.** Dispositif de décodage selon la revendication 8, dans lequel ledit processeur de dématriçage (24b) comprend un bloc de dématriçage d'usage général (27) qui exécute ledit traitement de dématriçage en faisant varier un coefficient de dématriçage conformément auxdites informations de configuration de canaux complètes et auxdites informations de procédure de dématriçage, et au moins un bloc de dématriçage (12f, 12g) correspondant à un canal prédésigné, ladite table de commande de décodage contient les informations de séquence de dématriçage indiquant une séquence de dématriçage, et ladite mémoire morte de paramètres (18) prémémorise dans celle-ci une table d'adresses de séquences de dématriçage (19) qui définit une correspondance entre lesdites informations de séquence de dématriçage, ledit bloc de dématriçage d'usage général et ledit au moins un bloc de dématriçage, et une table de coefficients de dématriçage séquence par séquence (20) qui définit une correspondance entre ledit coefficient de dématriçage et lesdites informations de séquence de dématriçage.

**12.** Dispositif de décodage selon la revendication 11, dans lequel ledit processeur de dématriçage comprend un bloc de dématriçage d'usage général qui fait varier ledit coefficient de dématriçage dans les cas où le nombre de canaux de sortie devant être générés par ladite synthèse de bande est de 1 à M (M est un entier plus petit que N), et un bloc de dématriçage prévu pour les cas où le nombre de canaux de sortie devant être générés par ladite synthèse de bande est supérieur ou égal à (M + 1), et

ladite mémoire morte de paramètres prémémorise dans celle-ci une table de coefficients de dématriçage séquence par séquence qui définit une correspondance entre ledit bloc de dématriçage d'usage général et lesdites informations de séquence de dématriçage correspondant aux 1 à M canaux de sortie.

**13.** Dispositif de décodage selon l'une quelconque des revendications 3 à 12, dans lequel ladite table de commande de décodage contient des informations d'instruction d'entrelacement destinées à indiquer une séquence d'entrelacement sur la base desdites informations de configuration de canaux complètes, et

ladite section de commande de décodage comprend une unité d'instruction d'entrelacement (3d) destinée à indiquer lesdites informations d'instruction d'entrelacement, obtenues à partir de ladite table de commande de décodage, à ladite section de décodage.

**14.** Dispositif de décodage selon la revendication 13, dans lequel lesdites informations d'instruction d'entrelacement sont des informations qui indique ladite séquence d'entrelacement, préaffectée conformément auxdites informations de configuration de canaux complètes, en utilisant un numéro,

ladite mémoire morte de paramètres mémorise dans celle-ci une table de séquences d'entrelacement (11) qui définit une correspondance entre ledit numéro de ladite séquence d'entrelacement et les informations d'emplacement à modulation PCM qui constituent une représentation codée de l'adresse de départ desdites données à modulation PCM mémorisées dans ladite section de mémorisation.

**15.** Dispositif de décodage selon l'une quelconque des revendications 3 à 14, dans lequel ladite section de décodage comprend un créateur de données de silence (4h) qui écrit des données à modulation PCM de silence dans ladite section de mémorisation lorsque lesdites informations de numéros de canaux fournies depuis ladite section de commande de décodage indiquent (M - 1) canaux ou moins.

**16.** Dispositif de décodage selon l'une quelconque des revendications 3 à 15, dans lequel ladite mémoire morte de paramètres prémémorise dans celle-ci une table d'instructions d'annulation de normalisation (10) destinée à indiquer des données d'instruction pour un traitement d'annulation de normalisation conformément auxdites informations de configuration de canaux complètes et auxdites informations de procédure de dématriçage fournies depuis ladite section d'analyse d'informations secondaires,

ladite section de commande de décodage comprend une unité d'instruction d'annulation de normalisation (3b) qui donne une instruction pour ledit traitement d'annulation de normalisation, sur la base desdites informations de configuration de canaux complètes et desdites informations de procédure de dématriçage fournies depuis ladite section d'analyse d'informations secondaires et en utilisant une valeur récupérée auprès de ladite table d'instructions d'annulation de normalisation dans ladite mémoire morte de paramètres, et

ladite unité de décodage comprend un processeur d'annulation de normalisation (4c) qui exécute ledit traitement d'annulation de normalisation conformément à ladite instruction provenant de ladite section de commande de décodage.

**17.** Dispositif de décodage selon la revendication 16, dans lequel ladite table d'instructions d'annulation de normalisation comprend : une table d'instructions du type de normalisation (10a) qui présente les numéros de types d'annulation de normalisation classés conformément auxdites informations de configuration de canaux complètes et auxdites informations de procédure de dématriçage, une table d'allocation d'annulation de normalisation (10b) qui indique les relations entre lesdits numéros de types d'annulation de normalisation et les numéros de données de valeurs de correction d'annulation de normalisation pour chaque canal de sortie, et une table de valeurs de correction de niveau d'annulation de normalisation (10c) pour convertir lesdits numéros de données de valeurs de correction d'annulation de normalisation en données de niveau acoustique utilisées dans ladite annulation de normalisation.

**18.** Dispositif de décodage selon la revendication 16 ou 17, comprenant en outre une interface de réglage d'équilibre de canaux (7) par l'intermédiaire de laquelle les informations de niveau acoustique pour chaque canal de sortie sont fournies depuis l'extérieur en vue d'une délivrance à ladite section de décodage, et où :

ladite section de décodage comprend un convertisseur de niveau acoustique (4f) qui convertit lesdites informations de niveau acoustique délivrées depuis ladite interface de réglage d'équilibre de canaux en données de niveau acoustique pour chaque canal de sortie, et un multiplicateur de niveau acoustique de classement (4g) qui multiplie lesdites données d'instructions fournies depuis ladite unité d'instructions d'annulation de normalisation par lesdites données de niveau acoustique fournies depuis ledit convertisseur de niveau acoustique pour chaque canal de sortie lorsque lesdites informations de numéros de canaux provenant de ladite section de commande de décodage indiquent N, et

ledit processeur d'entrelacement comprend un module d'ajustement de niveau acoustique d'entrelacement de classification qui multiplie lesdites données à modulation PCM de chaque canal de sortie par lesdites données de niveau acoustique fournies depuis ledit convertisseur de niveau acoustique lorsque lesdites informations de numéros de canaux provenant de ladite section de commande de décodage indiquent (N - 1) ou moins de canaux.

19. Procédé de décodage à utiliser dans un dispositif de décodage destiné à décoder un flux binaire audio pour un maximum de N canaux (N est un nombre entier plus grand que 1), comprenant :

une étape de séparation destinée à séparer un flux binaire d'entrée en informations secondaires et en données codées,

une étape d'analyse d'informations secondaires destinée à obtenir au moins des informations de configuration de canaux complètes en analysant lesdites informations auxiliaires séparées dans ladite étape de séparation,

une étape de sélection destinée à sélectionner un numéro de type de décodage à partir d'une table de commande de décodage dans une mémoire morte de paramètres sur la base desdites informations de configuration de canaux complètes obtenues dans ladite étape d'analyse d'informations secondaires, et

une étape de génération destinée à générer les données de sortie en exécutant une commande de décodage sur la base dudit numéro de type sélectionné dans ladite étape de sélection.

20. Procédé de décodage selon la revendication 19, à utiliser dans un dispositif de décodage destiné à décoder un flux binaire en exécutant une synthèse de bande jusqu'à un maximum de N canaux (N est un nombre entier plus grand que 1), où ladite étape de génération comprend :

une étape de génération de signal de bande destinée à générer un signal de bande en appliquant une quantification inverse auxdites données codées,

une étape de synthèse de bande destinée à générer des données à modulation PCM pour chaque canal de sortie en appliquant une synthèse de bande audit signal de bande généré dans ladite étape de génération de signal de bande, et

une étape d'entrelacement destinée à exécuter un traitement d'entrelacement, grâce à quoi lesdites données à modulation PCM générées pour chaque canal de sortie dans ladite étape de synthèse de bande sont réordonnées échantillon par échantillon selon une séquence prescrite.

21. Procédé de décodage à utiliser dans un dispositif de décodage destiné à décoder un flux binaire construit conformément à une spécification audio MPEG-1 et à une spécification audio MPEG-2 et décodable par le biais d'une synthèse de bande jusqu'à un maximum de N canaux (N est un nombre entier supérieur à 1), comprenant :

une étape de séparation destinée à séparer un flux binaire d'entrée en informations secondaires et en données codées audio,

une étape d'analyse d'informations secondaires destinée à analyser lesdites informations auxiliaires séparées dans ladite étape de séparation, et destinée à obtenir au moins des informations Fs indicatives d'une fréquence d'échantillonnage, des informations de configuration de canaux complètes, et des informations de procédure de dématriçage,

une étape de sélection destinée à sélectionner un numéro de type de décodage à partir d'une table de commande de décodage dans une mémoire morte de paramètres sur la base desdites informations de configuration de canaux complètes et desdites informations de procédure de dématriçage obtenues dans ladite étape d'analyse d'informations secondaires, et

une étape de génération destinée à générer des données de sortie audio en exécutant une commande de décodage sur la base dudit numéro de type sélectionné dans ladite étape de sélection.

22. Procédé de décodage à utiliser dans un dispositif de décodage selon la revendication 21, dans lequel ladite étape de génération comprend :

une étape de génération de signal de bande destinée à générer un signal de bande en appliquant une quantification inverse auxdites données codées audio,

une étape de dématriçage destinée à appliquer un traitement de dématriçage audit signal de bande généré dans ladite étape de génération de signal de bande, et à convertir de cette manière ledit signal de bande en un signal de bande pour chaque canal de sortie,

une étape de synthèse de bande destinée à générer des données à modulation PCM pour chaque canal de sortie en appliquant ladite synthèse de bande audit signal de bande généré pour chaque canal de sortie dans ladite étape de dématriçage, et

une étape d'entrelacement destinée à exécuter un traitement d'entrelacement, grâce à quoi lesdites données à modulation PCM générées pour chaque canal de sortie dans ladite étape de synthèse de bande sont réordonnées échantillon par échantillon selon une séquence prescrite.

23. Support d'enregistrement comportant un code de programme informatique adapté pour exécuter des étapes de décodage enregistrées sur celui-ci en vue de décoder un flux binaire audio pour un maximum de N canaux (N est un nombre entier plus grand que 1), lesdites étapes de décodage comprenant les étapes consistant à :

lorsque ledit flux binaire est appliqué en entrée, séparer ledit flux binaire en informations secondaires et en données codées,

acquérir au moins des informations de configuration de canaux complètes en analysant lesdites informations secondaires séparées,

sélectionner un numéro de type de décodage à partir d'une table de commande de décodage dans une mémoire morte de paramètres sur la base desdites informations de configuration de canaux complètes acquises, et

générer des données de sortie en exécutant une commande de décodage sur la base dudit numéro de type sélectionné.

24. Support d'enregistrement comportant des étapes de décodage enregistrées sur celui-ci selon la revendication 23, pour décoder un flux binaire par le biais d'une synthèse de bande jusqu'à un maximum de N canaux (N est un nombre entier supérieur à 1), où lesdites étapes de décodage procurent une fonction supplémentaire, grâce à laquelle, lorsque l'on génère lesdites données de sortie, un signal de bande est généré en appliquant une quantification inverse auxdites données codées, des données à modulation PCM pour chaque canal de sortie sont générées en appliquant une synthèse de bande audit signal de bande, et un traitement d'entrelacement est exécuté, grâce à quoi lesdites données à modulation PCM pour chaque canal de sortie sont réordonnées échantillon par échantillon selon une séquence prescrite.

25. Support d'enregistrement comportant un code de programme informatique conçu pour exécuter des étapes de décodage enregistrées sur celui-ci en vue de décoder un flux binaire construit conformément à une spécification audio MPEG-1 et une spécification audio MPEG-2 et décodable par une synthèse de bande jusqu'à un maximum de N canaux (N est un nombre entier supérieur à 1), lesdites étapes de décodage comprenant les étapes consistant à :

lorsque ledit flux binaire est appliqué en entrée, séparer ledit flux binaire en informations secondaires et en données audio codées,

acquérir au moins des informations Fs indicatives d'une fréquence d'échantillonnage, des informations de configuration de canaux complètes, et des informations de procédure de dématriçage en analysant lesdites informations secondaires séparées,

sélectionner un numéro de type de décodage à partir d'une table de commande de décodage dans une mémoire morte de paramètres sur la base desdites informations de configuration de canaux complètes acquises et des informations de procédure de dématriçage, et

générer des données de sortie audio en exécutant une commande de décodage sur la base dudit numéro de type sélectionné.

26. Support d'enregistrement comportant des étapes de décodage enregistrées sur celui-ci conformément à la revendication 25, où lesdites étapes de décodage procurent une fonction supplémentaire grâce à laquelle, lorsque l'on génère lesdites données de sortie audio, un signal de bande est généré en appliquant une quantification inverse auxdites données codées audio, ledit signal de bande fait l'objet d'un dématriçage et est ainsi converti en un signal de bande pour chaque canal de sortie, des données à modulation PCM pour chaque canal de sortie sont générées en appliquant ladite synthèse de bande audit signal de bande de chaque canal de sortie, et un traitement d'entrelacement est exécuté, grâce à quoi lesdites données à modulation PCM pour chaque canal de sortie sont réordonnées échantillon par échantillon selon une séquence prescrite.

# F I G. 1

EP 0 957 639 B1

# F I G. 2

Parameter ROM — 5

## Decoding control table — 8

### Decoding type instruction table — 8a

### Decoding control information instruction table — 8b

## Dematrix pattern address table — 9

## Interleave pattern table — 11

## Denormalization instruction table — 10

### Denormalization type instruction table — 10a

### Denormalization allocation table — 10b

### Denormalization level correction value table — 10c

EP 0 957 639 B1

# F I G. 3

Decoding type instruction table — 8a

| Full channel configuration information | Dematrix procedure information | 0 | 1 | 2 | 3 |
|---|---|---|---|---|---|
| Front channel | Surround channel | | | | |
| 1 c h (MONO) | 0 (1／0) | Type 0 | Type 0 | Type 0 | Type 0 |
| | 1 (1／1) | − | − | − | − |
| | 2 (1／2) | − | − | − | − |
| | 3 (1／0＋2／0) | Type 1 | Type 1 | Type 1 | Type 1 |
| 2 c h (L／R) | 0 (2／0) | Type 2 | Type 2 | Type 2 | Type 2 |
| | 1 (2／1) | Type 3 | Type 3 | Type 3 | Type 4 |
| | 2 (2／2) | Type 5 | Type 5 | Type 5 | Type 6 |
| | 3 (2／0＋2／0) | Type 6 | Type 6 | Type 6 | Type 6 |
| 3 c h (L／R／C) | 0 (3／0) | Type 7 | Type 7 | Type 7 | Type 8 |
| | 1 (3／1) | Type 9 | Type 9 | Type 10 | Type 11 |
| | 2 (3／2) | Type 12 | Type 12 | Type 13 | Type 14 |
| | 3 (3／0＋2／0) | Type 15 | Type 15 | Type 15 | Type 14 |

EP 0 957 639 B1

# F I G.  4

~ 8b

| Decoding type number | Channel number information | Dematrix pattern information (d m c  p) | Interleave instruction information (i n t) |
|---|---|---|---|
| Type 0 | 1 ch | 0 (No dematrixing) | 0 |
| Type 1 | 3 ch | 0 (No dematrixing) | 2 |
| Type 2 | 2 ch | 0 (No dematrixing) | 1 |
| Type 3 | 3 ch | 1 | 3 |
| Type 4 | 3 ch | 0 (No dematrixing) | 3 |
| Type 5 | 4 ch | 2 | 4 |
| Type 6 | 4 ch | 0 (No dematrixing) | 4 |
| Type 7 | 3 ch | 3 | 5 |
| Type 8 | 3 ch | 0 (No dematrixing) | 5 |
| Type 9 | 4 ch | 4 | 6 |
| Type 10 | 4 ch | 5 | 6 |
| Type 11 | 4 ch | 0 (No dematrixing) | 6 |
| Type 12 | 5 ch | 6 | 7 |
| Type 13 | 5 ch | 7 | 7 |
| Type 14 | 5 ch | 0 (No dematrixing) | 7 |
| Type 15 | 5 ch | 3 | 7 |

EP 0 957 639 B1

## F I G. 5

EP 0 957 639 B1

Dematrix pattern address table ～ 9

| Dematrix pattern information | Dematrix processor pattern information |
|---|---|
| 0 | No dematrixing |
| 1 | 2/1 Dematrix procedure information:0～2 |
| 2 | 2/2 Dematrix procedure information:0～2 |
| 3 | 3/0 Dematrix procedure information:0～2 |
| 4 | 3/1 Dematrix procedure information:0～1 |
| 5 | 3/1 Dematrix procedure information:2 |
| 6 | 3/2 Dematrix procedure information:0～1 |
| 7 | 3/2 Dematrix procedure information:2 |

# F I G. 6

F I G. 7

| Full channel configuration information \ Decoding procedure information | | 0 | 1 | 2 | 3 |
|---|---|---|---|---|---|
| Front channel | Surround channel | | | | |
| 1 c h (MONO) | 0 (1／0) | Type 0 | Type 0 | Type 0 | Type 0 |
| | 1 (1／1) | — | — | — | — |
| | 2 (1／2) | — | — | — | — |
| | 3 (1／0＋2／0) | Type 0 | Type 0 | Type 0 | Type 0 |
| 2 c h (L／R) | 0 (2／0) | Type 0 | Type 0 | Type 0 | Type 0 |
| | 1 (2／1) | Type 2 | Type 5 | Type 2 | Type 0 |
| | 2 (2／2) | Type 2 | Type 5 | Type 2 | Type 0 |
| | 3 (2／0＋2／0) | Type 0 | Type 0 | Type 0 | Type 0 |
| 3 c h (L／R／C) | 0 (3／0) | Type 2 | Type 4 | Type 2 | Type 0 |
| | 1 (3／1) | Type 2 | Type 4 | Type 2 | Type 0 |
| | 2 (3／2) | Type 2 | Type 4 | Type 2 | Type 0 |
| | 3 (3／0＋2／0) | Type 1 | Type 3 | Type 1 | Type 0 |

10a

EP 0 957 639 B1

# FIG. 8

Denormalization allocation table

| | 1st CH band signal | 2nd Ch band channel | 3rd Ch band channel | 4th CH band channel | 5th CH band channel |
|---|---|---|---|---|---|
| Type 0 | Correction value 0 | Correction value 0 | Correction value 0 | Correction value 0 | Correction value 0 |
| Type 1 | Correction value 1 | Correction value 1 | Correction value 2 | Correction value 0 | Correction value 0 |
| Type 2 | Correction value 1 | Correction value 1 | Correction value 2 | Correction value 2 | Correction value 2 |
| Type 3 | Correction value 3 | Correction value 3 | Correction value 5 | Correction value 0 | Correction value 0 |
| Type 4 | Correction value 3 | Correction value 3 | Correction value 5 | Correction value 4 | Correction value 4 |
| Type 5 | Correction value 3 | Correction value 3 | Correction value 4 | Correction value 4 | — |

10b

EP 0 957 639 B1

# F I G. 9

EP 0 957 639 B1

**Denormalization level correction value table**

|  | Inverse weighting factor * Denormalization factor |
|---|---|
| Correction value 0 | 1 |
| Correction value 1 | $1 + \sqrt{2}$ |
| Correction value 2 | $2 + \sqrt{2}$ |
| Correction value 3 | $1.5 + 0.5 * \sqrt{2}$ |
| Correction value 4 | $3 + \sqrt{2}$ |
| Correction value 5 | $1 + 3 * \sqrt{2}$ |

~ 10c

# F I G. 10

(a)

| Area 0 | Area 4 |
|---|---|
| Area 1 | Area 5 |
| Area 2 | Area 6 |
| Area 3 | Area 7 |

(b)

| 1st ch PCM data | |
|---|---|
| | |
| | |
| | Mute data |

(c)

| 1st ch PCM data | 2nd ch PCM data |
|---|---|
| | |
| | |
| Mute data | |

(d)

| 3rd ch PCM data | 2nd ch PCM data |
|---|---|
| | 1st ch PCM data |
| | |
| | Mute data |

(e)

| 3rd ch PCM data | 4th ch PCM data |
|---|---|
| 1st ch PCM data | |
| 2nd ch PCM data | |
| Mute data | |

(f)

| 5th ch PCM data | 4th ch PCM data |
|---|---|
| | 1st ch PCM data |
| | 2nd ch PCM data |
| | 3rd ch PCM data |

EP 0 957 639 B1

# F I G. 11

EP 0 957 639 B1

Interleave pattern table

| Interleaving pattern No. / Output channel | L c h | L S c h | C c h | R c h | R S c h |
|---|---|---|---|---|---|
| 0 | Area 0 | Area 7 | Area 7 | Area 0 | Area 7 |
| 1 | Area 0 | Area 3 | Area 3 | Area 4 | Area 3 |
| 2 | Area 5 | Area 4 | Area 7 | Area 5 | Area 0 |
| 3 | Area 5 | Area 0 | Area 7 | Area 4 | Area 0 |
| 4 | Area 5 | Area 7 | Area 0 | Area 4 | Area 7 |
| 5 | Area 1 | Area 0 | Area 3 | Area 2 | Area 4 |
| 6 | Area 1 | Area 4 | Area 0 | Area 2 | Area 4 |
| 7 | Area 5 | Area 4 | Area 7 | Area 6 | Area 0 |

11

F I G. 12

```
                        ( Start )
                            │
                            ▼
              ┌─────────────────────────┐  S1
              │     Bit stream input     │
              └─────────────────────────┘
                            │                                    S2
    ┌──────────────────────────────────────────────────────────┐
    │ Separate bit stream into auxiliary information and audio encoded data │
    └──────────────────────────────────────────────────────────┘
                            │
                            ▼                          S3
              ┌─────────────────────────┐
              │ Auxiliary information analysis │
              └─────────────────────────┘
                            │
                            ▼                          S4
              ┌─────────────────────────────┐
              │ Decoding control information acquisition │
              └─────────────────────────────┘
                            │
                            ▼                     S5
              ┌─────────────────────────┐
              │   Generate band signals   │
              └─────────────────────────┘
                            │
                            ▼                     S6
              ┌─────────────────────────┐
              │       Dematrixing        │
              └─────────────────────────┘
                            │
                            ▼                              S7
    ┌──────────────────────────────────────────────┐
    │ Convert sound level information into sound level data │
    └──────────────────────────────────────────────┘
                            │
                            ▼          S8
                        ╱───────────╲                Yes
                   ╱  Channel number information  ╲ ──────┐
                   ╲          = 5?          ╱              │
                        ╲───────────╱                     │
                            │ No                           ▼                    S9
                            │              ┌────────────────────────────────┐
                            │              │ Multiply sound level data by denormalization │
                            │              │       level correction value       │
                            │              └────────────────────────────────┘
                            │                          │
                            ▼◄─────────────────────────┘
              ┌─────────────────────────┐  S10
              │      Denormalization     │
              └─────────────────────────┘
                            │
                            ▼              S11
              ┌─────────────────────────┐
              │      Band synthesis      │
              └─────────────────────────┘
                            │
                            ▼          S12
                        ╱───────────╲            No                S13
                   ╱  Channel number information  ╲ ──────┐
                   ╲          = 5?          ╱              ▼
                        ╲───────────╱          ┌──────────────────┐
                            │ Yes              │ Create mute data  │
                            ▼◄─────────────────└──────────────────┘
              ┌─────────────────────────┐  S14
              │       Interleaving       │
              └─────────────────────────┘
                            │
                            ▼                S15
              ┌─────────────────────────┐
              │  Output Audio output data │
              └─────────────────────────┘
                            │
                            ▼
                        ( Return )
```

F I G. 13

```
                    ┌─────────────────┐
                    │     Start       │
                    └────────┬────────┘
                             │
                             ▼
        ┌──────────────────────────────┐      S16
        │ Auxiliary information input  │
        └──────────────┬───────────────┘
                       │
                       ▼
     ┌──────────────────────────────────────┐    S17
     │ Analyze MPEG-1 header information     │
     │  1) Check Fs                          │
     │  2) Check front ch configuration      │
     └──────────────────┬───────────────────┘
                        │          S18
                        ▼
              ╱─────────────────────╲        No
            ╱  MC header information   ╲──────────────┐           S20
            ╲     contained?           ╱              │
              ╲─────────────────────╱                 ▼
                        │                  ┌──────────────────────────┐
                       Yes                 │ Header information       │
                        │       S19        │ compatibility processing │
                        ▼                  └───────────┬──────────────┘
 ┌───────────────────────────────────────────────┐    │
 │       Analyze MC header information            │    │
 │  1) Extract dematrix procedure information     │    │
 │  2) Extract TC allocation information          │    │
 │  3) Check presence or absence of Cch and surround ch │
 └─────────────────────┬──────────────────────────┘    │
                       │◄──────────────────────────────┘
                       ▼
 ┌────────────────────────────────────────────────┐   S21
 │ Generate full channel configuration information │
 └─────────────────────┬──────────────────────────┘
                       ▼
             ┌─────────────────┐
             │     Return      │
             └─────────────────┘
```

# F I G. 14

```
                    ( Start )
                        │
                        ▼
┌─────────────────────────────────────────┐
│         Obtain decoding type number from  │
│      decoding type instruction table based on │ ∿ S22
│           dematrix procedure information and  │
│        full channel configuration information │
└─────────────────────────────────────────┘
                        │
                        ▼
┌─────────────────────────────────────────┐
│        Acquire channel number information,  │
│            dematrix pattern information,     │
│     and interleave instruction information from │ ∿ S23
│   decoding control information insturction table │
│            based on decoding type number     │
└─────────────────────────────────────────┘
                        │
                        ▼
┌─────────────────────────────────────────┐
│      Obtain denormalization type number from  │
│  denormalization type instruction table based on │ ∿ S24
│          dematrix procedure information and   │
│       full channel configuration information  │
└─────────────────────────────────────────┘
                        │
                        ▼
┌─────────────────────────────────────────┐
│    Acquire denormalization correction value data │
│      number from denormalization allocation table │ ∿ S25
│          based on denormalization type number │
└─────────────────────────────────────────┘
                        │
                        ▼
┌─────────────────────────────────────────┐
│    Acquire denormalization level correction value │
│     from denormalization level correction value table │ ∿ S26
│  based on denormalization correction value data number │
└─────────────────────────────────────────┘
                        │
                        ▼
                    ( Return )
```

F I G. 15

```
                    ┌─────────────────┐
                    │     Start       │
                    └────────┬────────┘
                             ↓
```

Select dematrixing block from dematrix pattern address table based on dematrix pattern information — S27

Fs = 48kHz? — S28

Yes → Limit dematrix band to band 0 to band 26 (TCMAX=27) — S29

No ↓

TCMAX = 32 — S30

Return to selected dematrixing block — S31

TC count = 0 — S32

Select decoding matrix unit by TC allocation information value — S33

Perform dematrixing using selected decoding matrix unit — S34

TC count = ++ — S35

TC count = TCMAX? — S36

No

Yes ↓

```
                    ┌─────────────────┐
                    │     Return      │
                    └─────────────────┘
```

# F I G. 16

Start

Determine PCM data write area from
interleave pattern table based on
interleave instruction information — S37

Channel number information
= 5 ? — S38

Yes

No

Interleave without
multiplying PCM data by
sound level data supplied
from sound level converter — S39

Interleave while
multiplying PCM data by
sound level data supplied
from sound level converter — S40

Return

EP 0 957 639 B1

# F I G. 18

16

| Pattern-by-pattern dematrix coefficient table | | |
|---|---|---|
| Dematrix pattern information | TC allocation information | Dematrix coefficients n00, n01, n02, n03, n04···n43, n44 |
| 0 (No dematrix procedure information:0~2) | — | — |
| 1 (2/1 dematrix procedure information:0~2) | 0<br>1<br>2 | 1, 0, -1, 0, 0, ········, 0, 0<br>0, 0, 1, 0, 0, ·········, 0, 0<br>1, -1, 1, 0, 0, ·········, 0, 0 |
| 2 (2/2 dematrix procedure information:0~2) | 0<br>1<br>2<br>3 | 1, 0, -1, 0, 0, ········, 0, 0<br>0, 0, 1, 0, 0, ·········, 0, 0<br>0, 0, 1, 0, 0, ·········, 0, 0<br>0, 0, 1, 0, 0, ·········, 0, 0 |
| 3 (3/0 dematrix procedure information:0~2) | 0<br>1<br>2 | 1, 0, -1, 0, 0, ········, 0, 0<br>0, 0, 1, 0, 0, ·········, 0, 0<br>1, -1, 1, 0, 0, ·········, 0, 0 |
| 4 (3/1 dematrix procedure information:0~1) | 0<br>1<br>2<br>3<br>4 | 1, 0, -1, -1, 0, ········, 0, 0<br>0, 0, 1, 0, 0, ·········, 0, 0<br>1, -1, 1, 1, 0, ·········, 0, 0<br>0, 0, 0, 1, 0, ·········, 0, 0<br>1, -1, 0, 1, 0, ········, 0, 0 |
| 5 (3/1 dematrix procedure information:2) | 0<br>1<br>2<br>3<br>4<br>5 | 1, 0, -1, 1, 0, ·········, 0, 0<br>0, 0, 1, 0, 0, ·········, 0, 0<br>1, -1, 1, 2, 0, ·········, 0, 0<br>0, 0, 0, 1, 0, ·········, 0, 0<br>1, 1, -2, -1, 0, ········, 0, 0<br>0, 0, 1, 0, 0, ·········, 0, 0 |
| 6 (3/2 dematrix procedure information:0~1) | 0<br>1<br>2<br>3<br>4<br>5<br>6<br>7 | 1, 0, -1, -1, 0········, 0, 1<br>0, 0, 1, 0, 0, ·········, 0, 1<br>1, -1, 1, -1, 1·········, 0, 1<br>0, 0, 0, 1, 0, ·········, 0, 1<br>1, 0, -1, -1, 0, ······, 0, -1<br>0, 0, 0, 1, 0, ·········, 0, -1<br>0, 0, 0, 1, 0, ········:, 0, -1<br>0, 0, 1, 0, 0, ·········, 1, -1 |
| 7 (3/2 dematrix procedure information:2) | 0<br>1<br>2<br>3<br>4<br>5<br>6<br>7 | 1, 0, -1, 0.5, 0.5, ····, 0, 1<br>0, 0, 1, 0, 0, ·········, 0, 1<br>1, -1, 1, 2, 2, ·········, 0, 1<br>0, 0, 0, 1, 0, ·········, 0, 1<br>1, 1, -2, 0, -1, ·····, -1, -2<br>0, 0, 0, 1, 0, ····-0.5, -0.5<br>0, 0, 0, 1, 0, ·········, 0, 1<br>0, 0, 1, 0, 0, ········, -1, -1 |

# FIG. 19

14b

## Dematrix processor

17

```
5×5 general purpose dematrixing block

1st ch' =n00 * 1ch+n01 * 2ch+n02 * 3ch+n03 * 4ch+n04 * 5ch

2nd ch' =n10 * 1ch+n11 * 2ch+n12 * 3ch+n13 * 4ch+n14 * 5ch

3rd ch' =n20 * 1ch+n21 * 2ch+n22 * 3ch+n23 * 4ch+n24 * 5ch

4th ch' =n30 * 1ch+n31 * 2ch+n32 * 3ch+n33 * 4ch+n34 * 5ch

5th ch' =n40 * 1ch+n41 * 2ch+n42 * 3ch+n43 * 4ch+n44 * 5ch
```

13

Dematrix band limiter

# F I G. 20

```
                    ┌──────────────┐
                    │    Start     │
                    └──────┬───────┘
                           ↓
┌──────────────────────────────────────────┐
│ Set starting address "PADR" of           │ ～ S41
│ specified dematrix pattern information in │
│ pattern-by-pattern dematrix coefficient   │
│ table based on dematrix pattern information│
└──────────────────┬───────────────────────┘
                   ↓   ～ S42
              ◇─────────────◇        Yes
             ◇  F s=48kHz ?  ◇────────────┐
              ◇─────────────◇             ↓   ～ S43
   S44 ～          No↓           ┌────────────────────────┐
           ┌──────────────┐     │ Limit dematrix band to │
           │ T C MA X=3 2 │     │band 0 to band 26 (TCMAX=27)│
           └──────┬───────┘     └───────────┬────────────┘
                  ↓                          │
           ┌──────────────┐ ～ S45           │
           │Return to 5×5 general│←──────────┘
           │purpose dematrixing block│
           └──────┬───────┘
                  ↓
           ┌──────────────┐ ～ S46
           │ T C count=0  │
           └──────┬───────┘
                  ↓
┌──────────────────────────────────────────┐ ～ S47
│ Calculate difference value "TCADR" from   │
│pattern-by-pattern dematrix coefficient table│
│ by using TC allocation information value  │
└──────────────────┬───────────────────────┘
                   ↓
┌──────────────────────────────────────────┐ ～ S48
│ Calculate address "ADR" to be loaded from │
│pattern-by-pattern dematrix coefficient table│
│          ADR=PADR+TCADR                   │
└──────────────────┬───────────────────────┘
                   ↓
┌──────────────────────────────────────────┐ ～ S49
│ Load dematrix coefficients from           │
│pattern-by-pattern dematrix coefficient table│
└──────────────────┬───────────────────────┘
                   ↓
┌──────────────────────────────────────────┐ ～ S50
│ Perform dematrixing using loaded          │
│          dematrix coefficients            │
└──────────────────┬───────────────────────┘
                   ↓
           ┌──────────────┐ ～ S51
           │ T C count=++ │
           └──────┬───────┘
                  ↓         ～ S52
    No      ◇─────────────────◇
 ┌──────────◇ T C count=TCMAX ? ◇
 │          ◇─────────────────◇
 │                 ↓ Yes
 │          ┌──────────────┐
 │          │    Return    │
 │          └──────────────┘
```

# F I G. 21

Parameter ROM

Decoding control table

Decoding type instruction table

Decoding control information instruction table

Dematrix pattern address table

Pattern-by-pattern dematrix coefficient table

Interleave pattern table

Denormalization instruction table

Denormalization type instruction table

Denormalization allocation table

Denormalization level correction value table

EP 0 957 639 B1

F I G. 22

Dematrix pattern address table

19

| Dematrix pattern information | Dematrix processor pattern address |
|---|---|
| 0 | No dematrixing |
| 1 | General purpose dematrixing block |
| 2 | General purpose dematrixing block |
| 3 | General purpose dematrixing block |
| 4 | General purpose dematrixing block |
| 5 | General purpose dematrixing block |
| 6 | 3/2 dematrix procedure information: 0~1 |
| 7 | 3/2 dematrix procedure information: 2 |

EP 0 957 639 B1

# F I G. 23

20

| Dematrix pattern information | TC allocation information | Dematrix coefficients n00, n01, n02, n03, ···n32, n33 |
|---|---|---|
| 1 (2/1 dematrix procedure information:0~2) | 0<br>1<br>2 | 1, 0, −1, 0, ··········, 1, 0<br>0, 0, 1, 0, ···········, 0, 0<br>1, −1, 1, 0, ·········, −1, 0 |
| 2 (2/2 dematrix procedure information:0~2) | 0<br>1<br>2<br>3 | 1, 0, −1, 0, ··········, 0, 1<br>0, 0, 1, 0, ···········, 0, 1<br>0, 0, 1, 0, ··········, 0, −1<br>0, 0, 1, 0, ··········, 0, −1 |
| 3 (3/0 dematrix procedure information:0~2) | 0<br>1<br>2 | 1, 0, −1, 0, ··········, 0, 0<br>0, 0, 1, 0, ··········, 0, 0<br>1, −1, 1, 0, ·········, 0, 0 |
| 4 (3/1 dematrix procedure information:0~1) | 0<br>1<br>2<br>3<br>4 | 1, 0, −1, −1, ·········, 0, 1<br>0, 0, 1, 0, ··········, 0, 1<br>1, −1, 1, 1, ··········, 0, 1<br>0, 0, 0, 1, ·········, −1, −1<br>1, −1, 0, 1, ········, −1, −1 |
| 5 (3/1 dematrix procedure information:2) | 0<br>1<br>2<br>3<br>4<br>5 | 1, 0, −1, 1, ··········, 0, 1<br>0, 0, 1, 0, ··········, 0, 1<br>1, −1, 1, 2, ··········, 0, 1<br>0, 0, 0, 1, ···········, 1, 1<br>1, 1, −2, −1, ·······, −1, −1<br>0, 0, 1, 0, ······, 0. 5, −0. 5 |

Pattern-by-pattern dematrix coefficient table

# F I G. 24

24b

## Dematrix processor

27

```
4×4 general purpose dematrixing block

1st ch' =n00 * 1ch+n01 * 2ch+n02 * 3ch+n03 * 4ch

2nd ch' =n10 * 1ch+n11 * 2ch+n12 * 3ch+n13 * 4ch

3rd ch' =n20 * 1ch+n21 * 2ch+n22 * 3ch+n23 * 4ch

4th ch' =n30 * 1ch+n31 * 2ch+n32 * 3ch+n33 * 4ch
```

12f

### 3/2 dematrix procedure information: 0~1

| | |
|---|---|
| 12f0 — TC allocation information:0 | TC allocation information:1 — 12f1 |
| 12f2 — TC allocation information:2 | TC allocation information:3 — 12f3 |
| 12f4 — TC allocation information:4 | TC allocation information:5 — 12f5 |
| 12f6 — TC allocation information:6 | TC allocation information:7 — 12f7 |

12g

### 3/2 dematrix procedure information: 2

| | |
|---|---|
| 12g0 — TC allocation information:0 | TC allocation information:1 — 12g1 |
| 12g2 — TC allocation information:0 | TC allocation information:3 — 12g3 |
| 12g4 — TC allocation information:0 | TC allocation information:5 — 12g5 |
| 12g6 — TC allocation information:0 | TC allocation information:0 — 12g7 |

13

### Dematrix band limiter

# F I G. 25

EP 0 957 639 B1

```
                    ┌─────────┐
                    │  Start  │
                    └─────────┘
                         │
                         ▼
        ┌──────────────────────────────────────┐    S53
        │     Select dematrixing block from      │
        │        dematrix pattern address table  │
        │   based on dematrix pattern information │
        └──────────────────────────────────────┘
                         │
                         ▼                S54
                    ◇─────────────◇          Yes                  S55
                  <   F s = 4 8 k H z ?  >──────────┐    ┌──────────────────────┐
                    ◇─────────────◇                 │    │  Limit dematrix band to │
                         │ No                        └───►│ 0 to band 26 (TCMAX=27) │
       S56            ┌──────────────┐                    └──────────────────────┘
                      │  TCMAX=3 2   │                            │
                      └──────────────┘◄───────────────────────────┘
                         │                S57
                         ▼
         <          ◇─────────────────────◇          >
    ┌─────────────< Dematrix pattern information >─────────────┐
    │               ◇─────────────────────◇                    │
    │                   = 6      │ =                            │
    ▼  S58                       ▼  S59                         ▼  S60
```

| S58 | S59 | S60 |
|---|---|---|
| Perform dematrixing using 4 × 4 general purpose dematrixing block | Perform dematrixing using dematrixing block associated with 3/2 dematrix procedure information: 0~1 | Perform dematrixing using dematrixing block associated with 3/2 dematrix procedure information: 2 |

```
                    ┌─────────┐
                    │  Return │
                    └─────────┘
```

F I G. 26

```
            ┌─────────────────┐
            │      Start       │
            └─────────────────┘
                     │
                     ▼
          ┌──────────────────────┐
          │   T C  count= O      │──── S61
          └──────────────────────┘
                     │
     ┌──────────────►│
     │               ▼
     │   ┌─────────────────────────────────────────┐
     │   │ Calculate difference value "TCADR'"      │──── S62
     │   │ from pattern-by-pattern dematrix coefficient │
     │   │ table by using TC allocation information value│
     │   └─────────────────────────────────────────┘
     │               │
     │               ▼
     │   ┌─────────────────────────────────────────┐
     │   │ Calculate address "ADR'" to be loaded from │──── S63
     │   │ pattern-by-pattern dematrix coefficient table│
     │   │           ADR'=PADR'+TCADR'               │
     │   └─────────────────────────────────────────┘
     │               │
     │               ▼
     │   ┌─────────────────────────────────────────┐
     │   │ Load dematrix coefficients from pattern-  │──── S64
     │   │   by-pattern dematrix coefficient table    │
     │   └─────────────────────────────────────────┘
     │               │
     │               ▼
     │   ┌─────────────────────────────────────────┐
     │   │  Perform dematrixing using loaded          │──── S65
     │   │       dematrix coefficients                │
     │   └─────────────────────────────────────────┘
     │               │
     │               ▼
     │       ┌──────────────────────┐
     │       │   T C  count=++       │──── S66
     │       └──────────────────────┘
     │               │
     │               ▼
     │         ╱─────────────╲
     │  No   ╱                 ╲  ── S67
     └──────◄  T C count=TCMAX ? ►
            ╲                 ╱
              ╲─────────────╱
                     │ Yes
                     ▼
            ┌─────────────────┐
            │     Return       │
            └─────────────────┘
```

# F I G. 27

```
            ┌─────────────────────┐
            │        Start        │
            └─────────────────────┘
                       │
                       ▼
            ┌─────────────────────┐  S68
            │    T C  count= 0    │
            └─────────────────────┘
                       │
            ┌──────────▼──────────────────────┐
            │  Select decoding matrix unit by TC │  S69
            │   allocation information value     │
            └────────────────────────────────────┘
                       │
            ┌──────────▼──────────────────┐
            │  Perform dematrix using selected │  S70
            │      decoding matrix unit        │
            └──────────────────────────────────┘
                       │
                       ▼
            ┌─────────────────────┐  S71
            │   T C  count=++     │
            └─────────────────────┘
                       │
     No                ▼
    ◄──────────< T C  count=T C M A X ? >  S72
                       │
                       │ Yes
                       ▼
            ┌─────────────────────┐
            │       Return        │
            └─────────────────────┘
```

# F I G. 28 (PRIOR ART)

EP 0 957 639 B1